# EUROPEAN PATENT SPECIFICATION

(11) **EP 3 837 085 B1**
(45) Date of publication and mention of the grant of the patent: **14.06.2023**
(21) Application number: 19762609.6
(22) Date of filing: 21.08.2019
(51) Int. Cl.: B23Q 1/54, B23Q 11/10

(54) **DYNAMIC COOLANT DELIVERY SYSTEM WITH MULTI-AXIS ROTATION**
DYNAMISCHES KÜHLMITTELZUFUHRSYSTEM MIT MEHRACHSIGER ROTATION
SYSTÈME DE DISTRIBUTION DE LIQUIDE DE REFROIDISSEMENT DYNAMIQUE À ROTATION MULTI-AXE

(30) Priority: 22.08.2018 US 201862721224 P
(43) Date of publication of application: 23.06.2021
(73) Proprietor: Hurco Companies, Inc., Indianapolis, IN 46268-0180 (US)
(72) Inventor: ADAIR, David C., Indianapolis, Indiana 46220 (US); GROSS, Frederick W., Carmel, Indiana 46033 (US); VOLOVIC, Gregory S., Carmel, Indiana 46032 (US); TRAICOFF, Gerald, Carmel, Indiana 46033 (US); SZCZYPIORSKI, Nick, Fishers, Indiana 46037 (US); HAMMER, Donald, Avon, Indiana 46123 (US)
(74) Representative: Marks & Clerk LLP
(86) International application number: PCT/US2019/047421
(87) International publication number: WO 2020/041416

(56) References cited:
- CN-A- 109 108 723
- CN-B- 104 669 050
- JP-A- H07 204 979
- JP-A- 2004 167 665
- US-B2- 9 849 603

## Description

### CROSS-REFERENCE TO RELATED APPLICATIONS

### FIELD OF THE DISCLOSURE

The present invention relates to a coolant delivery system for delivering coolant to a cutting tool secured in a spindle of a computer numerical control ("CNC") machine and to a method of dynamically delivering coolant to a cutting tool coupled to a spindle of a computer numerical control ("CNC") machine for rotation about a first axis..

### BACKGROUND

CNC machines are widely used in industry for manufacturing components or parts. CNC machines are advantageous because they utilize computer-aided design ("CAD") and computer-aided manufacturing ("CAM") programs to manufacture components to exact specifications in continuous, automated processes. The production of a component from a blank or raw material might require the use of different tools, including cutting tools such as milling tools, radius bits and drills. Therefore, CNC machines also allow for the interchangeability of tools during a continuous, automated manufacturing process for a part or component.

One use for CNC machines is subtractive manufacturing, or processes where parts of a blank or raw material are removed, for example, by milling, drilling, or grinding. These material removal processes utilize an interaction of at least one cutting point or edge of a cutting tool with the blank or workpiece to remove raw material. In some applications, the cutting tool is rotating about its longitudinal axis during these processes. In other applications, the workpiece is rotating about one of its axes relative to the cutting tool. In further applications, the cutting tool and the workpiece are rotating relative to one another. When the cutting point or edge engages the workpiece, material is removed from the workpiece in the form of chips, turnings, fillings, or shavings (collectively referred to as "swarf') due to the cutting action between the cutting tool and the workpiece. The buildup of swarf during the material removal process can interfere with the engagement of the cutting tool with the workpiece. Furthermore, the removal of material from the workpiece results in heat buildup within the cutting tool. Such interference and heat buildup may lead to, among other things, decreased cutting accuracy, increased cutting tool wear, and reduced cutting tool life. Accordingly, a coolant may be delivered to at least one of the cutting tool or the workpiece in order to remove the swarf from the location where the cutting tool engages the workpiece and from the cutting tool itself. In addition, the coolant cools and lubricates the cutting tool.

According to its title and abstract US 9849603 B2 relates to a cutting fluid jet machine. The cutting fluid jet machine includes a nozzle-angle adjusting servo motor; a nozzle-length adjusting servo motor; a nozzle-location calculating unit; and a nozzle controlling unit for controlling an angle and a length of the cutting fluid jet nozzle in accordance with movement of a machine tool in a spindle direction based on a nozzle location calculated by the nozzle-location calculating unit.

According to its title and abstract CN 104669050 B relates to a surrounding cooling system control mechanism, which includes an annular guide rail, a movement mechanism and a spray head. The annular guide rail is fixed on a machine tool through a bracket, and the center of the annular guide rail is concentric with the tool spindle of the numerical control machine tool. The movement mechanism is movably arranged in the guide rail.

### SUMMARY

The invention is set out in the appended set of claims.

The present invention, therefore, provides a dynamic coolant delivery system for delivering coolant to a cutting tool coupled to a spindle of a computer numerical control ("CNC") machine comprising a platform adapted to be coupled to the spindle and rotatable about a first axis, a turret supported by the platform and rotatable about a second axis and a nozzle supported by the turret and pivotable about a third axis. The nozzle is in fluid communication with a coolant reservoir and adapted to deliver coolant from the coolant reservoir to the cutting tool. In a variation thereof, the second axis is non-parallel to the first axis. In a further variation thereof, the second axis is orthogonal the first axis.

The present invention also provides a method of dynamically delivering coolant to a cutting tool coupled to a spindle of a computer numerical control ("CNC") machine for rotation about a first axis. The method comprises providing a coolant delivery nozzle fluidly coupled to a coolant reservoir. The coolant delivery nozzle is supported by a turret adapted to rotate about a second axis, the coolant delivery nozzle adapted to pivot about a third axis non-parallel to the first axis, and the turret supported by a platform coupled to the spindle, the platform adapted to rotate about the first axis; the method further comprises delivering coolant to a first axial location of the cutting tool from a first orientation of the coolant delivery nozzle relative to the cutting tool, the first orientation defined by an angular position of the coolant delivery nozzle relative to the first axis; and rotating the coolant delivery nozzle about the first axis such that the coolant delivery nozzle delivers coolant to the first axial location of the cutting tool from a second orientation of the coolant delivery nozzle relative to the cutting tool, the second orientation being angularly displaced from the first orientation.

The present disclosure further provides a method, not part of the present invention, of dynamically adjusting the orientation of a coolant delivery nozzle configured to supply coolant to a cutting tool supported for rotation by a spindle of a computer numerical control ("CNC") machine about a first axis. The method comprises providing a coolant delivery system including a first ring rotatable about the first axis and operatively coupled to a coolant delivery nozzle adapted to deliver coolant to the cutting tool and a second ring rotatable about the first axis and operatively coupled to a platform supporting the coolant delivery nozzle. The method also comprises rotating the first ring about the first axis so as to develop relative motion between the first ring and the second ring, wherein developing relative motion between the first ring and the second ring results in the coolant delivery nozzle pivoting about a second axis. The second axis is non-parallel to the first axis. The method further comprises rotating the second ring about the first axis, wherein rotating the second gear about the first axis results in the platform and the nozzle rotating about the first axis.

The present disclosure also provides a method, not part of the present invention, of dynamically delivering coolant to a cutting tool coupled to a spindle of a computer numerical control ("CNC") machine for rotation about a first axis. The method comprises providing a coolant delivery nozzle fluidly coupled to a coolant reservoir, the coolant delivery nozzle adapted to pivot about a second axis non-parallel to the first axis. The method further comprises delivering coolant to a first axial location of the cutting tool from a first orientation of the coolant delivery nozzle relative to the cutting tool. The first orientation is defined by an angular position of the coolant delivery nozzle relative to the first axis. The method also comprises pivoting the coolant delivery nozzle about the second axis such that the coolant delivery nozzle delivers coolant to a second axial location of the cutting tool. The second axial location of the cutting tool is spaced axially apart from the first axial location of the cutting tool along the first axis. In a variation thereof, the method further comprises rotating the coolant delivery nozzle about the first axis such that the coolant delivery nozzle delivers coolant to at least one of the first axial location or the second axial location of the cutting tool.

### BRIEF DESCRIPTION OF THE DRAWINGS

The above-mentioned and other features and advantages of this disclosure, and the manner of obtaining them, will become more apparent, and will be better understood by reference to the following description of the exemplary embodiments taken in conjunction with the accompanying drawings, wherein:
FIG. 1 is a perspective view of a CNC machine with a control console;
FIG. 2 is a perspective view of a workspace of the CNC machine with a spindle;
FIG. 3 is a partial perspective view of an exemplary dynamic coolant delivery system coupled to the spindle;
FIG. 4 is a partial side view of the exemplary dynamic coolant delivery system coupled to the spindle;
FIGs. 5 and 6 are perspective views of the exemplary dynamic coolant delivery system;
FIG. 7 is a bottom view of the exemplary dynamic coolant delivery system;
FIG. 8 is a partial detail view of a turret and a nozzle supported by a platform of the exemplary dynamic coolant delivery system;
FIG. 9 is a side view of a platform axis and a turret axis of the exemplary dynamic coolant delivery system;
FIG. 10 is a side view of a nozzle axis of the exemplary dynamic coolant delivery system.
FIGs. 11, 12, and 13 are perspective views of the exemplary dynamic coolant delivery system with a portion of a housing of dynamic coolant delivery system shown in transparency;
FIG. 14 is a partial exploded view of the exemplary dynamic coolant delivery system with a portion of the housing removed;
FIG. 15 is a perspective view of the exemplary dynamic coolant delivery system with a portion of the housing removed;
FIGs. 16, 17, 18, 19, 20, 21, and 22 are partial cross-sectional views of the exemplary dynamic coolant delivery system;
FIG. 23 is a perspective view of a gear of the exemplary dynamic coolant delivery system;
FIG. 24 is a perspective view of another gear of the exemplary dynamic coolant delivery system;
FIG. 25 is a perspective view of a further gear of the exemplary dynamic coolant delivery system;
FIG. 26 is a partial cross-sectional view taken along line 26-26 of the gear of FIG. 25;
FIGs. 27 and 28 are perspective views of an upper portion of a mounting adapter of the exemplary dynamic coolant delivery system;
FIGs. 29 and 30 are perspective views of a lower portion of the mounting adapter of the exemplary dynamic coolant delivery system;
FIG. 31 is a bottom view of the lower portion of the mounting adapter of the exemplary dynamic coolant delivery system;
FIGs. 32 and 33 are partial exploded views of the exemplary dynamic coolant delivery system;

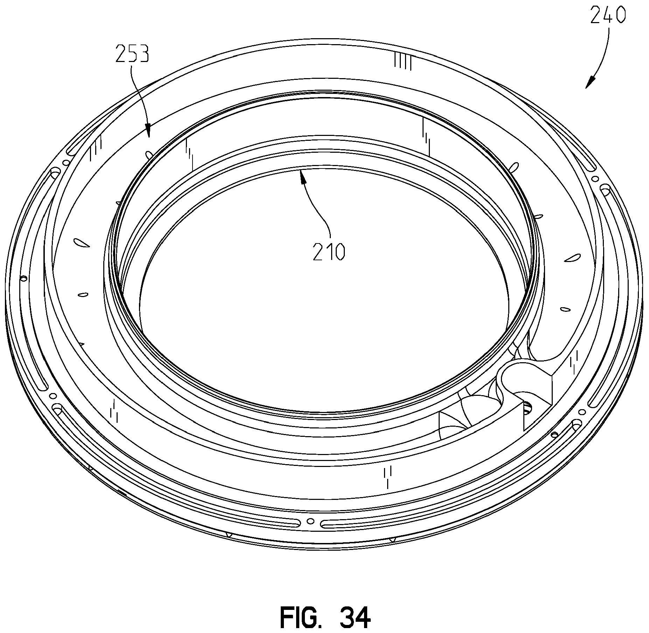

FIG. 34 is a top perspective view of a hub of the exemplary dynamic coolant delivery system;
FIG. 35 is a top view of the hub;
FIG. 36 is a bottom perspective view of the hub;
FIG. 37 is a partial cross-sectional view of the hub taken along line 37-37 of FIG. 36;
FIG. 38 is a top plan view of a cover of the exemplary dynamic coolant delivery system;
FIG. 39 is a perspective view of the turret and the nozzle of the exemplary dynamic coolant delivery system;
FIG. 40 is an exploded view of the turret and the nozzle;
FIGs. 41 and 42 are perspective views of the turret;
FIG. 43 is a cross-sectional view of the turret;
FIGs. 44, 45, and 46 are partial cross-sectional views of the exemplary dynamic coolant delivery system illustrating a sequential pivoting of the nozzle about the nozzle axis;
FIG. 47 is a partial exploded view of the exemplary dynamic coolant delivery system;
FIG. 48 is a perspective view of a light ring;
FIG. 49 is an exploded view of the light ring;
FIG. 50 is a perspective view of the light ring;
FIG. 51 is a perspective view of the light ring with a gasket removed;
FIG. 52 is a partial cross-sectional view of the light ring;
FIG. 53 is a diagrammatic view of a trajectory of the turret and the nozzle about the platform axis and the rotation of the turret and the nozzle about the turret axis;
FIG. 54 is a diagrammatic view of the rotation of the nozzle about the nozzle axis;
FIGs. 55 and 56 are diagrammatic views of possible orientations of the turret and the nozzle relative to the platform axis and a cutting tool;
FIG. 57 is a partial side view of the exemplary dynamic coolant delivery system coupled to the spindle relative to a workpiece illustrated in broken lines;
FIG. 58 is a top perspective view of an alternative exemplary dynamic coolant delivery system;
FIG. 59 is a bottom perspective view of the exemplary dynamic coolant delivery system of FIG. 58;

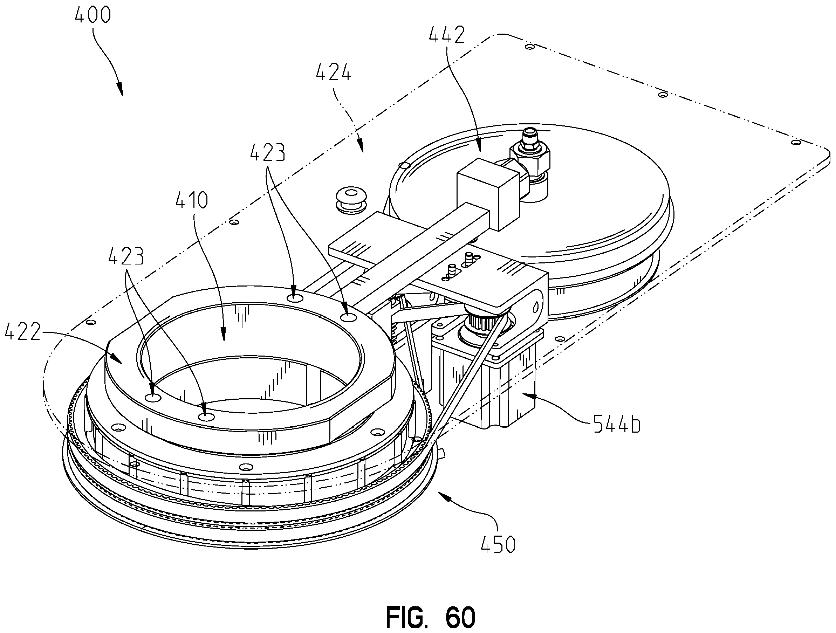

FIG. 60 is a perspective view of an interior of the exemplary dynamic coolant delivery system of FIG. 58;
FIG. 61 is a partial perspective view of a cover of the exemplary dynamic coolant delivery system of FIG. 58;
FIG. 62 is cross-sectional view of the interior of the exemplary dynamic coolant delivery system of FIG. 58 taken along lines 62-62;
FIG. 63 is a cross-sectional view of the interior of the exemplary dynamic coolant delivery system of FIG. 58 taken along lines 63-63;
FIG. 64 is a bottom view of the interior of the exemplary dynamic coolant delivery system of FIG. 58;
FIG. 65 is an partial exploded view of the interior of the exemplary dynamic coolant delivery system of FIG. 58; and
FIG. 66 is another partial exploded view of the interior of the exemplary dynamic coolant delivery system of FIG. 58..

Corresponding reference characters indicate corresponding parts throughout the several views. The exemplifications set out herein illustrates exemplary embodiments of the invention and such exemplifications are not to be construed as limiting the scope of the invention, which is defined by the appended claims.

### DETAILED DESCRIPTION OF THE DRAWINGS

For the purposes of promoting an understanding of the principles of the present invention, reference is now made to the embodiments illustrated in the drawings, which are described below. The exemplary embodiments disclosed herein are not intended to be exhaustive or to limit the invention, which is defined by the appended claims, to the precise form disclosed in the following detailed description.
Rather, these exemplary embodiments were chosen and described so that others skilled in the art may utilize their teachings.

The terms "couples," "coupled," and variations thereof are used to include both arrangements wherein two or more components are in direct physical contact and arrangements wherein the two or more components are not in direct contact with each other (e.g., the components are "coupled" via at least a third component), but yet still cooperate or interact with each other. Furthermore, the terms "couples," "coupled," and variations thereof refer to any connection for machine parts known in the art, including, but not limited to, connections with bolts, screws, threads, magnets, electro-magnets, adhesives, friction grips, welds, snaps, clips, etc.

In some instances throughout the present disclosure and in the claims, numeric terminology, such as first and second, is used in reference to various components or features. Such use is not intended to denote an ordering of the components or features. Rather, numeric terminology is used to assist the reader in identifying the component or features being referenced and should not be narrowly interpreted as providing a specific order of components or features.

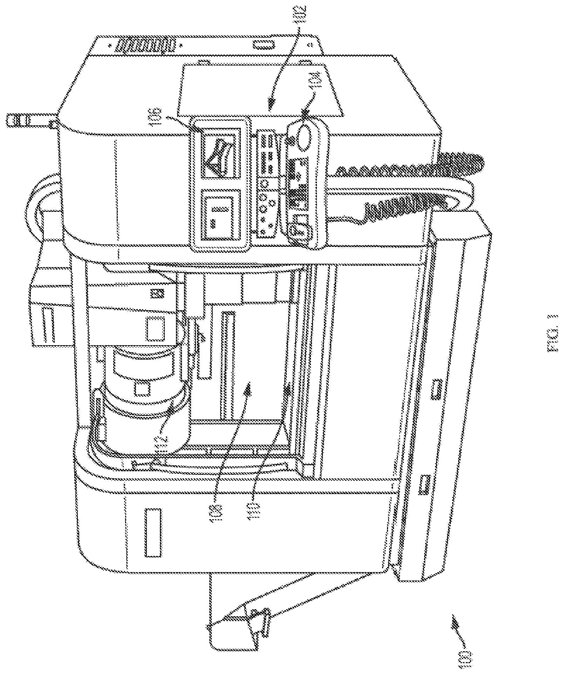

Referring to FIG. 1, a perspective view of a CNC machine 100 is shown. CNC machine 100 includes a control console 102 with user controls 104 and a viewable screen 106. In one embodiment, controls 104 and viewable screen 106 allow a user to generate part programs using conventional methods including accessing computer-aided design ("CAD") and computer-aided manufacturing ("CAM") programs. CAD and CAM programs allow for manufacture of components to meet exact specifications in continuous, automated processes. These processes may include subtractive or additive manufacturing. In the center of CNC machine 100, a workspace 108 and working parts 112 are shown.

In the example shown, workspace 108 has a flat working surface 110, so that a user can mount a blank or workpiece on working surface 110 to be worked upon by CNC machine 100. When CNC machine 100 is operational, workspace 108 may be closed by a door or a screen (not shown). In some embodiments, workspace 108 remains closed during a continuous, automated manufacturing process. The process can begin after a blank or workpiece is mounted to working surface 110 and the door or screen is closed and end after the process has created a part by controlling the operation of working parts 112 according to user input specifications. The continuous, automated manufacturing process of the present disclosure can be a subtractive manufacturing process, an additive manufacturing process, or a combination of both subtractive and additive manufacture processes. It should be further understood that working parts 112 include a spindle and at least one axis controlled by servo motors. In the embodiment shown, working parts 112 include a spindle and a plurality of axes (linear and/or tilt) controlled by servo motors.

Subtractive manufacture processes include, but are not limited to, grinding, drilling, boring, shaving, milling, and cutting. Additive manufacture includes, but is not limited to, extruding, which oftentimes is carried out using moldable and flowable plastics. Other materials to be used in an additive manufacturing process might include rubber, metals, epoxies, glue or composite materials. In some embodiments, a user does not mount any workpiece to working surface 110, and workspace 108 is closed, beginning an additive and subtractive manufacturing process. Additive and subtractive manufacture processes, in some embodiments, further includes heating, cooling, and/or curing material, optionally with lasers, UV lights, and/or fluid streams within workspace 108.

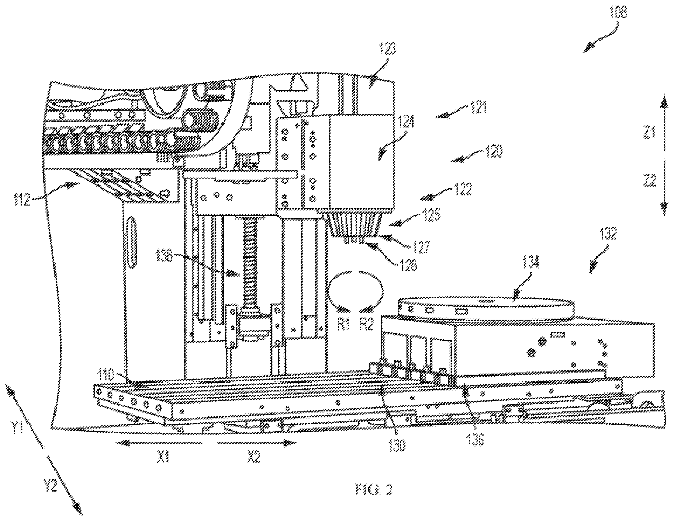

Working parts 112 (described in more detail with reference to FIG. 2 below) of CNC machine 100 are programed to move according to a user input to create a specific shape. As indicated above, working parts 112 include a spindle and spindle head (described in more detail below). During a continuous, automated manufacturing process, working parts 112 move within workspace 108 to create a part or component. In one embodiment, working parts 112 are coupled with cutting tools in a subtractive manufacturing process. In other embodiments, working parts 112 are coupled with an extruder during an additive manufacturing process. In another embodiment during a continuous, automated manufacturing process using both additive and subtractive manufacturing processes, working parts 112 interchangeably couple with subtractive manufacturing tools, such as a milling tool, and additive manufacturing tools, such as an extruder.

Referring now to FIG. 2, a perspective view of workspace 108 in CNC machine 100 is shown. In the embodiment shown, workspace 108 is the workspace of a 5-axis CNC machine model, and the axes are described further below. Working parts 112 include a spindle head 120 with an upper portion 121 and a lower portion 122. Upper portion 121 includes a motor housing 123 and a head casing 124, between upper portion 121 and lower portion 122. Lower portion 122 includes a spindle 125 and couple keys 126. Spindle 125 has a lower flat surface 127, and keys 126 extend downwardly below surface 127. In the embodiment shown, there are three coupling keys; however, more or fewer than three coupling keys is contemplated. Any combination of a spindle and keys known in the art capable of coupling interchangeably with a holder, such as a tool holder, may be used. Spindle 125 and keys 126 are able to interchangeably couple with subtractive manufacturing tools, such as drills, and additive manufacturing tools, such as extruders, or other material processing units.

Working surface 110 has grooves 130 and an optional working table 132. Grooves 130 facilitate affixing material to be machine, or affixing a fixture, such as working table 132, or other material holders to working surface 110. Working table 132 has a flat upper surface 134 and a groove-fitting lower surface 136. Upper surface 134 allows for a blank or workpiece to be mounted to working table 132 for either additive or subtractive manufacture processes by spindle head 120 and a tool (not shown) coupled to spindle 125 by keys 126. Working table 132 is affixed to working surface 110 within grooves 130. Therefore, when working surface 110 moves in the X and Y directions, working table 132, or other affixed units move with working surface 110. Flat upper surface 134 rotates around a rotary C axis (not shown), wherein upper surface 134 rotates about a central axis.

Working parts 112 include a ball screw 138, which facilitates movement of spindle head 120 in the Z1 and Z2 directions during a manufacturing process. Spindle head 120 can move rotatably in the R1 and R2 direction to allow a tool coupled to and rotatably supported by spindle 125 to work on a workpiece mounted on upper surface 134 from different angles during a manufacturing process. In some embodiments, spindle head 120 can move in the X1 and X2 directions or the Y1 and Y2 directions. The described movement of the parts in the X, Y, R, C, and Z directions, in one embodiment, is controlled to achieve tool paths required for forming a part having a geometry specified according to user input in a part program. It should be understood that while the present disclosure refers to a five-axis CNC machine, CNC machines having more or fewer than five axes of control are contemplated. Furthermore, in the embodiment shown, CNC machine 100 comprises a vertical milling machine. In another embodiment, CNC machine 100 may comprise a horizontal milling machine having at least one axis of control.

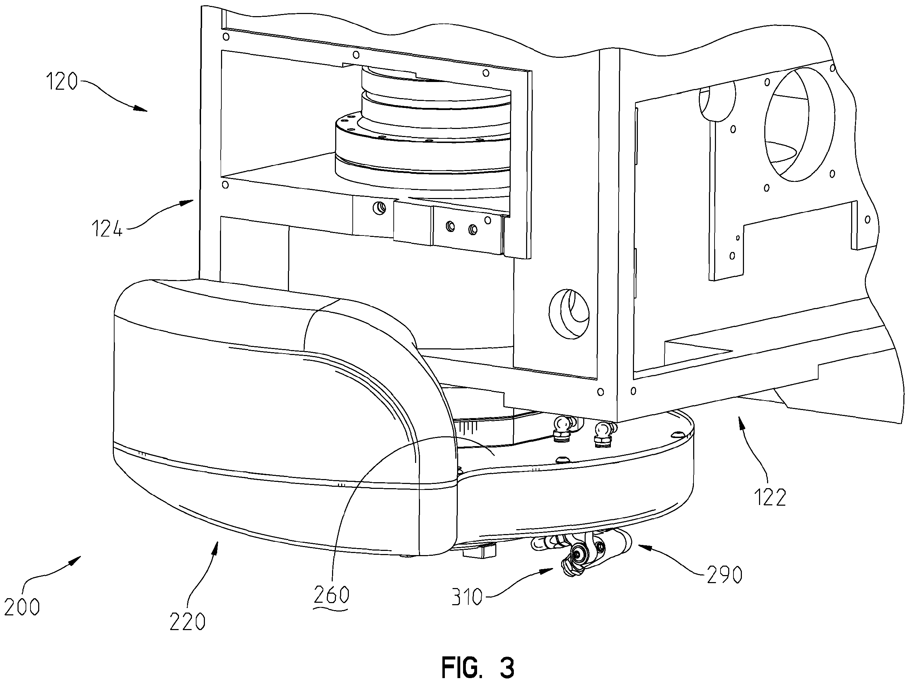

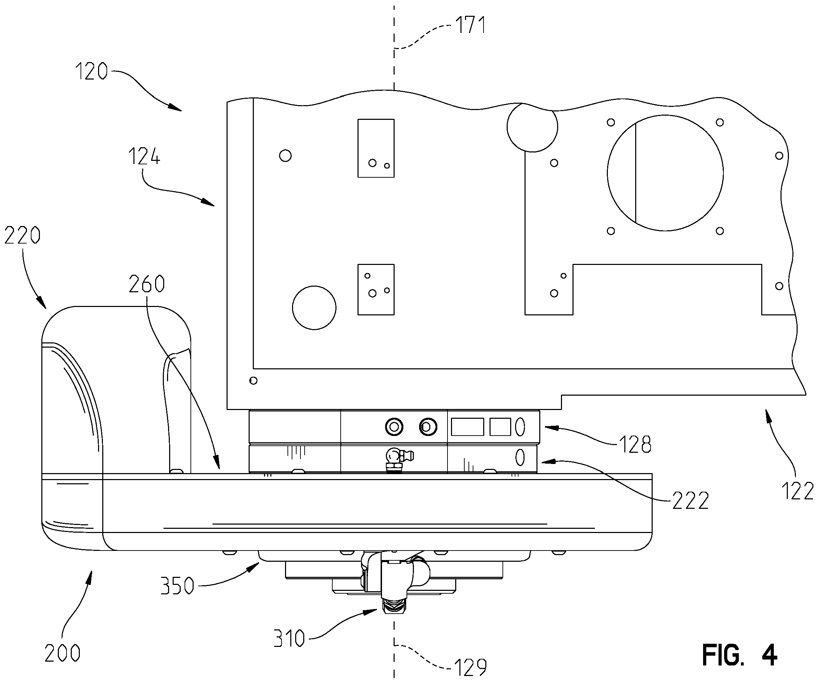

Turning now to FIGs. 3 and 4, an exemplary dynamic coolant delivery system 200 is shown coupled to spindle head 120. Dynamic coolant delivery system 200 is fluidly coupled to a coolant reservoir and is adapted to deliver coolant to at least one of a tool, such as a cutting tool, coupled to and rotatably supported by spindle head 120 or a workpiece secured to working surface 110. In the exemplary embodiment shown, dynamic coolant delivery system 200 travels with spindle head 120 as spindle head 120 moves, for example, in the X1 and the X2 directions, the Y1 and the Y2 directions, or the Z1 and Z2 directions.

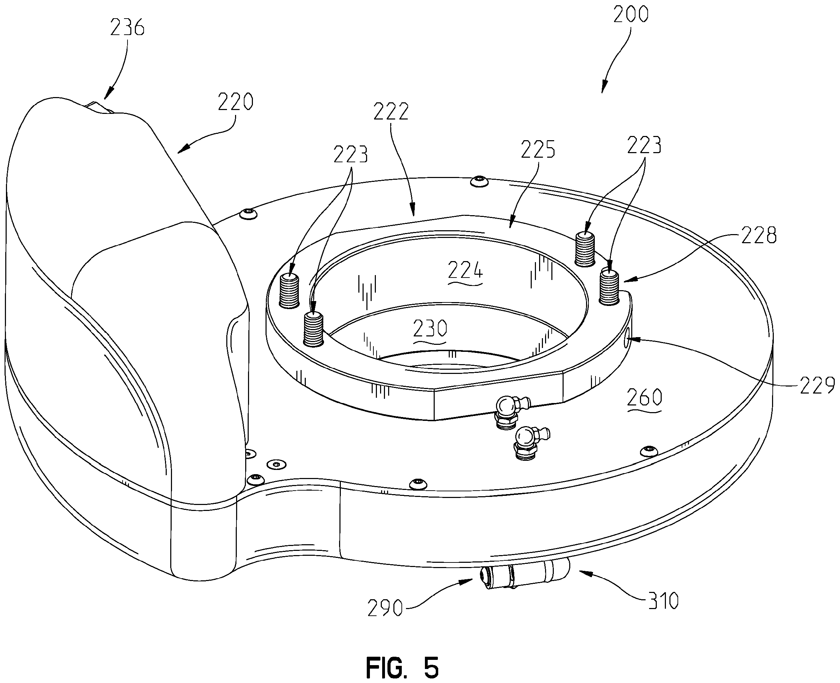

Illustratively, dynamic coolant delivery system 200 is coupled to a lower portion 122 of spindle head 120. Lower portion 122 illustratively includes a mounting flange 128 that is adapted to receive a mounting adapter 222 of dynamic coolant delivery system 200. More specifically, mounting adapter 222 includes a plurality of mounting bolts 223 that are adapted to releasably couple to mounting flange 128. In the exemplary embodiment shown in Fig. 5, mounting adapter 222 includes four mounting bolts 223; however, it is contemplated that more or fewer than four mounting bolts 223 may be used to couple dynamic coolant delivery system 200 to spindle head 120. An advantage, among others, of mounting adapter 222 is that dynamic coolant delivery system 200 may be retrofitted to existing spindle heads. In an alternative embodiment, dynamic coolant delivery system 200 is integrally coupled to spindle head 120. In another embodiment, the dynamic coolant delivery system 200 is coupled to a stationary portion of CNC machine 100 within, for example, the workspace 108. In a further embodiment, mounting adapter 222 is integrated with spindle head 120. An advantage, among others, of integrating mounting adapter 222 with spindle head 120 is a reduction in parts.

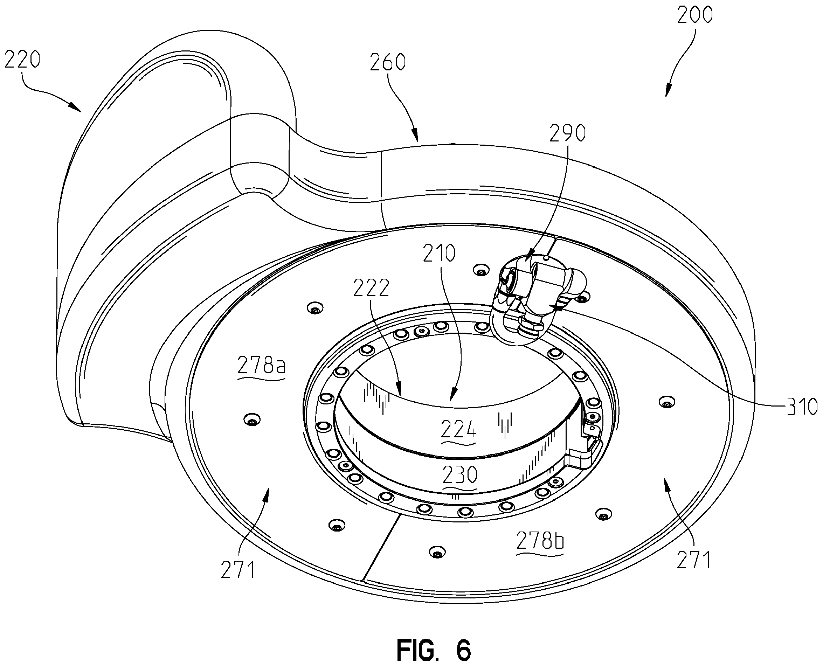

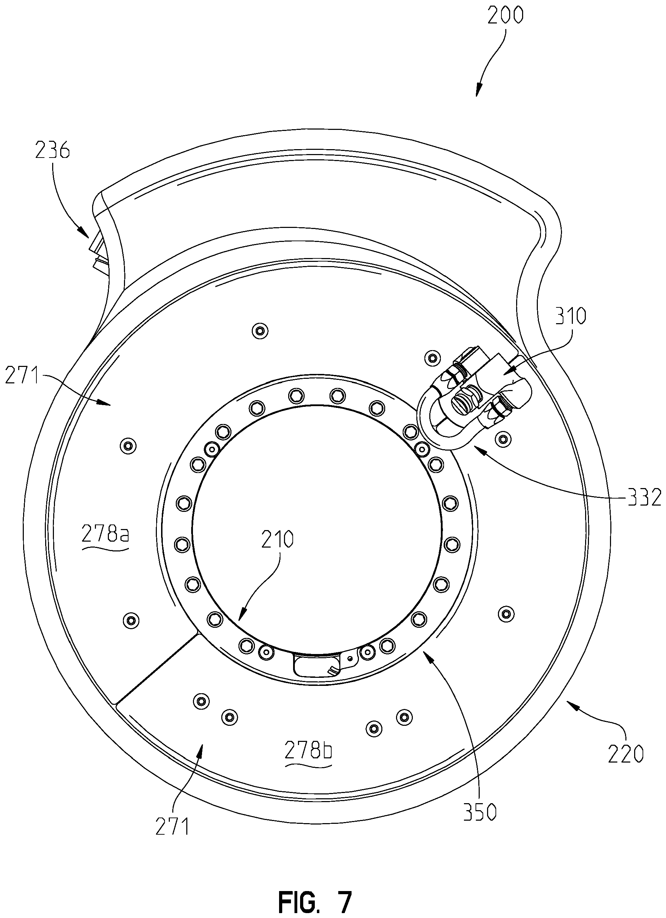

In the exemplary embodiment shown in FIGs. 5 through 7, dynamic coolant delivery system 200 illustratively includes a central opening 210 defined by mounting adapter 222. Central opening 210 is sized and configured to allow a plurality of additive and subtractive manufacturing tools supported by the spindle head 120 to pass through during, for example, the manufacturing process or the interchanging of tools with spindle 125. Central opening 210 illustratively comprises a generally circular shape and is concentric with an axis of rotation 129 of spindle head 120. Dynamic coolant delivery system 200 remains stationary relative to spindle head 120 while a tool (not shown) coupled to spindle 125 rotates about axis 129 during the manufacturing process.

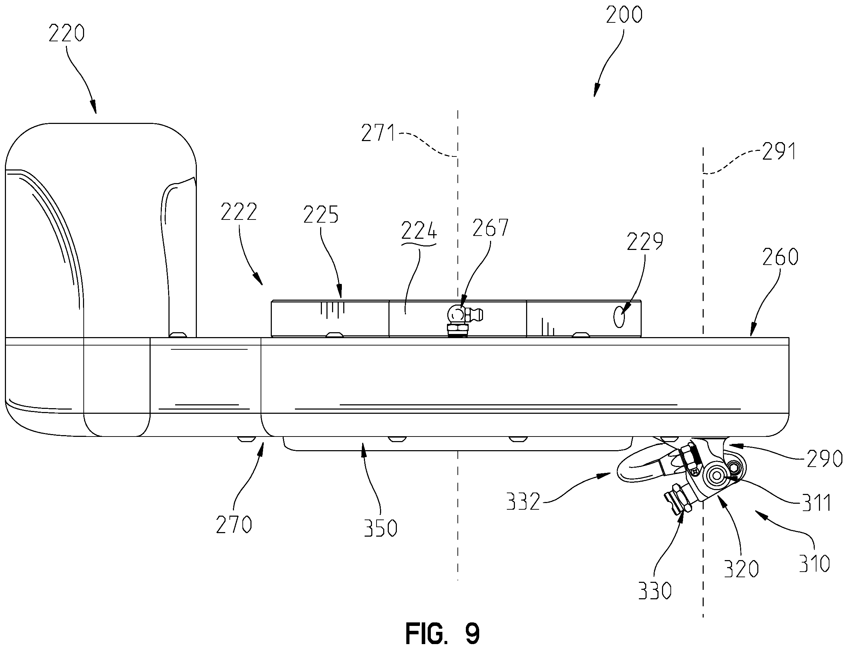

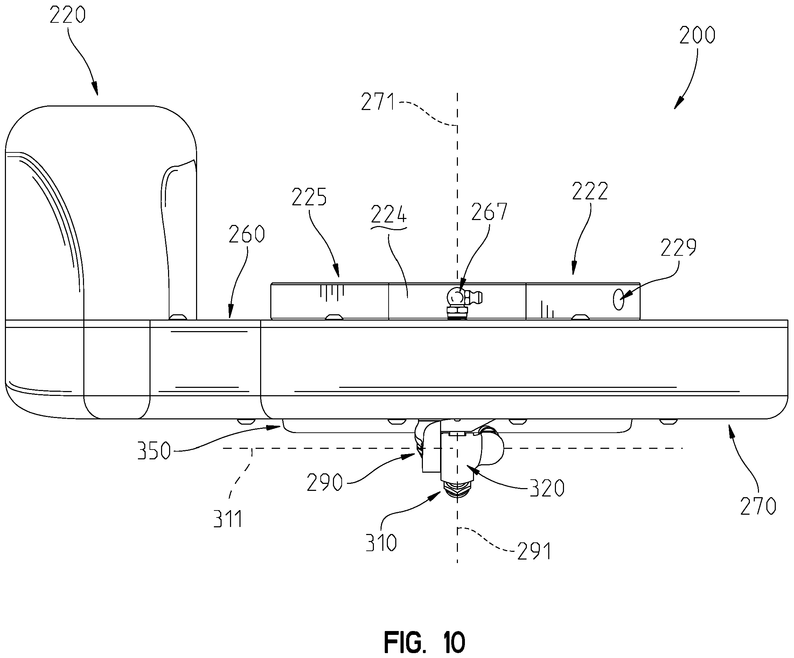

Turning now to FIGs. 9 and 10, dynamic coolant delivery system 200 includes a housing 220, a platform 270 rotatably supported by the housing 220, a turret 290 supported by platform 270, and a nozzle 310 supported by turret 290. Housing 220 includes a cover 260 and mounting adapter 222. In the exemplary embodiment shown, platform 270, turret 290, and nozzle 310 are supported by housing 220 opposite cover 260.

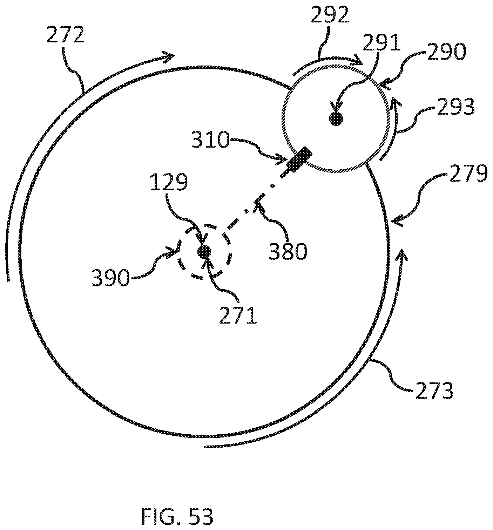

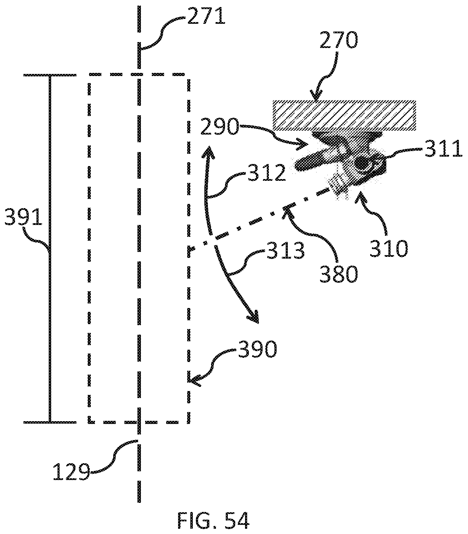

As will be described in more detail herein, platform 270 is rotatable about a platform axis 271 in directions 272, 273 (see FIG. 53). As a result, turret 290 and nozzle 310 will rotate about platform axis 271 in directions 272, 273 as platform 270 rotates about platform axis 271 in directions 272, 273. In the exemplary embodiment shown, platform axis 271 is coaxial with axis 129 when dynamic coolant delivery system 200 is coupled to spindle head 120 of CNC machine 100. Additionally, turret 290 is independently rotatable about a turret axis 291 in directions 292, 293 (see FIG. 53). As a result, turret 290 may rotate about turret axis 291 in directions 292, 293 as platform 270 rotates about platform axis 271 in directions 272, 273 or as platform 270 is stationary. Nozzle 310 is pivotable about a nozzle axis 311 in directions 312, 313 (see FIG. 54). As a result, nozzle 310 may pivot about nozzle axis 311 in directions 312, 313 independently of the rotation of turret 290 about turret axis 291 and the rotation of platform 270 about platform axis 271.

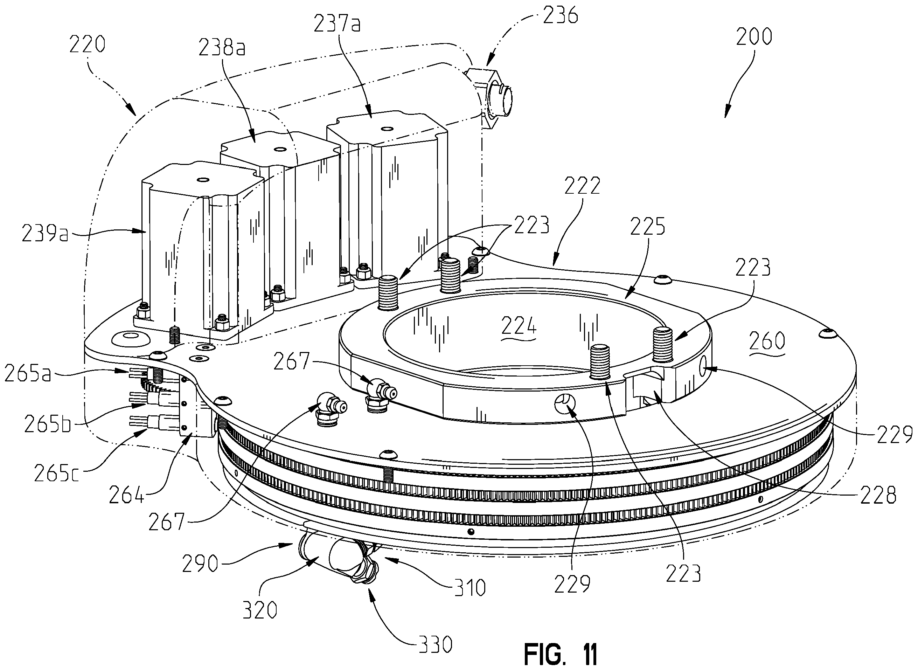

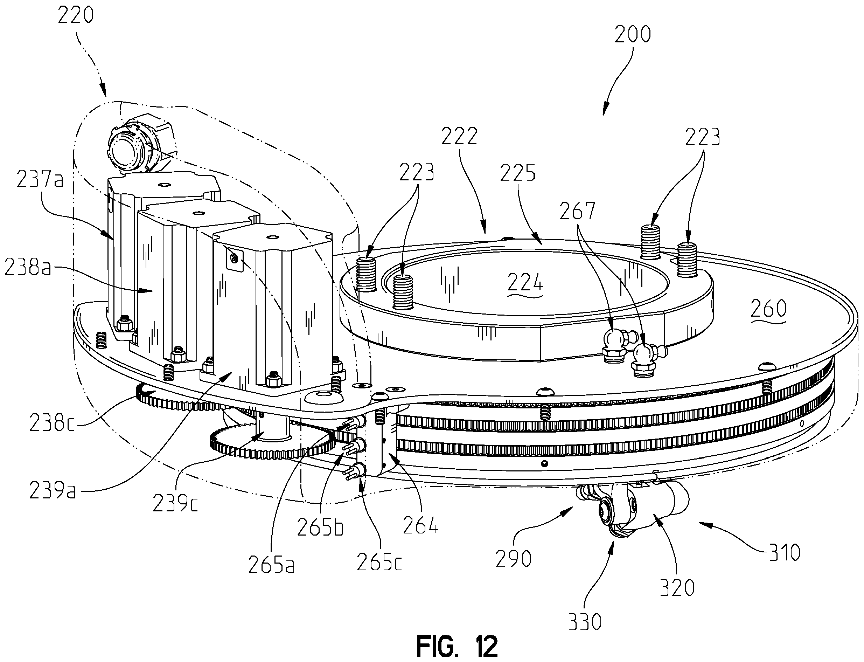

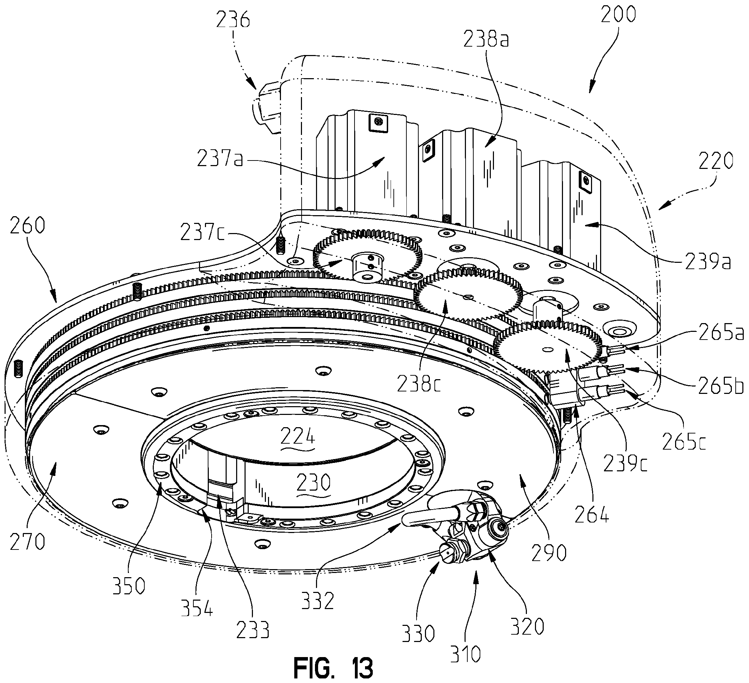

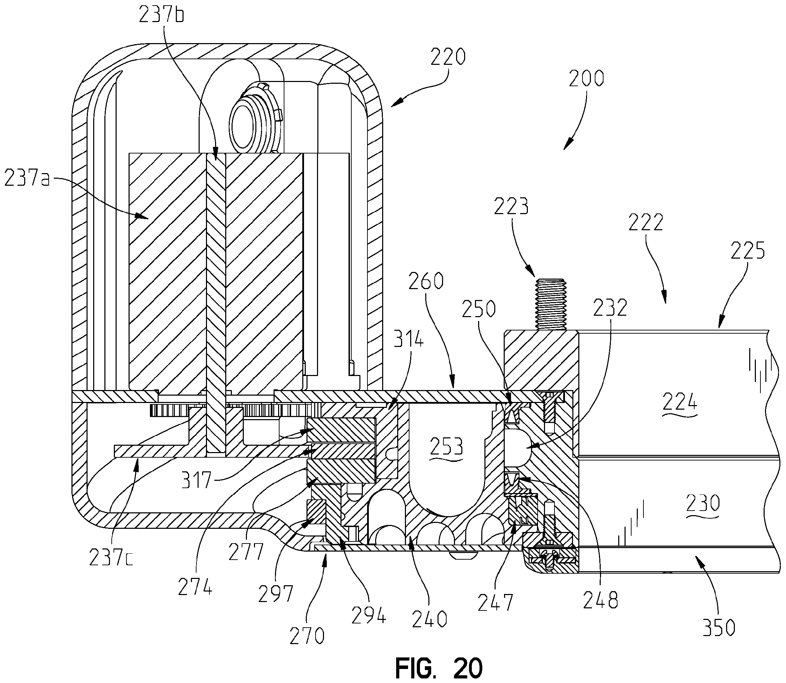

Dynamic coolant delivery system 200 is shown in more detail in FIGs. 11 through 24. A portion of housing 220 of dynamic coolant delivery system 200 is shown in transparency in FIGs. 11, 12, and 13. In the exemplary embodiment shown in FIGs. 11 through 15, dynamic coolant delivery system 200 illustratively includes a plurality of electrical motors operatively coupled to one of a plurality of gears 274, 294, 314. Electrical motors 237a, 238a, 239a are illustratively oriented parallel to and offset from platform axis 271. In the exemplary embodiment shown, electrical motors 237a, 238a, 239a are brushless DC electric motors, for example, stepper motors, contained within housing 220. Each of electrical motors 237a, 238a, 239a are illustratively in electrical communication with a power source and a controller. To this end, a fitting 236, illustratively a conduit fitting, is coupled to housing 220 to facilitate the electrical communication between electrical motors 237a, 238a, 239a, the power source, and the controller.

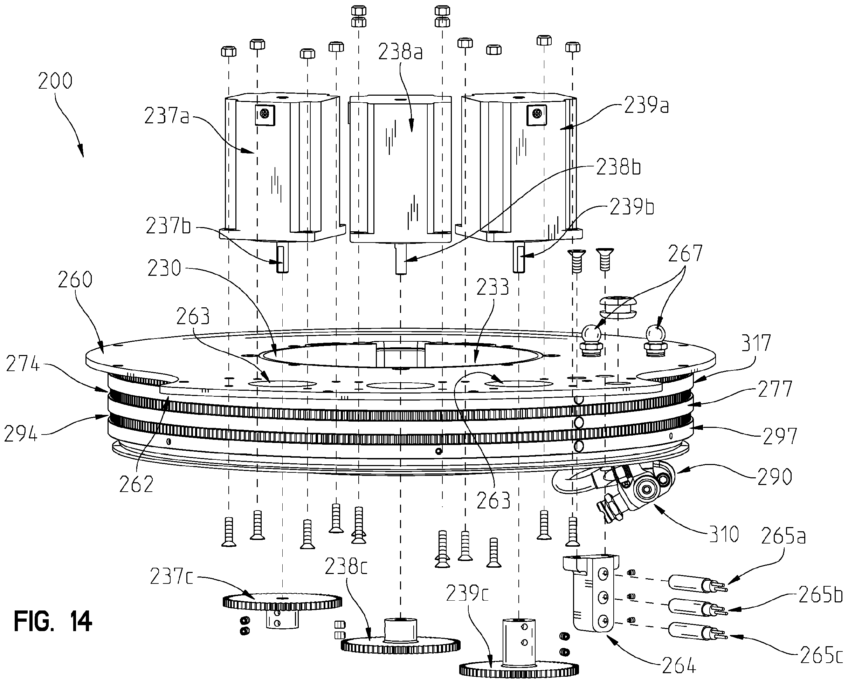

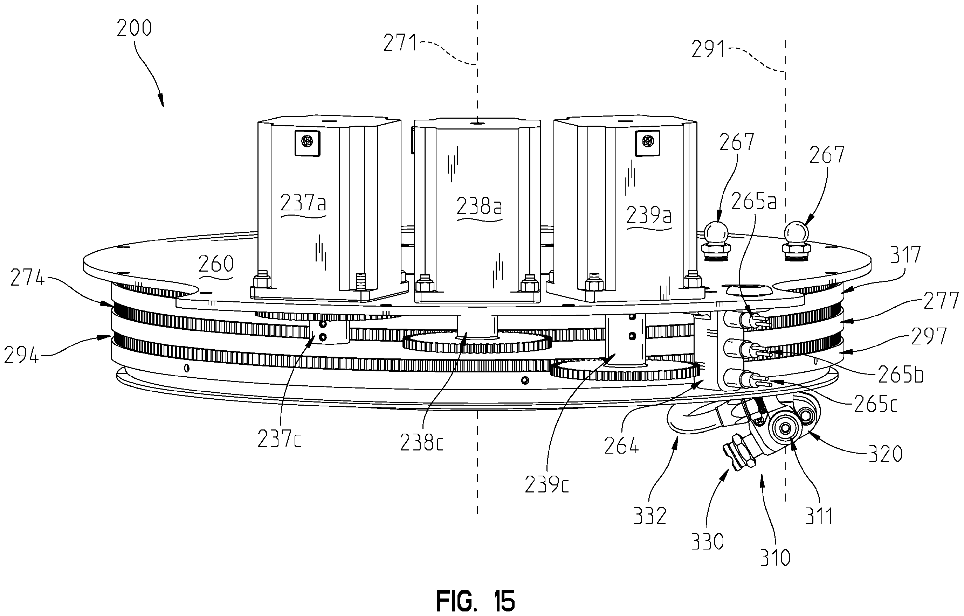

Referring specifically to FIGs. 14 and 15, electrical motors 237a, 238a, 239a include a respective drive shaft 237b, 238b, 239b that is coupled to a respective spur gear 237c, 238c, 239c. Each of spur gears 237c, 238c, 239c are operatively engaged with a respective one of the plurality of gears 274, 294, 314. In the exemplary embodiment shown, actuation of electrical motor 237a results in rotation of gear 314 about platform axis 271, actuation of electrical motor 238a results in rotation of gear 274 about platform axis 271, and actuation of electrical motor 239a results in rotation of gear 294 about platform axis 271. Electrical motors 237a, 238a, 239a are illustratively capable of variable speed output both individually and relative to one another. For example, spur gear 237c may be rotating at a different speed than spur gears 238c, 239c are rotating.

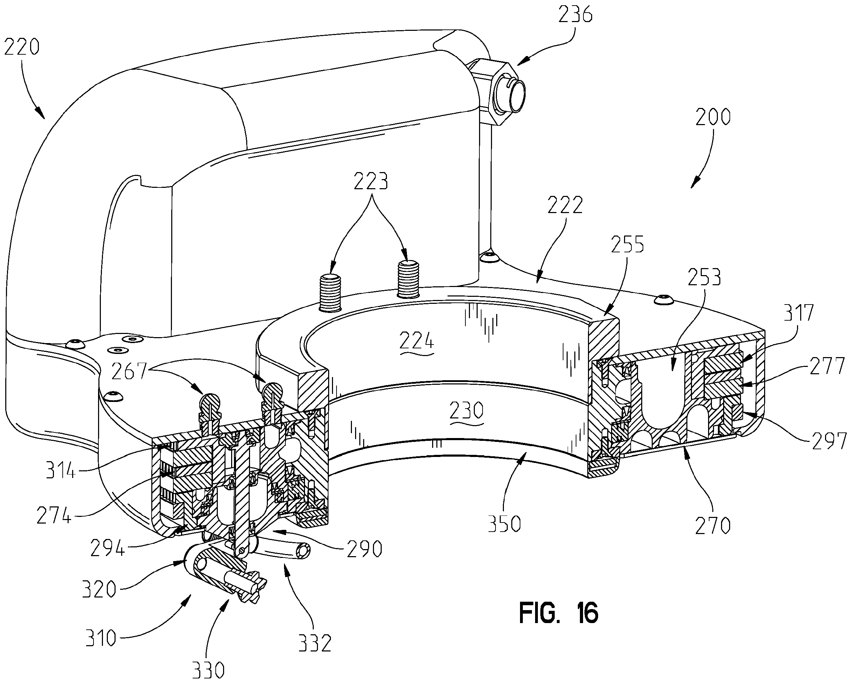

Referring now to FIGs. 16 through 22, gears 274, 294, 314 are arranged concentrically with central opening 210 of dynamic coolant delivery system 200. Thus, gears 274, 294, 314 are arranged coaxially with platform axis 271. Within housing 220, gears 274, 294, 314 are arranged axially along platform axis 271. In the exemplary embodiment shown, gear 274 is arranged axially of gear 314 along platform axis 271, and gear 294 is arranged axially of gear 274 along platform axis 271. Accordingly, gear 274 is arranged axially intermediate gears 194, 314. In addition, gear 314 is axially adjacent cover 260, and gear 294 is axially adjacent platform 270.

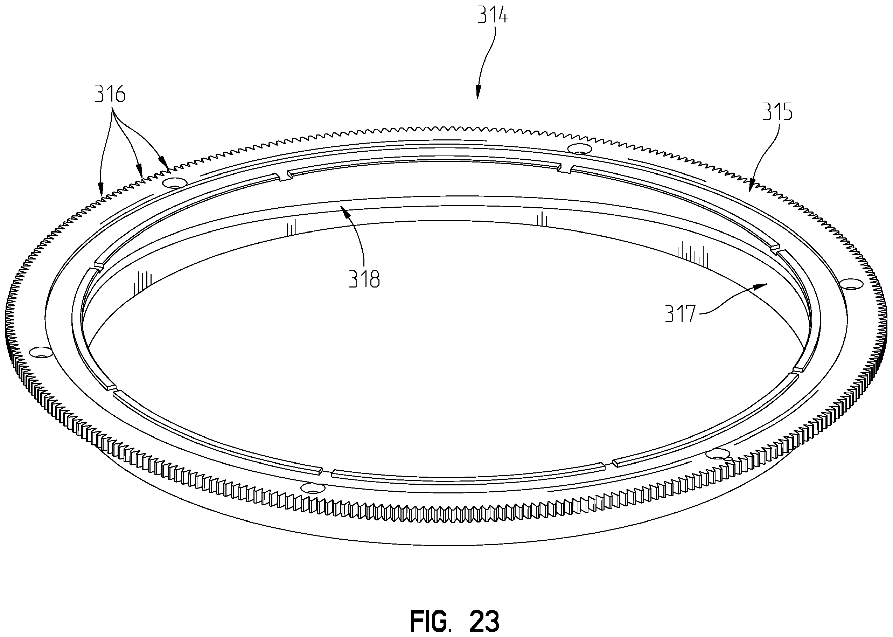

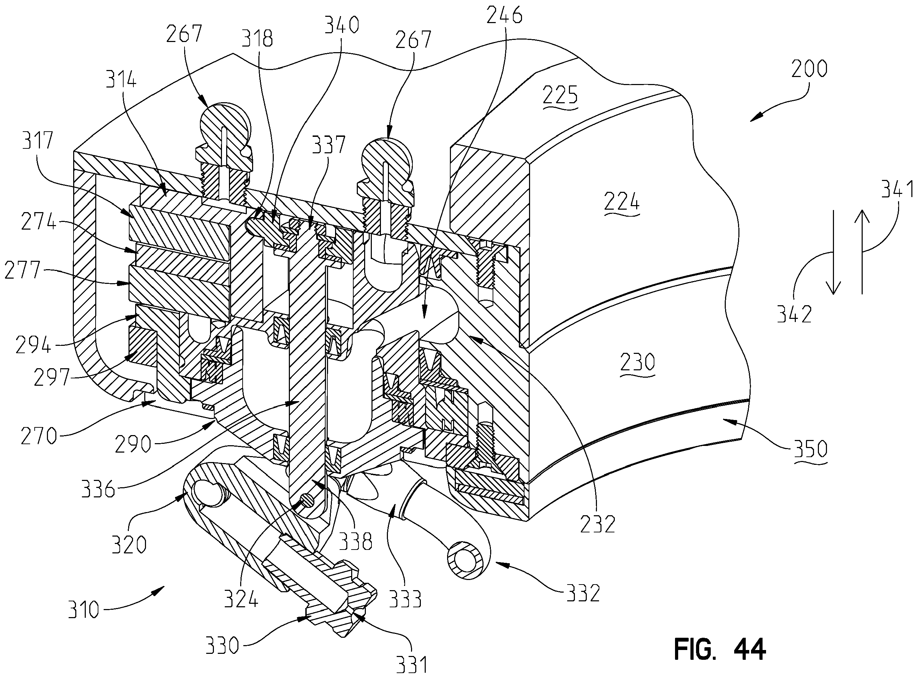

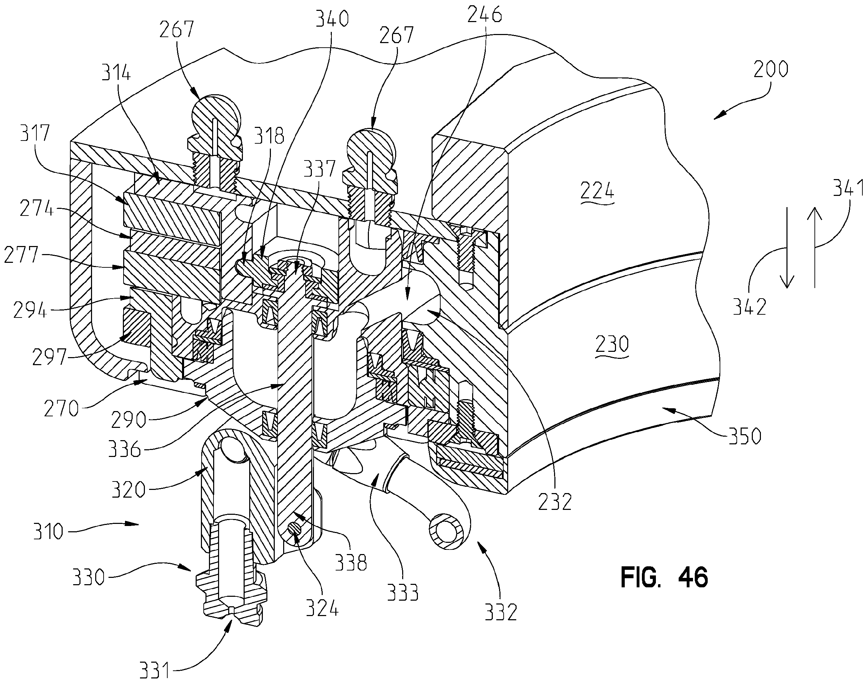

Gears 274, 294, 314 are shown in further detail in FIGs. 23 through 26. In the exemplary embodiment shown, gears 274, 294, 314 illustratively comprise ring gears. That is, gears 274, 294, 314 comprise a generally ring-shaped body. Referring specifically to FIG. 23, gear 314 comprises a radial flange 315 and an axial flange 317 extending from and generally orthogonal to an inner portion of radial flange 315. Radial flange 315 includes a plurality of engagement features 316 extending radially outwardly therefrom, which are configured to engage spur gear 237c. Axial flange 317 includes a helical groove 318 extending circumferential along an inner surface of axial flange 317. Helical groove 318 includes a "high point" corresponding to helical groove 318 being generally adjacent the inner portion of radial flange 315 (see FIG. 44) and a "low point" corresponding to helical groove 318 being generally axially spaced apart from the inner portion of radial flange 315 (see FIG. 46). Thus, helical groove 318 can be thought of as a groove extending around axial flange 317 on a plane angled with respect to platform axis 271.

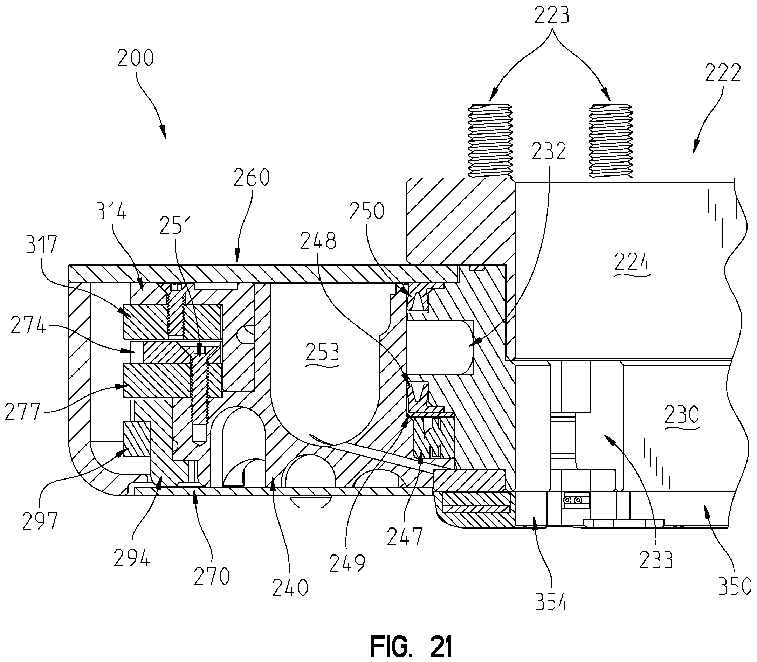

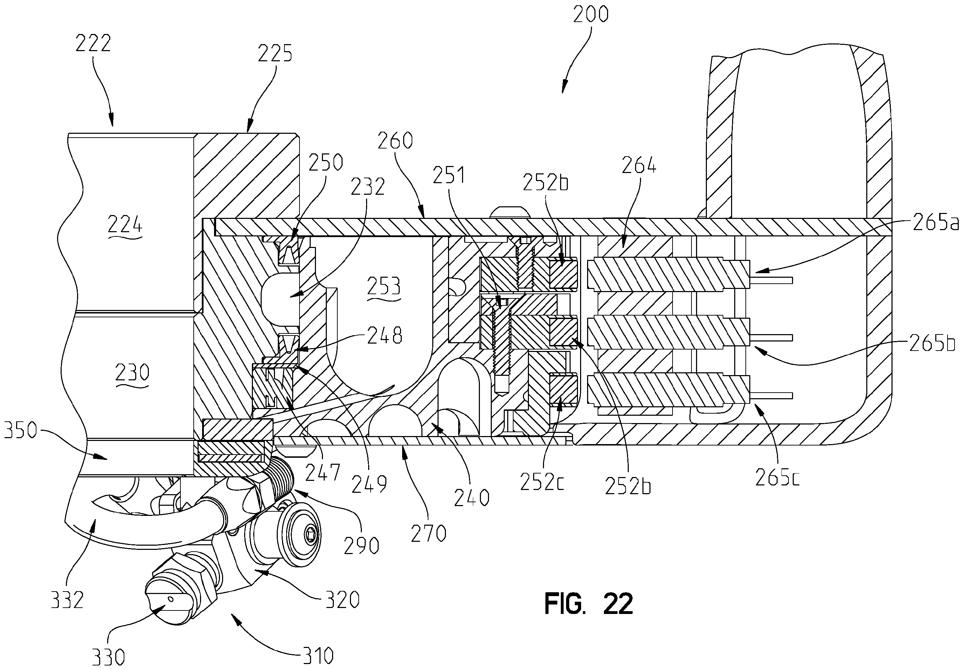

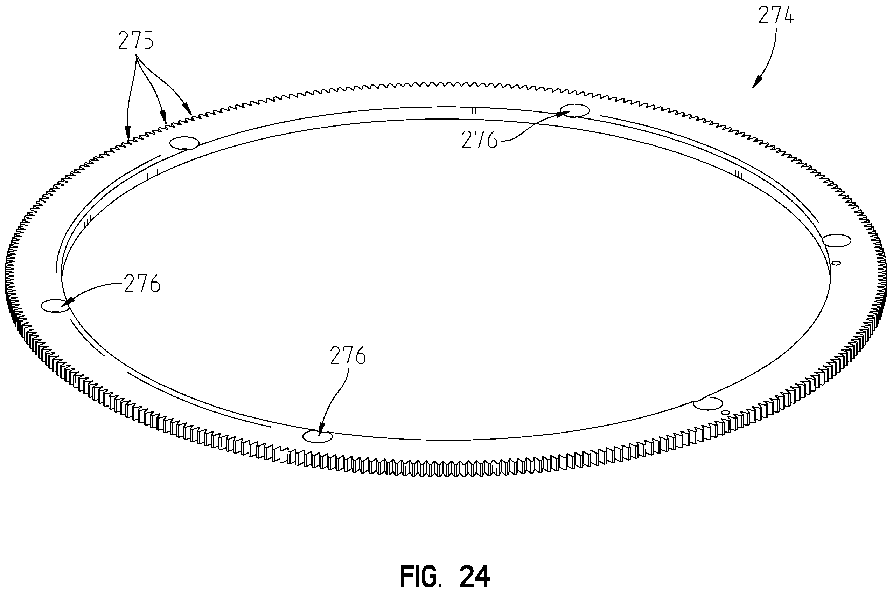

Referring now to FIG. 24, gear 274 includes a plurality of engagement features 275 extending radially outwardly from the ring-shaped body. Engagement features 245 are configured to engage spur gear 238c. Gear 274 is coupled to platform 270. In the exemplary embodiment shown, a plurality of apertures 276 are arranged circumferentially about an inner circumference of gear 274. As best shown in FIGs. 21 and 22, apertures 276 are configured to receive a respective fastener 251 for coupling gear 274 to platform 270. Accordingly, when electrical motor 238a is actuated to rotate gear 274 about platform axis 271, platform 270 is rotated about platform axis 271.

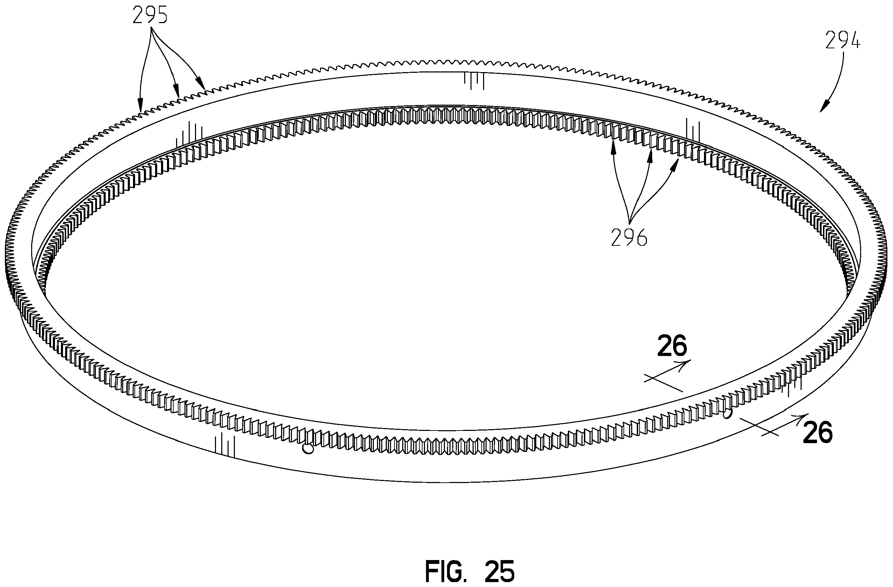

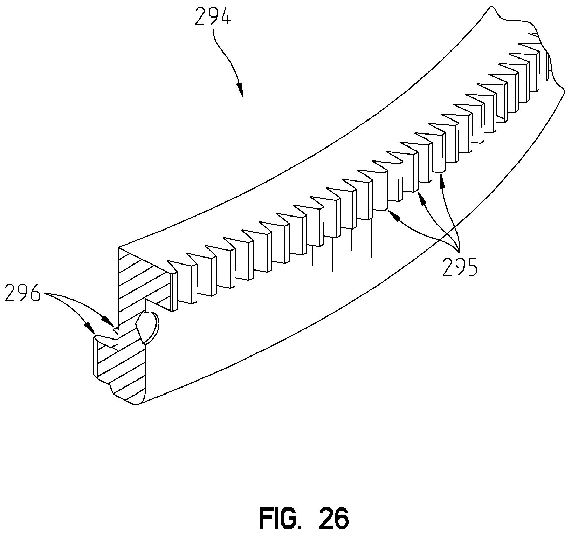

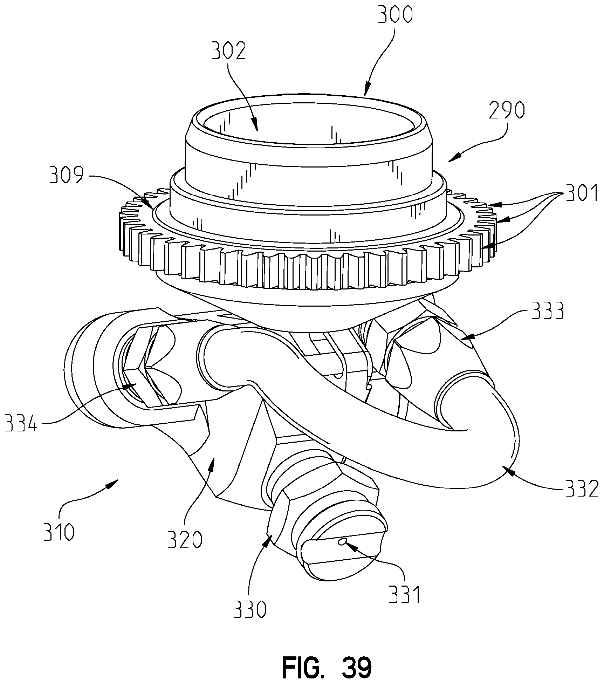

Referring now to FIGs. 25 and 26, gear 294 comprises a plurality of outer engagement features 295 and a plurality of inner engagement features 296. Outer engagement features 295 extend radially outwardly from the ring-shaped body and are configured to engage spur gear 239c. Similarly, inner engagement features 296 extend radially inwardly from the ring-shaped body and are configured to engage a plurality of engagement features 301 of turret 290 (see FIG. 39). In the exemplary embodiment shown, inner engagement features 296 are axially offset from outer engagement features 295 relative to platform axis 271.

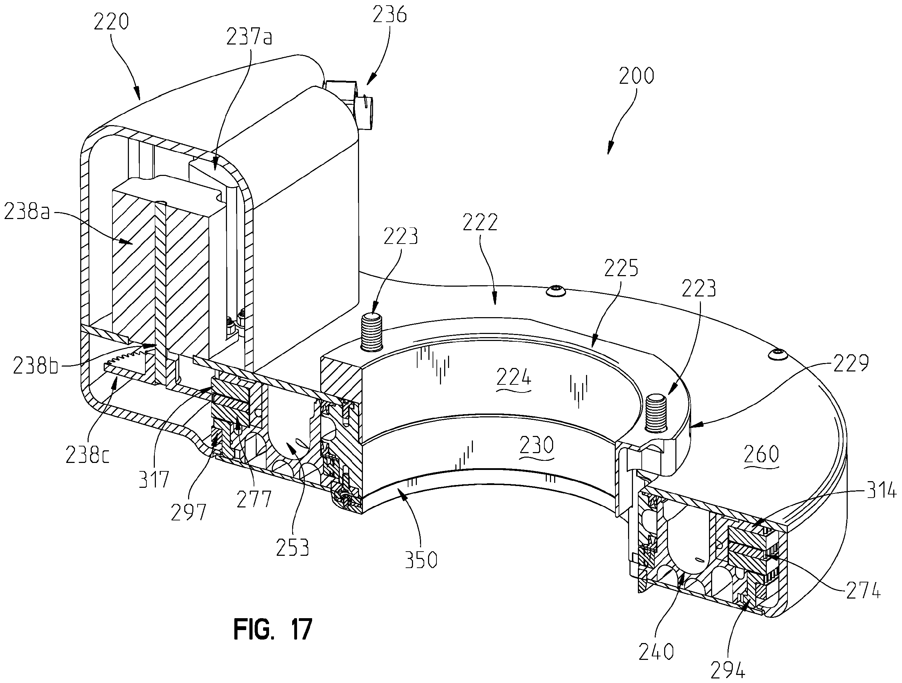

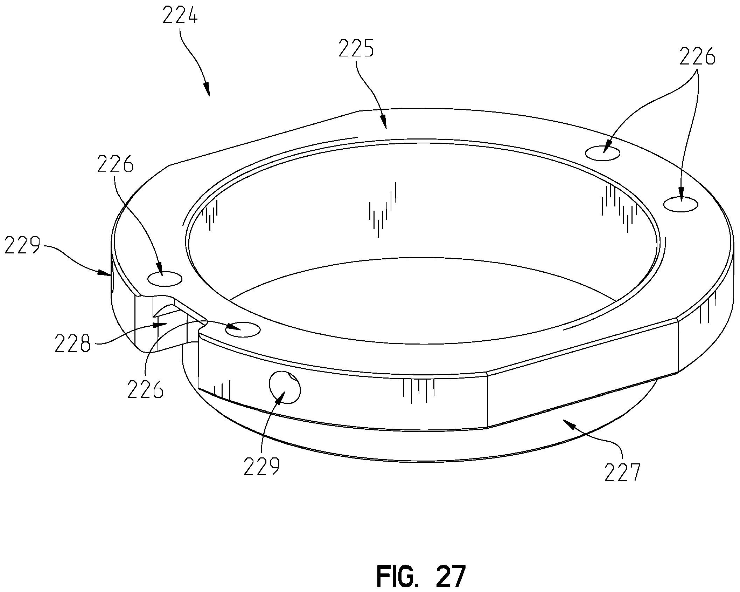

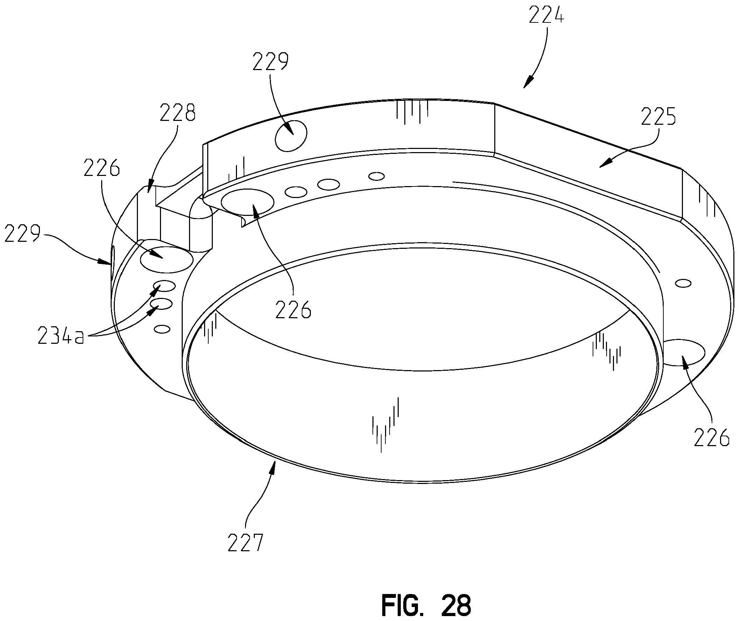

As shown in FIG. 17, mounting adapter 222 illustratively comprises a cylindrical body that includes an upper portion 224 and a lower portion 230. Upper portion 224 is shown in more detail in FIGs. 27 and 28. Upper portion 224 is adapted to couple to spindle head 120. Upper portion 224 illustratively includes a radially outwardly extending mounting flange 225. In addition, upper portion 224 includes an axially extending portion 227 extending generally orthogonal to mounting flange 225. Illustratively, mounting flange 225 is generally flat and includes a plurality of apertures 226. Each of apertures 226 is configured to receive a respective mounting bolt 223 for coupling to spindle head 120. Upper portion 224 illustratively includes four apertures 226. As discussed above, it is contemplated that upper portion 224 may include more or fewer than four apertures 226 or other engagement features as necessary to couple to a variety of spindle heads 120.

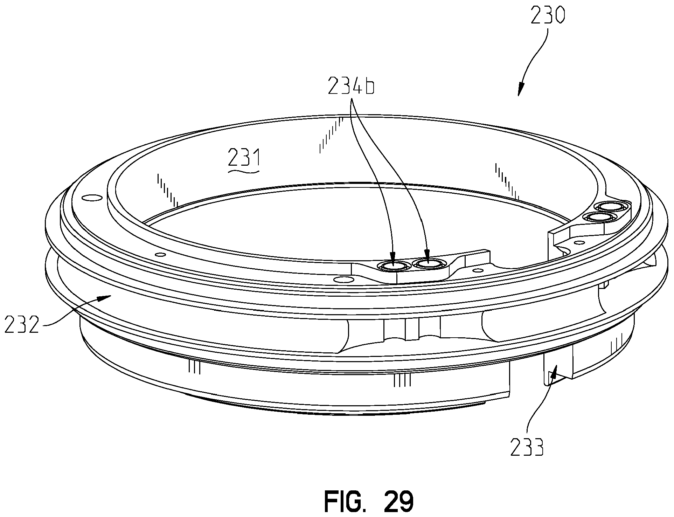

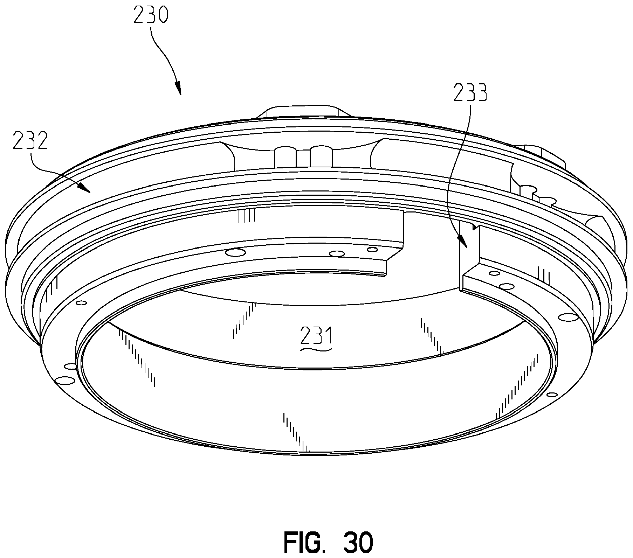

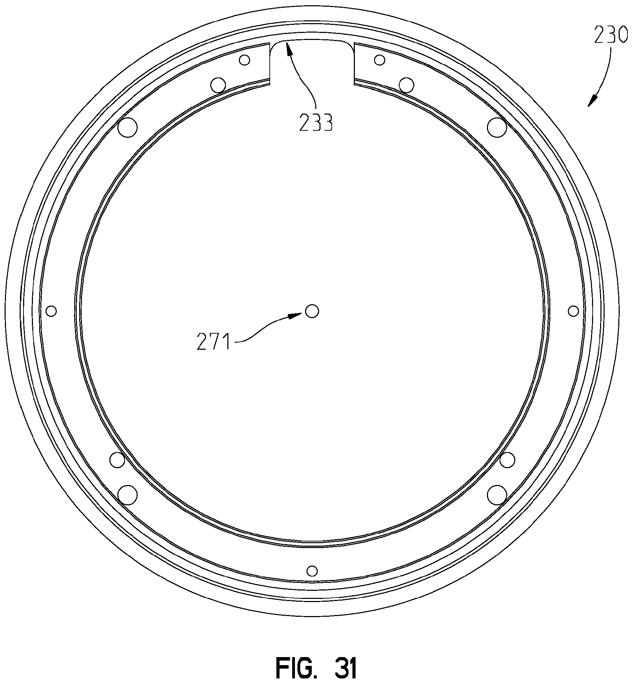

Turning now to FIGs. 29 through 31, lower portion 230 of mounting adapter 222 is shown in more detail. Lower portion 230 illustratively comprises an axially extending body that is configured to receive axially extending portion 227 of upper portion 224. Illustratively, lower portion 230 includes a recess 231 that receives axially extending portion 227 Lower portion 230 further includes a circumferential groove 232 extending around an outer circumference of lower portion 230. In the exemplary embodiment shown, circumferential groove 232 extends 360 degrees about the outer circumference of lower portion 230.

Circumferential groove 232 is configured to distribute or deliver coolant from a coolant reservoir to nozzle 310. More specifically, upper portion 224 of mounting adapter 222 includes at least one pickup hole 229 for routing coolant to nozzle 310. In the exemplary embodiment shown, upper portion 224 includes two pickup holes 229. Pickup holes 229 are sized and configured to couple to one or more coolant conduits coupled to the coolant reservoir. As shown in FIGs. 27 and 28, pickup holes 229 are illustratively positioned on an outer circumferential edge of upper portion 224. This allows for the delivery of coolant from the coolant reservoir to dynamic coolant delivery system 200 when, for example, the coolant conduit or conduits are routed externally of spindle head 120. In an alternative embodiment, the conduit or conduits may be routed internally of spindle head 120. Pickup holes 229 are fluidly coupled to circumferential groove 232 through a plurality of internal fluid passageways 234a, 234b of upper portion 224 and lower portion 230, respectively.

In the exemplary embodiments shown in FIGs. 28 and 29, each of upper portion 224 and lower portion 230 also includes a recess 228, 233 configured to receive, for example, the control wires for an additive tool, such as an extruder, that may be coupled to spindle 125. In the exemplary embodiment shown, recesses 228, 233 comprise a channel extending parallel to platform axis 271. Recess 228 is oriented radially away from platform axis 271, and recess 233 is orientated radially toward platform axis 271. In this way, the control wires may be routed from radially outside mounting adapter 222 to radially inside mounting adapter 222 to the additive tool.

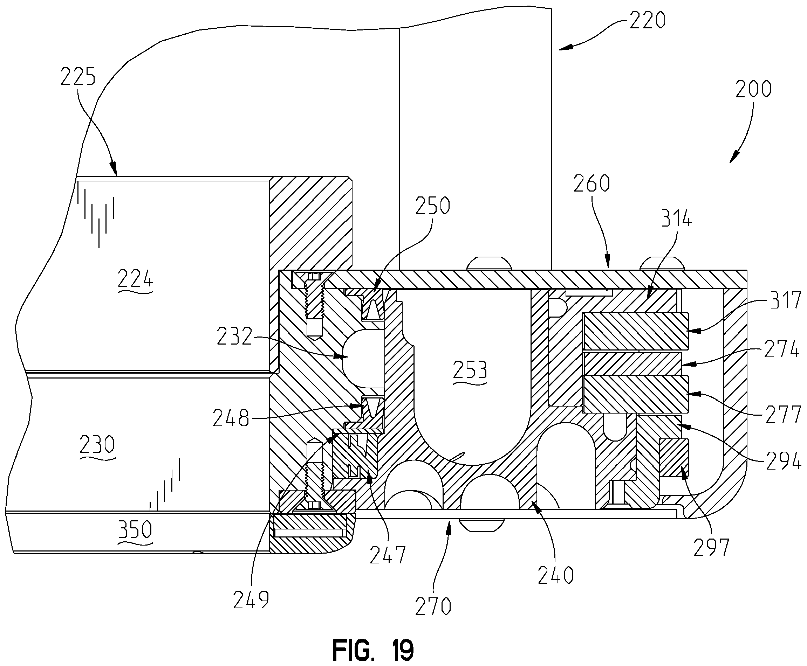

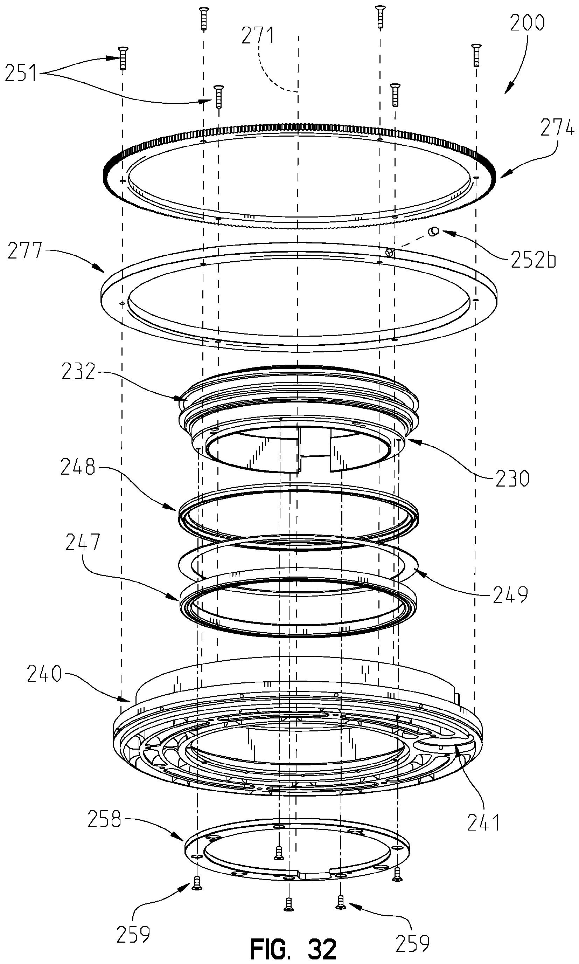

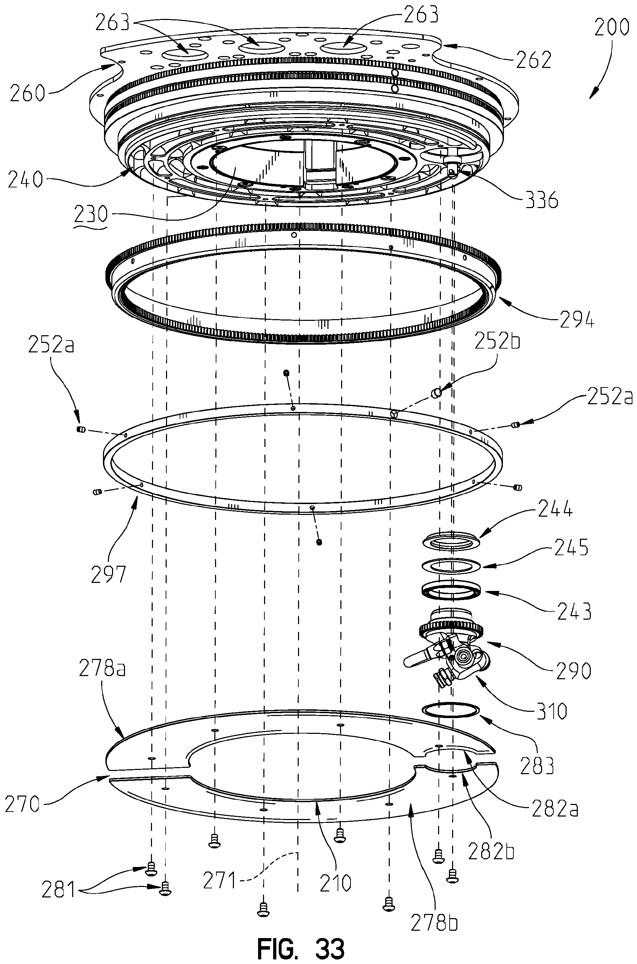

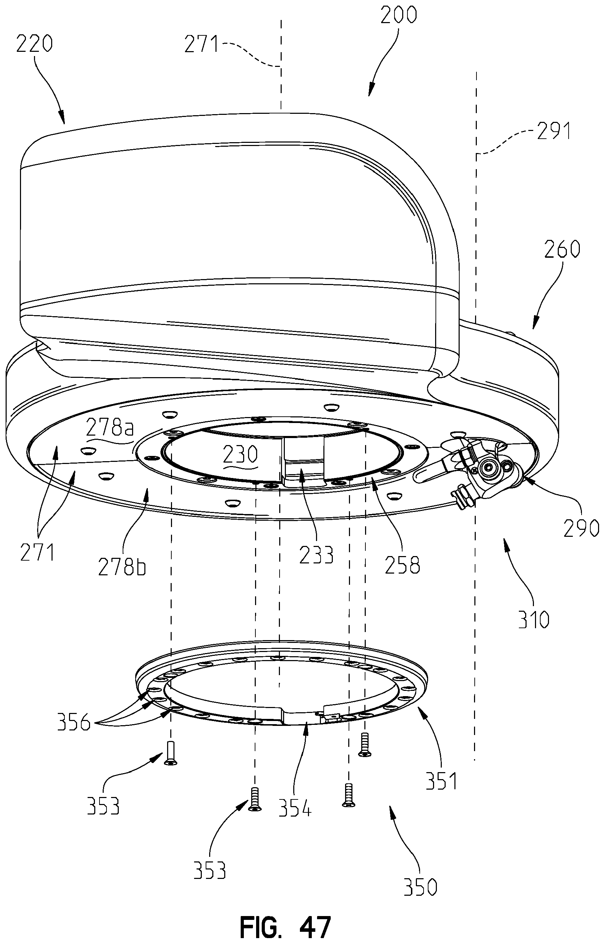

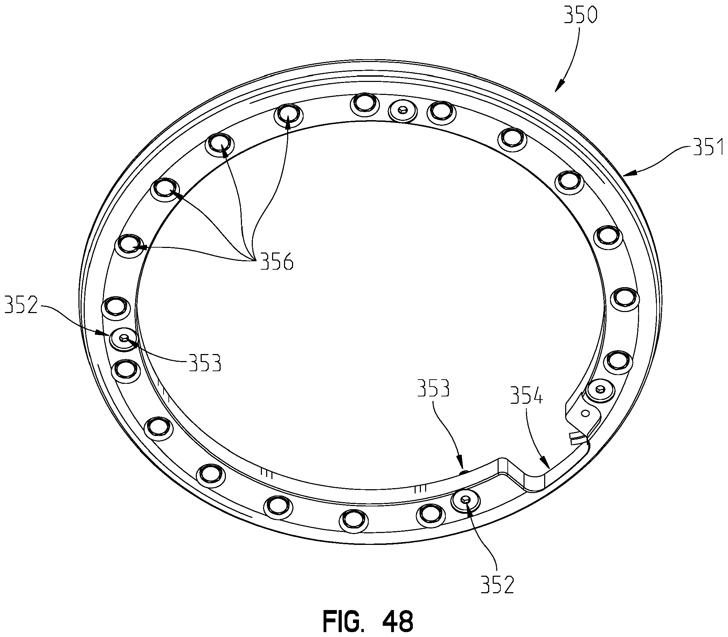

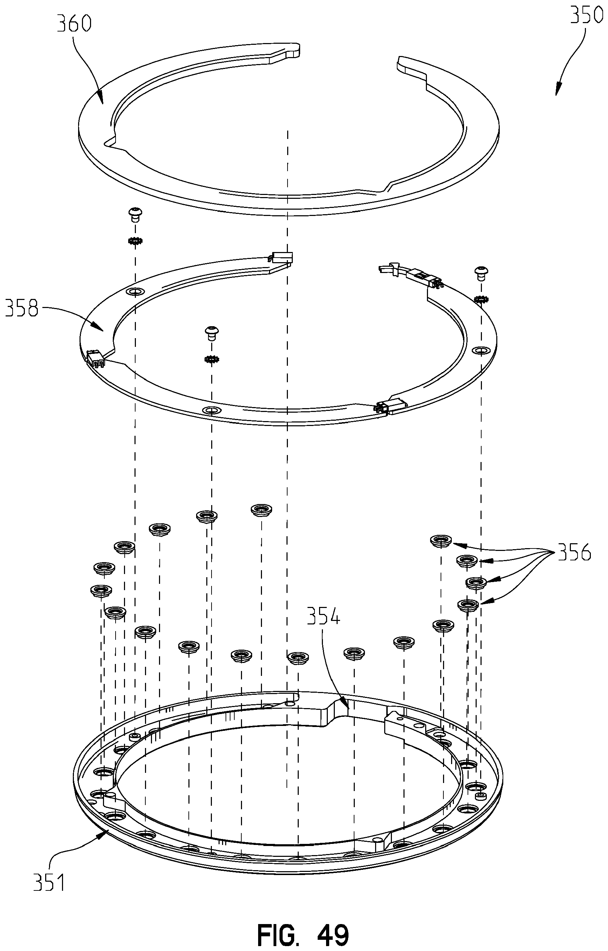

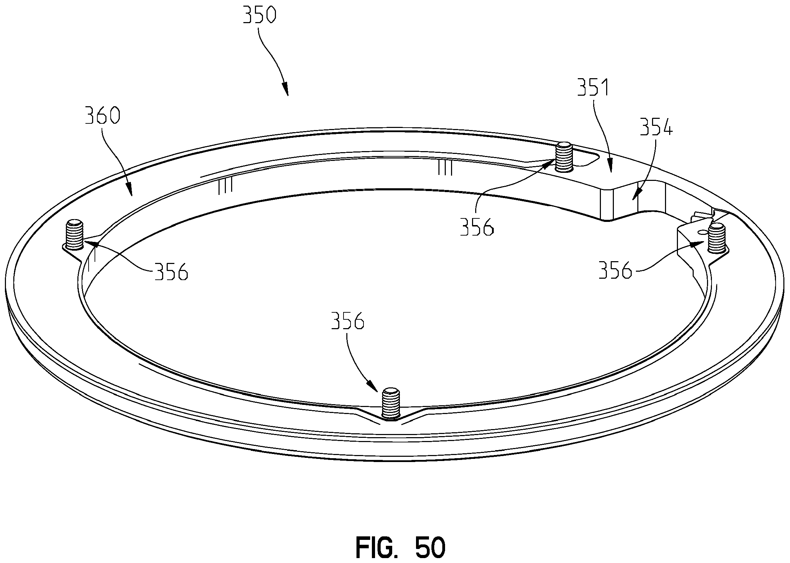

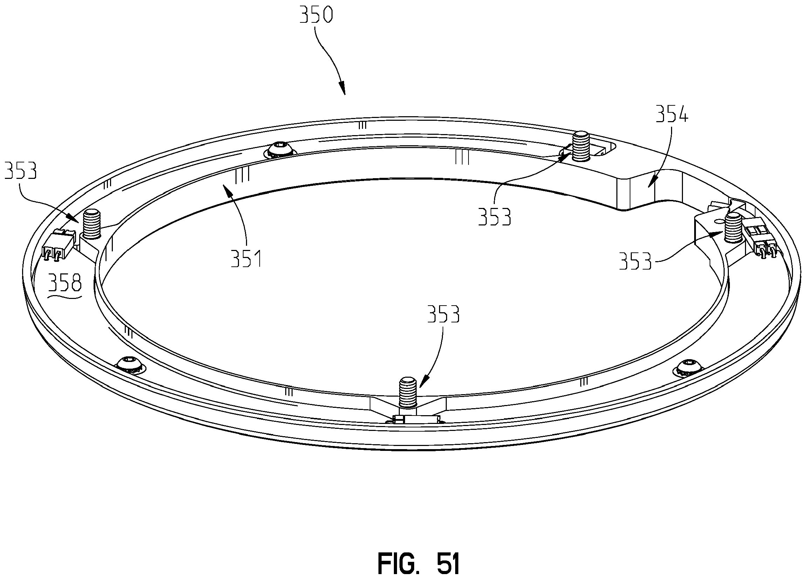

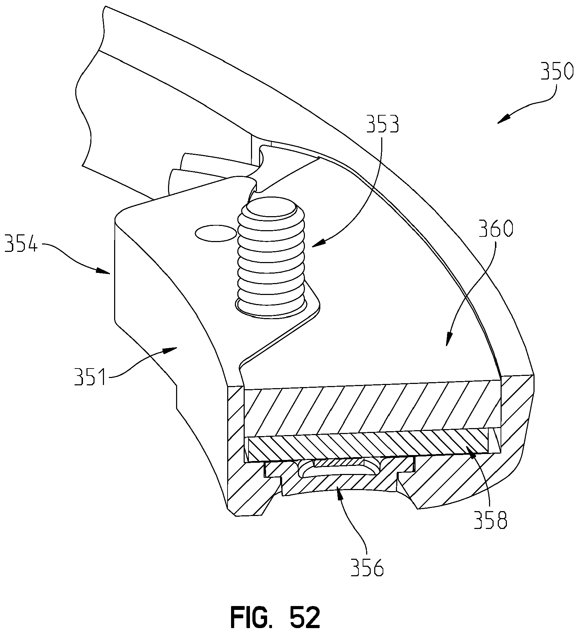

Referring now to FIGs. 32 and 33, housing 220 further includes a hub 240 surrounding mounting adapter 222. Hub 240 comprises a generally donut-shaped body adapted to receive lower portion 230 of mounting adapter 222. Specifically, lower portion 230 of mounting adapter 222 is rotatably coupled to an internal circumference of hub 240. Illustratively, a bearing 247, a seal 248, and a seal backing plate 249 are positioned axially and radially intermediate lower portion 230 of mounting adapter 222 and hub 240. More specifically, bearing 247, seal 248, and seal backing plate 249 are positioned axially intermediate circumferential groove 232 and hub 240. Bearing 247 permits relative rotational motion between hub 240 and mounting adapter 222, while seal 248 provides a sealing surface between hub 240 and mounting adapter 222. Seal 248 is illustratively a high-pressure seal configured to prohibit coolant from leaking out of circumferential groove 232 between lower portion 230 of mounting adapter 222 and hub 240. Furthermore as shown in FIG. 19, a second seal 250 mirrors seal 248 and is positioned axially intermediate cover 260 and circumferential groove 232. Seal backing plate 249, illustratively a thrust washer, provides seal 248 with a stationary sealing surface and rotationally decouples seal 248 from bearing 247. A thrust washer 258 is removably coupled to a lower portion of hub 240 by a plurality of fasteners 259. Thrust washer 258 rotationally decouples a light ring 350 (described in more detail below in connection with FIGs. 47 through 52) from hub 240.

Referring now to FIGs. 21, 22, and 33, hub 240 also rotationally supports gears 274, 294, 314 for rotation about platform axis 271. Spacers 277, 297, 317 are positioned axially intermediate gears 274, 294, 314 along platform axis 271. Thus, spacer 317 is positioned axially intermediate gears 274, 314, spacer 277 is positioned axially intermediate gears 274, 294, and spacer 297 is positioned axially intermediate gear 297 and platform 270. Moreover, spacers 277, 297, 317 are coupled to a corresponding one of gears 274, 294, 314. More specifically, spacer 277 is coupled to gear 274, spacer 297 is coupled to gear 294, and spacer 317 is coupled to gear 314. Illustratively, gears 274, 294, 314 are fixedly coupled to their respective one of spacers 277, 297, 317 by at least one fastener. Accordingly, spacers 277, 297, 317 are displaced about platform axis 271 with their corresponding one of gears 274, 294, 314. In addition, each of spacers 277, 297, 317 includes at least one magnet 252a. Illustratively, magnets 252a are received within a recess of an outer circumferential edge of spacers 277, 297, 317. In the exemplary embodiment shown in FIG. 33, spacers 277, 297, 317 includes a plurality of magnets 252a equally spaced about an outer circumferential edge of spacers 277, 297, 317. Spacers 277, 297, 317 may also include a magnet 252b that is of greater magnetic strength than magnets 252a.

Hub 240 is also adapted to support platform 270 and turret 290. In the exemplary embodiment shown, platform 270 and gear 274 are fixedly coupled to hub 240. Accordingly, hub 240 rotates about platform axis 271 with platform 270 following actuation of gear 374. Mounting adapter 222, however, remains stationary as hub 240 and platform 270 rotate about platform 270 because lower portion 230 of mounting adapter 222 is rotationally decoupled from hub 240.

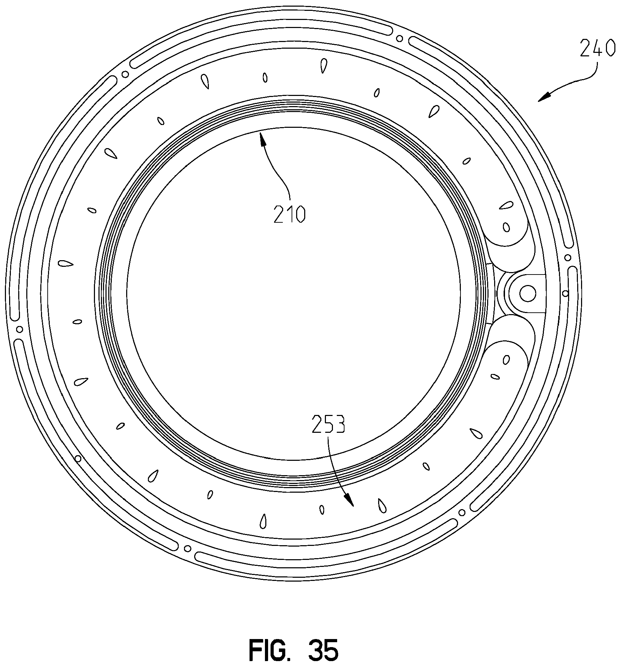

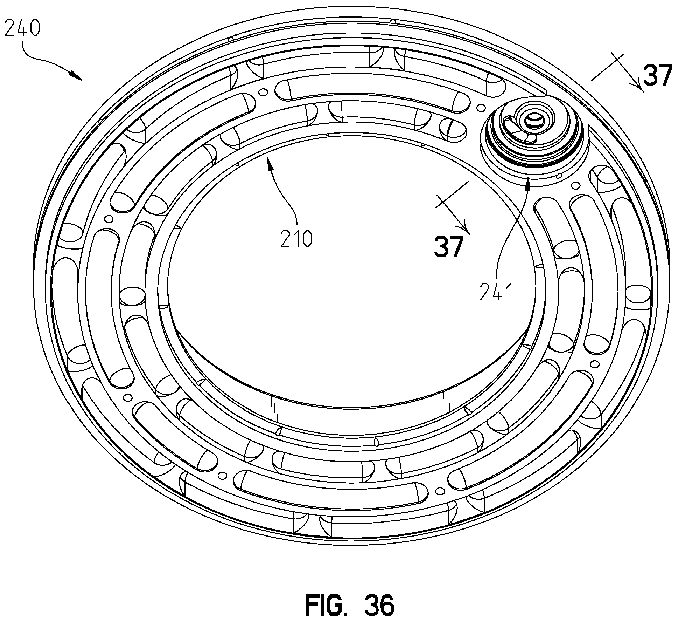

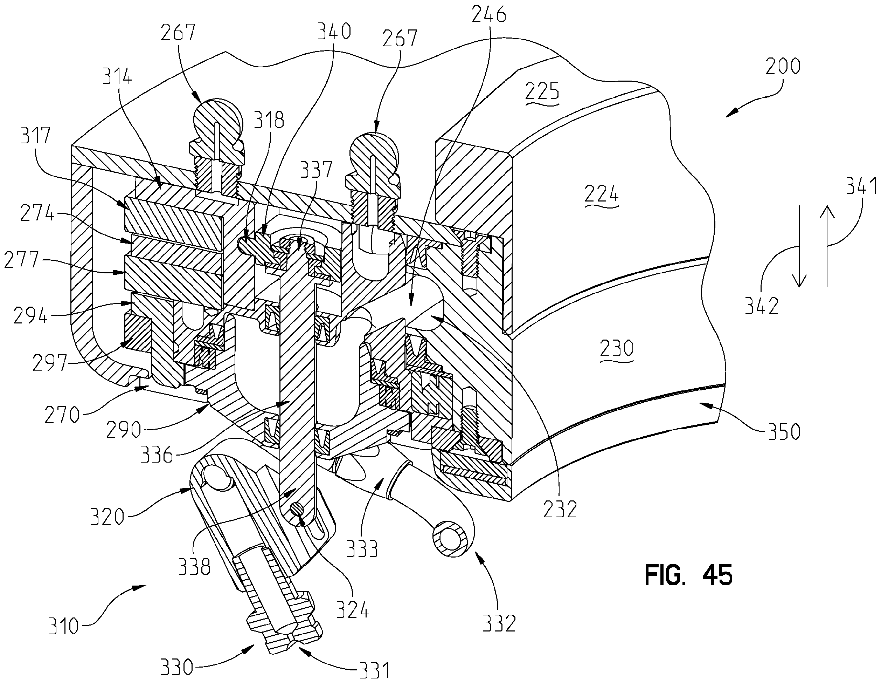

Referring specifically to FIGs. 33, 35, and 36, hub 240 also includes a turret recess 241 configured to rotatably support turret 290 for rotation about turret axis 291. Turret recess 241 is located opposite cover 260 and is fluidly coupled to circumferential groove 232. As best shown in FIGs. 44 through 46, hub 240 illustratively includes a fluid passageway 246 fluidly coupling a turret coolant reservoir 302 of turret 290 and circumferential groove 232. Thus, fluid passageway 246 permits coolant to be transferred from circumferential groove 232 to turret 290 from any angular position as platform 270 and hub 240 rotate together about platform axis 271.

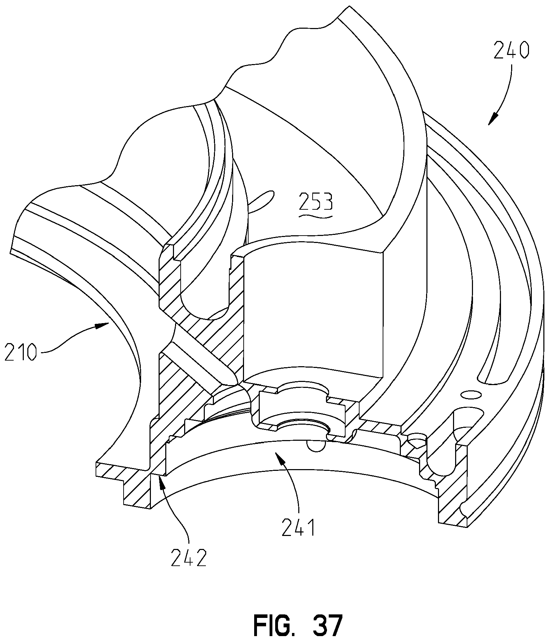

As best shown in FIG. 37, turret recess 241 includes a seating shoulder 242 against which a seating flange 309 of turret 290 (see FIG. 39) abuts when turret 290 is received within turret recess 241. As a result, the insertion depth of turret 290 into turret recess 241 is controlled, and engagement features 301 of turret 290 can engage the inner engagement features 296 of gear 294. Referring back to FIG. 33, a bearing 243, a seal 244, and a seal backing plate 245 are received in turret recess 241 intermediate turret 290 and hub 240. Bearing 243 permits relative rotational motion between turret 290 and hub 240, while seal 244 provides a sealing surface between turret 290 and turret recess 241. Seal 244 is illustratively a high-pressure seal configured to prohibit coolant from leaking between turret 290 and turret recess 241. Seal backing plate 245, illustratively a thrust washer, provides seal 244 with a stationary sealing surface and rotationally decouples seal 244 from bearing 243.

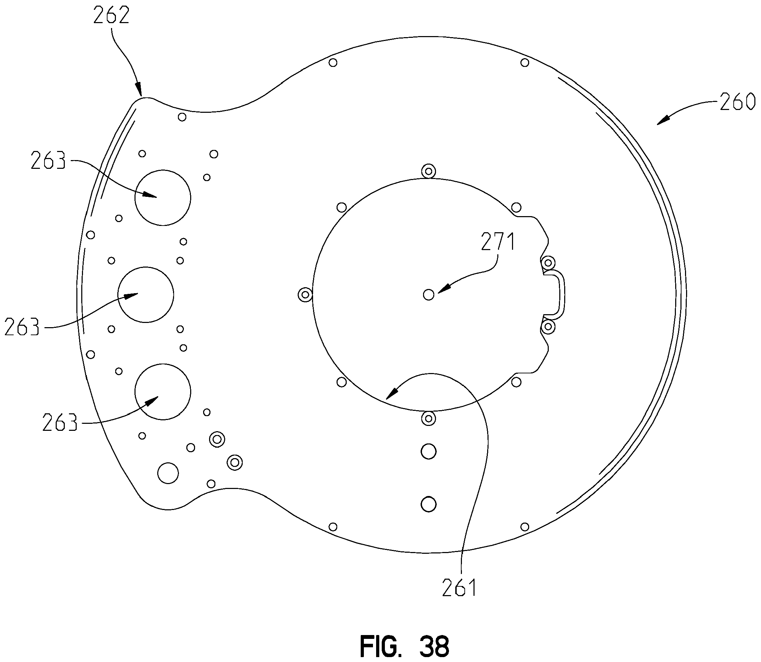

Turning now to FIG. 38, cover 260 is shown in more detail. In the exemplary embodiment shown, cover 260 comprises a generally ring-shaped body. More specifically, cover 260 illustratively includes an opening 261 sized and shaped to receive at least a portion of upper portion 224 of mounting adapter 222. Thus, opening 261 is generally coaxial with platform axis 271. Cover 260 further includes a motor mounting flange 262 adapted to fixedly support electrical motors 237a, 238a, 239a. For example, motor mounting flange 262 includes a plurality of motor drive shaft apertures 263 that permit a respective one of drive shafts 237b, 238b, 239b to pass through. Accordingly, cover 260 is mounted axially intermediate electrical motors 237a, 238a, 239a and spur gears 237c, 238c, 239c along platform axis 271.

Referring back to FIGs. 14, 15, and 22, motor mounting flange 262 is illustratively further adapted to support a plurality of sensors 265. Sensors 265 are supported within a frame 264 coupled to motor mounting flange 262. Sensors 265 are configured to detect the magnetic fields of the magnets 252a, 252b supported within spacers 277, 297, 317. For example, sensors 265 are illustratively reed switches or Hall effect sensors. In another embodiment, sensors 265 may comprise electro-optical sensors, linear encoders, or position sensors that permit measurement of the displacement of gears 274, 294, 314 about platform axis 271.

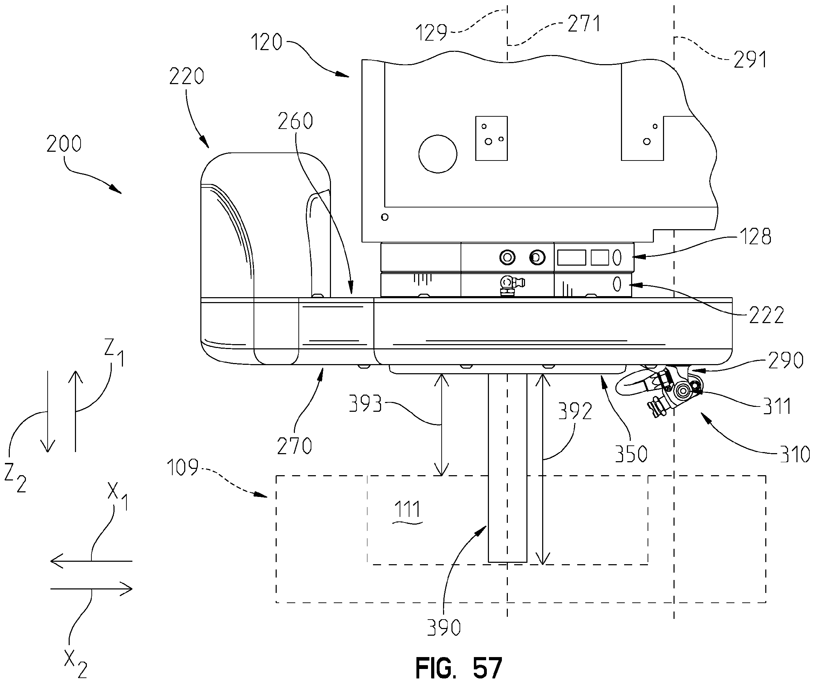

In the exemplary embodiment shown, dynamic coolant delivery system 200 comprises sensors 265a, 265b, 265c. Sensor 265a is positioned to detect the magnetic field of magnets 252a, 252b of spacer 317, sensor 265b is positioned to detect the magnetic field of magnets 252a, 252b of spacer 277, and sensor 265c is positioned to detect the magnetic field of magnets 252a, 252b of spacer 297. Because spacers 277, 297, 317 are fixedly coupled to a respective one of gears 274, 294, 314, sensors 265a, 265b, 265c may be used to measure a rotational speed or an angular position of gears 274, 294, 314 relative to platform axis 271. Moreover, sensors 265a, 265b, 265c may be used to measure a neutral or home position of gears 274, 294, 314. For example, magnets 252b, which in the exemplary embodiment shown have a greater magnetic field strength than magnets 252a, illustratively correspond to an angular position of gears 274, 294, 314 about platform axis 271 that is a neutral or home position of platform 270, turret 290, and nozzle 310 about their respective axes of rotation (see, for example, FIG. 57). Therefore as shown in FIG. 22, platform 270, turret 290, and nozzle 310 will be in the neutral position when magnets 252b are aligned with sensors 265a, 265b, 265c. Accordingly, sensors 265a, 265b, 265c may be used to orient platform 270, turret 290, and nozzle 310 to this home position.

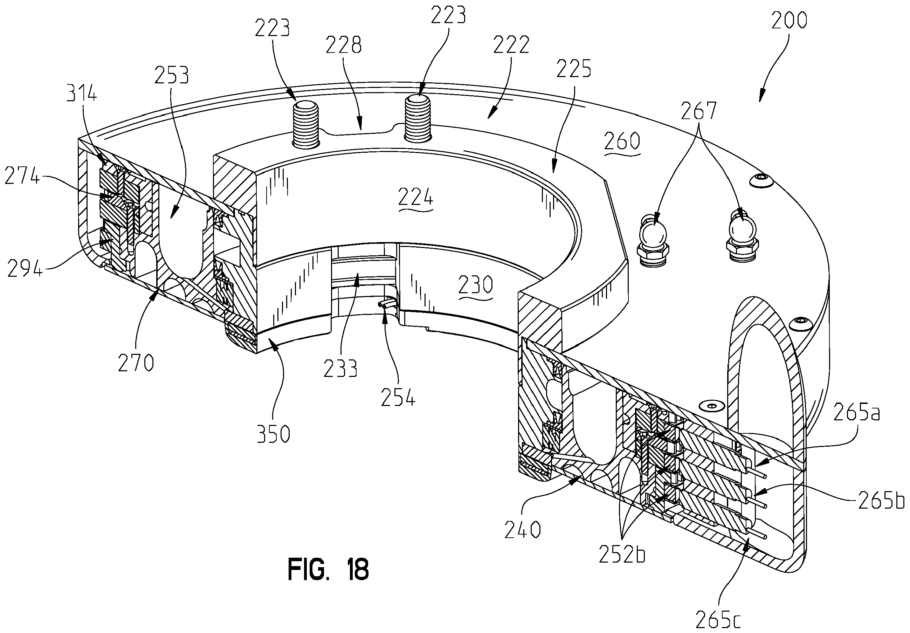

Referring back to FIG. 18, at least one grease fitting 267 is coupled to cover 260. In the exemplary embodiment shown, two grease fittings 267 are coupled to cover 260. Grease fittings 267 are fluidly coupled to hub 240 to deliver lubrication to the internal operative components of dynamic coolant delivery system 200. More specifically, at least one of grease fittings 267 is fluidly coupled to a lubrication reservoir 253 of hub 240. Lubrication reservoir 253 is configured to disperse lubrication to at least thrust washer 258. Lubrication illustratively comprises a fluid designed to reduce friction between surfaces.

Referring now to FIG. 33, platform 270 is shown in more detail. In the exemplary embodiment shown, platform 270 comprises two generally hemispherically-shaped plates 278a, 278b. In an alternative embodiment, platform 270 may comprise a unitary body. Illustratively, platform 270 is fixedly coupled to hub 240 opposite cover 260. More specifically, platform 270 is configured to receive at least one fastener 281 for coupling platform 270 to hub 240. In addition, each of plates 278a, 278b includes a relief 282a, 282b configured to permit turret 290 to freely rotated about turret axis 291. To that end, dynamic coolant delivery system 200 includes a bearing 283, illustratively a thrust washer, positioned intermediate turret 290 and platform 270 to permit relative motion between turret 290 and platform 270.

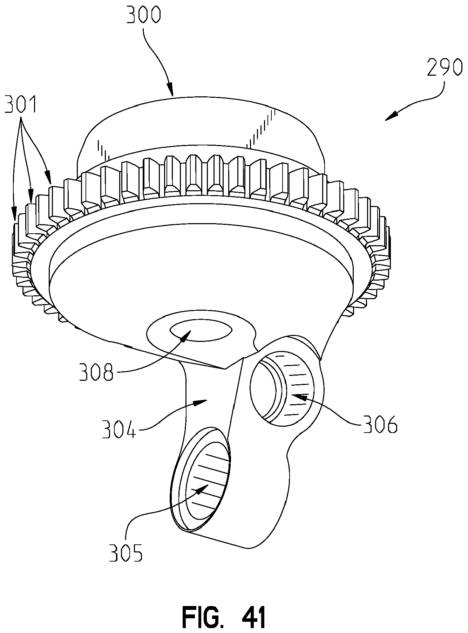

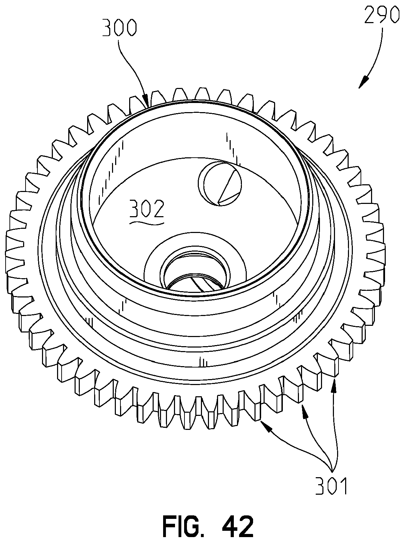

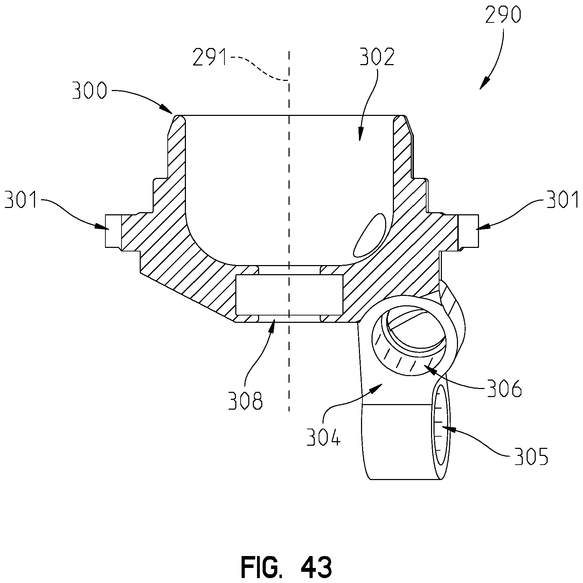

Turning now to FIGs. 39 through 43, turret 290 and nozzle 310 are shown in more detail. Turret 290 includes a turret body 300 having engagement features 301 and a turret coolant reservoir 302. Engagement features 301 extend radially outwardly from turret coolant reservoir 302 and are generally orthogonal to turret axis 291. Engagement features 301 are configured to engage inner engagement features 296 of gear 294.

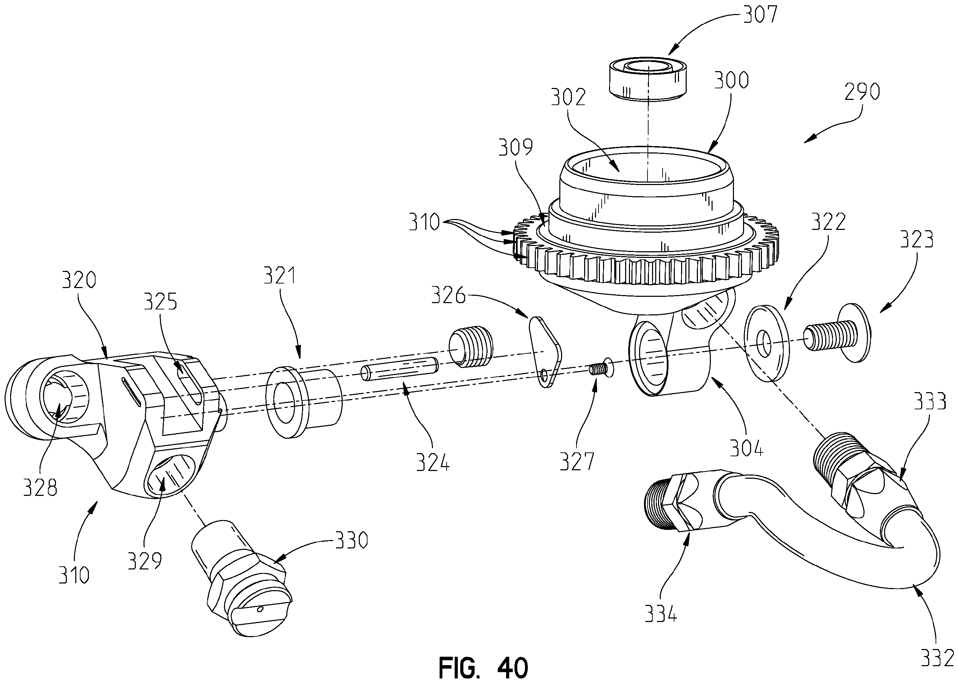

As shown in FIGs. 40 through 43, turret body 300 also includes a nozzle arm 304 extending axially away from turret coolant reservoir 302 and parallel to turret axis 291. Nozzle arm 304 is adapted to pivotally support nozzle 310 and to provide a fluid path from turret coolant reservoir 302 to nozzle 310. In the exemplary embodiment shown, nozzle arm 304 includes an aperture 305 for receiving nozzle 310. Illustratively, aperture 305 is orientated generally perpendicular to turret axis 291 and is coaxial with nozzle axis 311. Nozzle arm 304 also includes an aperture 306 sized and configured to receive a first coupling 333 of a nozzle conduit 332 in fluid communication with nozzle 310. Aperture 306 and nozzle conduit 332 form a fluid passageway from turret coolant reservoir 302 to nozzle 310. In an alternative embodiment, turret coolant reservoir 302 may include aperture 306 rather than nozzle arm 304.

Nozzle 310 is pivotally coupled to nozzle arm 304 of turret 290 and includes a nozzle base 320 configured to releasably support a nozzle tip 330. Nozzle base 320 is adapted to pivotally couple to nozzle arm 304. In the exemplary embodiment shown, a bushing 321 is received within aperture 305 of nozzle arm 304. Bushing 321 is rotatably coupled to nozzle base 320 and secured within aperture 305 for pivoting about nozzle axis 311 by a washer 322 and a fastener 323. Nozzle base 320 includes a pin 324 slideably secured in a slot 325 with a backing plate 326 and a fastener 327. The location of slot 325 is offset from nozzle axis 311. Nozzle base 320 also includes an aperture 328 sized and configured to receive a second coupling 334 of nozzle conduit 332.

Nozzle tip 330 is received within a nozzle tip opening 329 of nozzle base 320. Nozzle tip opening 329 is in fluid communication with aperture 328 of nozzle base 320. Referring momentarily back to FIG. 39, nozzle tip 330 includes at least one outlet orifice 331 sized and shaped to disperse coolant in a predetermined pattern. Nozzle tip 331 is interchangeable with off-the-shelf nozzle tips having varying spray patterns, for example, a solid stream, a narrow dispersion hollow cone, a wide dispersion hollow cone, a full cone, a spiral full cone, or a flat fan. An advantage, among others, of an interchangeable nozzle tip 330 is that the stream of coolant delivered to the cutting tool or the workpiece may be customized for the specific manufacturing process for which CNC machine 100 is to be used.

As shown in FIG. 40, first coupling 333 is coupled to a first end of nozzle conduit 332. Nozzle conduit 332 also includes a second coupling 334 coupled to a second end of nozzle conduit 332. The second end of nozzle conduit 332 is opposite the first end. Illustratively, couplings 333, 334 are threadably received within apertures 306, 328, respectively. In other embodiments, couplings 333, 334 may be coupled to apertures 306, 328 in several ways, for example, with push-to-pull compression fittings, quick connect fittings, twist-lock fittings, or barbed fittings. In another embodiment, apertures 306, 328 may instead comprise protrusions configured to be, for example, threadably received within couplings 333, 334.

In the exemplary embodiment shown, nozzle conduit 332 comprises a flexible hose routed externally of nozzle 310. In an alternative embodiment, nozzle conduit 332 may comprise an internal passageway between turret coolant reservoir 302 and nozzle 310. Therefore in some embodiments, nozzle conduit 332 may be routed internally through nozzle arm 304 of turret body 300.

Referring now to FIGs. 44 through 46, pin 324 pivotally couples a linkage 336 to nozzle base 320. In turn, linkage 336 is coupled to a carriage 340 that is supported within helical groove 318 of gear 314. Carriage 340 illustratively includes a protrusion that is received within helical groove 318. In the exemplary embodiment shown, linkage 336 comprises an elongated member rotatably coupled to carriage 340 at a first end 337 of linkage 336 and pivotally coupled to nozzle 310 at a second end 338 opposite first end 337. For example, second end 338 of linkage 336 includes an aperture that receives pin 324. Therefore, linkage 336 will rotate about turret axis 291 when turret 290 and nozzle 310 rotate about turret axis 291.

In addition, linkage 336 is illustratively coaxial with and moves along turret axis 291. As a result, linkage 336 passes through a central portion of turret body 300. Accordingly, turret body 300 includes an axially lower opening 308 that permits linkage 336 to pass through turret body 300. Turret body 300 includes at least one seal 307 configured to seal axially lower opening 308 in turret body 300. Seal 307 provides a sealing interface with linkage 336 in order to prohibit at least some coolant from escaping from turret coolant reservoir 302.

Carriage 340 and linkage 336 cooperate to transform relative rotational motion of gear 314 about platform axis 271 into pivotal motion of nozzle 310 about nozzle axis 311. More specifically, carriage 340 is fixed with respect to its location on hub 240. Therefore, when either gear 314 rotates about platform axis 271 relative to gear 374, or gear 374 rotates about platform axis 271 relative to gear 314, relative motion is developed between gears 374, 314. As a result, there is relative motion between helical groove 318 of gear 314 and carriage 340. The contour of helical groove 318 displaces carriage 340 in axial directions 341, 342.

Displacement of carriage 340 in axial directions 341, 342 results in similar displacement of linkage 336 in axial directions 341, 342. When linkage 336 is displaced in axial directions 341, 342, linkage 336 acts upon pin 324 and nozzle base 320. For example, when linkage 336 is displaced in axial direction 342, linkage 336 presses pin 324 axially away from hub 240. Similarly, when linkage 336 is displaced in axial direction 341, linkage 336 pulls pin 324 axially toward hub 240. Because pin 324 is offset from nozzle axis 311, linkage 336 pressing or puling pin 324 results in nozzle base 320 pivoting about nozzle axis 311. Thus when carriage 340 and linkage 336 are displaced in axial direction 342, nozzle 310 pivots about nozzle axis 311 in direction 313 (see FIG. 54). Correspondingly when carriage 340 and linkage 336 are displaced in axial direction 341, nozzle 310 pivots about nozzle axis 311 in direction 312 (see FIG. 54). FIGs. 44 through 46 illustrate a sequential axial displacement of carriage 340 and linkage 336 and the subsequent pivoting of nozzle 310 about nozzle axis 311.

Turning now to FIGs. 47 through 52, dynamic coolant delivery system 200 includes a light source capable of illuminating at least one of the cutting tool or the workpiece. In the exemplary embodiment, light source illustratively comprises a light ring 350 removably coupled to housing 220 adjacent platform 270. Illustratively, light ring 350 is removably coupled to thrust washer 258. Light ring 350 has a generally circular body 351 of similar diameter to central opening 210. To that end, light ring 350 is illustratively arranged coaxial with platform axis 271. Body 351 illustratively includes a plurality of apertures 352 configured to receive a fastener 353 for removably coupling light ring 350 to lower portion 230 of mounting adapter 222. In an alternative embodiment, body 351 may include at least one locking tab or snap fitting configured to engage at least one mating connector, such as a slot, coupled to housing 220. In some embodiments, light ring 350 is integrally formed with housing 220.

Body 351 illustratively has a generally U-shaped transverse cross-section and includes a recess 354 similar to recesses 228, 233. That is, recess 354 is angularly aligned with recesses 228, 333 relative to platform axis 271 and is configured to receive, for example, the control wires for an additive tool. In addition, control or power cables for light ring 350 may be routed through recess 354. In the exemplary embodiment shown, light ring 350 includes a plurality of light sources 356, illustratively light emitting diodes ("LEDs"), coupled to body 351. Light sources 356 are spaced equally and circumferentially about platform axis 271. Each of light sources 356 is electrically coupled to a printed circuit board ("PCB") 358 received and supported within body 351. PCB 358 may include a controller configured to control, for example, the brightness of light sources 356. Light ring 350 further includes a gasket 360 received and supported within body 351. In the exemplary embodiment shown, PCB 358 is positioned intermediate light sources 363 and gasket 360. Gasket 360 provides a seal between housing 220 and PCB 358 in order to protect PCB 358 from, for example, coolant and swarf during operation. As shown in FIG. 47, gasket 360 interfaces with an axially lower surface of thrust washer 258 to provide a seal. Gasket 360 may also electrically insulate PCB 358.

In an alternative embodiment, the light source may comprise at least one spotlight having a plurality of LEDs coupled to the housing 220. In another embodiment, the light source may be coupled to platform 270. In a further embodiment, the light source is provided as an accessory to dynamic coolant delivery system 200. Accordingly, dynamic coolant delivery system 200 may include a removable trim piece where light source couples to housing 220.

Dynamic coolant delivery system 200 may be communicatively coupled to an independent control console or to control console 102. Thus in one embodiment, platform 270, turret 290, and nozzle 310 may be rotated about their respective axis in response to a control signal from the independent control console. In another embodiment, platform 270, turret 290, and nozzle 310 may be rotated about their respective axes in response to a control signal from CNC machine 100. In a variation of this later embodiment, CNC machine 100 may unilaterally control dynamic coolant delivery system 200. That is, platform 270, turret 290, and nozzle 310 may be dynamically repositioned or actuated about their respective axes based on, for example, the type or shape of cutting tool, the cutting path or current motion vector of the cutting tool, or the type of manufacturing process being employed (e.g., pocket milling, side milling, extruding, etc.).

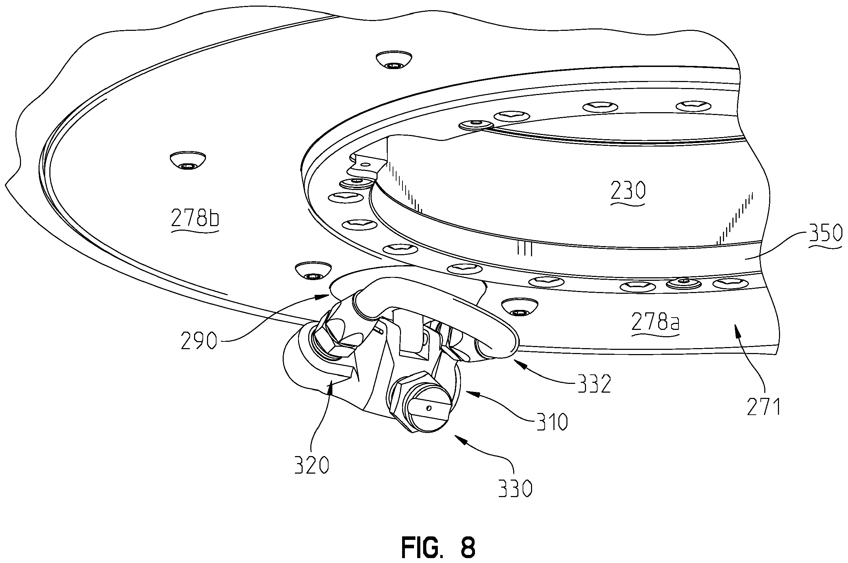

The operation of dynamic coolant delivery system 200 during operation of CNC machine 100 is discussed in detail with reference to FIGs. 8, 9, and 53 through 57. As discussed previously herein in connection with FIGs. 8 and 9, platform 270 is rotatable about platform axis 271, turret 290 is rotatable about turret axis 291, and nozzle 310 is pivotable about nozzle axis 311. In the exemplary embodiment shown, turret axis 291 is illustratively spaced radially apart from and substantially parallel to platform axis 271. Additionally, nozzle axis 311 is non-parallel to either of platform axis 271 or turret axis 291. In the exemplary embodiment shown, nozzle axis 311 is orthogonal to each of platform axis 271 and turret axis 291. The movement of platform 270, turret 290, and nozzle 310 about their respective axes is due to the actuation of gears 374, 394, 314 about platform axis 271. Furthermore, gears 374, 394, 314 are independently actuable about platform axis 271. For example, turret 290 may be rotated about platform axis 271 without turret 290 rotating about turret axis 291.

FIG. 53 diagrams a trajectory 279 of turret 290 about platform axis 271 in directions 272, 273. Turret 290 is also rotatable about turret axis 291 in directions 292, 293. In the view shown in FIG. 53, directions 272, 292 may be considered clockwise and directions 273, 293 may be considered counterclockwise about their respective axes. Turret 290 is orientated such that nozzle 310 and a respective coolant stream 380 (illustrated in broken line) points toward a cutting tool 390 (illustrated in broken line).

FIG. 54 diagrams the pivoting of nozzle 310 about nozzle axis 311 in directions 312, 313. In the view shown in FIG. 54, direction 312 may be considered upward (or clockwise) and direction 313 may be considered downward (or counterclockwise) about nozzle axis 311. In addition, cutting tool 390 illustratively includes an axial extent 391 extending along a longitudinal axis of cutting tool 390. In the exemplary embodiment shown in FIG. 54, the longitudinal axis of cutting tool 390, illustratively axis 129, and platform axis 271 are coaxial.

During startup of the manufacturing process, dynamic coolant delivery system 200 may be adjusted so as to return platform 270, turret 290, and nozzle 310 to the orientation shown in FIGs. 53 and 57. This orientation may illustratively be the neutral or home orientation of dynamic coolant delivery system 200. In order to return platform 270, turret 290, and nozzle 310 to this neutral orientation, gears 374, 394, 314 are rotated about platform axis 271 until sensors 265a, 265b detect a magnetic field strength corresponding to magnets 252b positioned radially adjacent sensors 265a, 265b. Because gears 374, 394, 314 are capable of rotating about platform axis 271 independently of one another, gears 374, 394, 314, and therefore magnets 252b, may be angularly displaced about platform axis 271 at different locations. Thus, gears 374, 394, 314 may stop rotating about platform axis 271 at different times relative to one another during the return to the neutral orientation.

From the above description of exemplary operations of dynamic coolant delivery nozzle 200, it is understood that articulation of platform 270, turret 290, and nozzle 310 about their respective axes is illustratively controlled by the rotation of gears 374, 394, 314 about platform axis 271. To this end, the relative motion of gears 374, 394, 314 with respect to one another determines the rotation of platform 270, turret 290, and nozzle 310 about their respective axes. For example, if gears 374, 394, 314 are each rotating about platform axis 271 at the same rotational speed (i.e., the relative motion between gears 374, 394, 314 is zero), turret 290 and nozzle 310 will rotate about platform axis 271. Turret 290 and nozzle 310, however, will not rotate about turret axis 291 as there is no relative motion between gears 374, 394. Thus, nozzle 310 will continue to point in its initial direction as it rotates about platform axis 271. For example, if nozzle 310 was initially pointed at cutting tool 390, then nozzle 310 will remain pointed at cutting tool 390 while it rotates about platform axis 271. Furthermore if there is no relative motion between gears 374, 314, then nozzle 310 will not pivot about nozzle axis 311. Instead, carriage 340 will remain in the same spot in helical groove 318 as gear 314 rotates about platform axis 271.

In order for turret 290 and nozzle 310 to rotate about turret axis 291, relative motion must be developed between gears 274, 294. Similarly, relative motion between gears 274, 314 is required in order for nozzle 310 to pivot about nozzle axis 311. Relative motion between gears 374, 394, 314 may develop regardless of the one of gears 374, 394, 314 that rotates about platform axis 271. That is, nozzle 310 may pivot about nozzle axis 311 if gear 314 rotates about platform axis 271 and gear 274 remains stationary, if gear 274 rotates about platform axis 271 and gear 314 remains stationary, or if gear 314 rotates about platform axis 271 at a different rotational speed than gear 274 rotates about platform axis 271. Thus, the development of the relative motion between gears 374, 394, 314 will be based on the desired articulation of platform 270, turret 290, and nozzle 310.

In addition, the direction in which gears 374, 394, 314 rotate about platform axis 271 controls the direction platform 270, nozzle 310, and turret 290 rotate about platform axis 271. For example, if gears 374, 394, 314 rotate counterclockwise together about platform axis 271 with zero relative motion, then turret 290 and nozzle 310 will rotate counterclockwise about platform axis 271. Similarly, if gears 374, 394, 314 rotate clockwise together about platform axis 271 with zero relative motion, then turret 290 and nozzle 310 will rotate clockwise about platform axis 271. In an alternative embodiment, the direction platform 270, turret 290, or nozzle 310 rotates about their respective axis is opposite the direction that gears 374, 394, 314 rotate about platform axis 271.

Relative motion between gears 274, 314 will result in nozzle 310 pivoting in directions 312, 313 as gears 274, 314 rotate about platform axis 271. This is a result of the helical nature of helical groove 318. As a result, the initial direction that nozzle 310 pivots in response to relative motion between gears 274, 314 is dependent upon the initial location of carriage 340 in helical groove 318 and the direction of rotation of gears 274, 314 about platform axis 271. In order to maintain a certain angular orientation of nozzle 310 with respect to nozzle axis 311, there must be zero relative motion between gears 274, 314 once that angular orientation has been achieved.

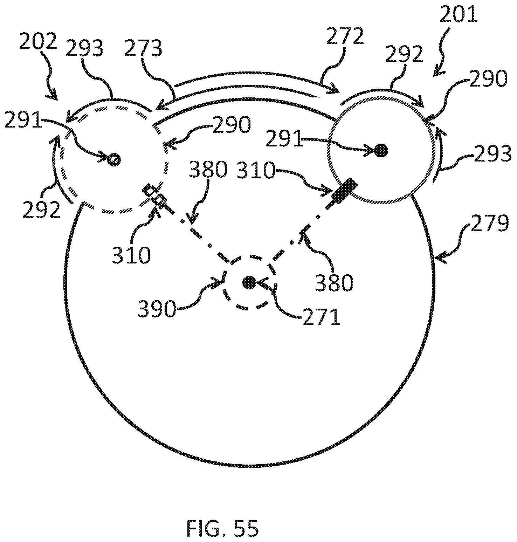

FIG. 55 illustrates a first orientation 201 and a second orientation 202 (illustrated in broken line) of turret 290 and nozzle 310 relative to cutting tool 390. First and second orientations 201, 202 are examples of possible orientations of turret 290 and nozzle 310 relative to cutting tool 390 and are not the only possible orientations of turret 290 and nozzle 310. Moreover, the actuations of turret 290 and nozzle 310 described in connection with FIG. 55 are examples of possible actuations and not the only possible actuations of turret 290 and nozzle 310.

First orientation 201 is defined by an angular position of turret 290 and nozzle 310 with respect to platform axis 271. In the exemplary embodiment shown, nozzle 310 is pointed at cutting tool 390 in first orientation 201. Therefore, nozzle 310 is capable of delivering coolant to a first axial location of cutting tool when turret 290 and nozzle 310 are in first orientation 201.

Turret 290 and nozzle 310 are displaced along trajectory 279 in direction 273 to second orientation 202 when gears 274, 294, 314 rotate counterclockwise about platform axis 271 with zero relative motion. Second orientation 202 is angularly displaced from first orientation 201 with respect to platform axis 271. Because there is zero relative motion between gears 274, 294, 314 as they rotate counterclockwise about platform axis 271, nozzle 310 will remain pointed at cutting tool 390 and capable of delivering coolant to the first axial location of cutting tool when turret 290 and nozzle 310 are traversing to second orientation 202. Thus, nozzle 310 will track cutting tool 390 throughout its rotation about platform axis 271. An advantage, among others, of having nozzle 310 track cutting tool 390 is that coolant can be continuously supplied to cutting tool 390. Moreover, nozzle 310 is capable of delivering coolant to the first axial location of cutting tool 390 when turret 290 and nozzle 310 are in second orientation 202. In some embodiments, turret 290 and nozzle 310 are cyclically rotated counterclockwise and clockwise about platform axis 271 or between first orientation 201 and second orientation 202 in order to provide a sweeping delivery of coolant to cutting tool 390. In order to cyclically rotate turret 290 and nozzle 310, gears 274, 294, 314 are likewise cyclically rotated counterclockwise and clockwise about platform axis 271 with zero relative motion.

In a variation of the orientations shown in FIG. 55, relative motion between gears 274, 294 and gear 314 occurs as gears 274, 294 rotate about platform axis 271 with zero relative motion from first orientation 201 to second orientation 202. As a result, nozzle 310 will pivot about nozzle axis 311 to deliver coolant to a second axial location of cutting tool 390. The second axial location of cutting tool 390 is spaced axially apart from the first axial location along axial extent 391 of cutting tool 390. In such an embodiment, turret 290 and nozzle 310 are rotating about platform axis 271 and nozzle 310 is pivoting about nozzle axis 311 simultaneously. Alternatively, nozzle 310 may be pivoted about nozzle axis 311 only when turret 290 and nozzle 310 are in either first orientation 201 or second orientation 202. In some embodiments, nozzle 310 may be cyclically pivoted about nozzle axis 311 in order to continuously deliver coolant along at least a portion of axial extent 391 or between the first axial location and the second axial location of cutting tool 390.

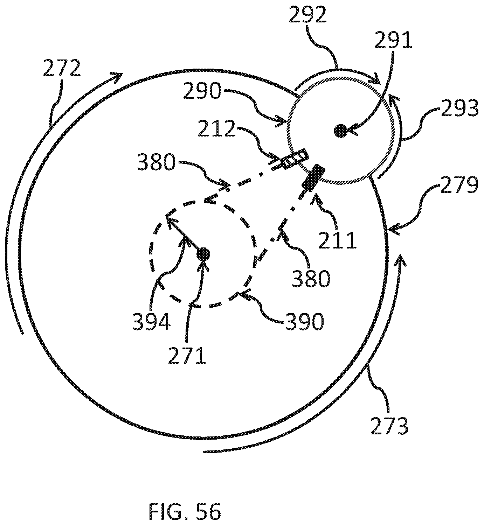

FIG. 56 illustrates a first orientation 211 and a second orientation 212 (illustrated in broken line) of turret 290 and nozzle 310 relative to cutting tool 390 having an outer diameter 394. First and second orientations 211, 212 are examples of possible orientations of turret 290 and nozzle 310 relative to turret axis 291 and are not the only possible orientations of turret 290 and nozzle 310. Moreover, the actuations of turret 290 and nozzle 310 described in connection with FIG. 56 are examples of possible actuations and not the only possible actuations of turret 290 and nozzle 310.

Cutting tool 390 may comprise a variety of outer diameters. Outer diameter 394 of cutting tool 390 as shown in FIG. 56 is illustratively larger to represent a different outer diameter of cutting tool 390 than previously illustrated. Outer diameter 394 may be dependent upon the type of cutting tool (e.g., face mill, end mill, etc.) or the manufacturing process (e.g., face milling, plunge milling, etc.). It is contemplated that the actuations of turret 290 and nozzle 310 described in connection with FIG. 56 may generally be utilized with any reasonably sized outer diameter of a tool used in additive and subtractive manufacturing processes.

First orientation 211 is defined by an angular position of nozzle 310 relative to turret axis 291. In the exemplary embodiment shown, nozzle 310 is pointed at a first tangential location of outer diameter 394. Moreover, nozzle 310 is capable of delivering coolant to a first axial location of cutting tool 390 when turret 290 and nozzle 310 are in first orientation 211. Second orientation 212 is angularly displaced from first orientation 211 relative to turret axis 291. More specifically, turret 290 and nozzle 310 have rotated clockwise about turret axis 291 from first orientation 211 to second orientation 212. When turret 290 and nozzle 310 are in second orientation 212, nozzle 310 is pointed at a second tangential location of outer diameter 394 of cutting tool 390. Thus, nozzle 310 remains capable of delivering coolant to the first axial location of cutting tool 390 when turret 290 and nozzle 310 are in second orientation 212. Turret 290 and nozzle 310 are rotated clockwise about turret axis 291 when gear 294 is rotated clockwise about platform axis 271 and gears 274, 314 remain stationary about platform axis 271. Because gears 274, 314 remain stationary, turret 290 and nozzle 310 do not rotate about platform axis 271 and nozzle 310 does not pivot about nozzle axis 311.

In some embodiments, turret 290 and nozzle 310 are cyclically rotated clockwise and counterclockwise about turret axis 291 or between first orientation 211 and second orientation 212 in order to provide a sweeping delivery of coolant to cutting tool 394. In order to cyclically rotate turret 290 and nozzle 310 about turret axis 291, gear 294 is likewise cyclically rotated clockwise and counterclockwise about platform axis 271 while gears 274, 314 remain stationary about platform axis 271.

In a variation of the orientations shown in FIG. 56, nozzle 310 and turret 290 are rotated about platform axis 271 as described in connection with FIG. 55. In some embodiments, nozzle 310 and turret 290 are rotated about platform axis 271 and turret axis 291 simultaneously. Furthermore, nozzle 310 may be pivoted about nozzle axis 311 in order to deliver coolant to a second axial location of cutting tool 390. The second axial location of cutting tool 390 is spaced axially apart from the first axial location along axial extent 391 of cutting tool 390. In such an embodiment, turret 290 and nozzle 310 rotate about turret axis 291 and nozzle 310 pivots about nozzle axis 311 simultaneously. Alternatively, nozzle 310 may be pivoted about nozzle axis 311 only when turret 290 and nozzle 310 are in either first orientation 211 or second orientation 212 of FIG. 56. In some embodiments, nozzle 310 may be cyclically pivoted about nozzle axis 311 in order to continuously deliver coolant along at least a portion of axial extent 391 or between the first axial location and the second axial location of cutting tool 390.

The rotation of platform 270, turret 290, and nozzle 310 about their respective axes may be dependent upon the operation of cutting tool 390, including an effective tool length 393 of cutting tool 390 and the cutting path or current motion vector of cutting tool 390. FIG. 57 illustrates dynamic coolant delivery system 200 coupled to spindle head 120 and cutting tool 390 (illustrated in broken line) rotatably coupled to spindle head 120. A workpiece 109 (illustrated in broken line) is supported within workspace 108 (not shown), and cutting tool 390 is removing material from a pocket 111 (illustrated in broken line) in workpiece 109. At least one of spindle head 120 or workpiece 109 is movable in directions, X1, X2, directions Y1, Y2, and directions Z1, Z2 (see also FIG. 2).

Illustratively, the rotation of turret 290 and nozzle 310 about platform axis 271 generally follows the movement of spindle head 120 or workpiece 109 in directions X1, X2 and directions Y1, Y2. More specifically, the rotation of turret 290 and nozzle 310 about platform axis 271 is tied generally to the cutting path or current motion vector of spindle head 120 or workpiece 109. For example, if the current motion vector of spindle head 120 is in direction X2, turret 290 and nozzle 310 may be located in the angular orientation shown in FIG. 57 in order to supply coolant to a leading edge of the cutting tool 390. If the current motion vector of spindle head 120 changes to be in direction X1, each of gears 274, 294, 314 may be rotated about platform axis 271 so that turret 290 and nozzle 310 are located on the opposite side of cutting tool 390 from the orientation shown in FIG. 57. To this end, the circular nature of trajectory 279 of turret 290 and nozzle 310 about platform axis 271 means that turret 290 and nozzle 310 can be rotated to an angular orientation that is suitable for a current motion vector comprising, for example, both X and Y directions.

The rotational speed of gears 274, 294, 314 about platform axis 271 is largely dependent on the current motion vector of either spindle head 120 or workpiece 109. For example, gears 274, 294, 314 may rotate about platform axis 271 at a relatively low rotational speed when cutting tool 390 is cutting a circle or circular pocket of a sufficiently large diameter such that the current motion vector is incrementally changing in the X and Y directions. Conversely, gears 274, 294, 314 may rotate about platform axis 271 at a relatively high rotational speed when cutting tool 390 is cutting a circle or circular pocket of a sufficiently small diameter such that the current motion vector is abruptly changing in the X and Y directions. In one embodiment, gears 274, 294, 314 are capable of rotating about platform axis 271 at a maximum rotational speed of approximately 12 rotations per minute ("RPM"). In another embodiment, gears 274, 294, 314 are capable of rotating about platform axis 271 at a maximum rotational speed of approximately 6 RPM.

In addition, the rotation of turret 290 and nozzle 310 about turret axis 291 generally follows the outer diameter of the tool. As described above in connection with FIG. 56, the tool may comprise a variety of outer diameters. Thus, turret 290 and nozzle 310 may rotate about turret axis 291 in order to provide coolant to a tool having a large outer diameter. In some embodiments, CNC machine 100 may recognize the type or size of the tool and actuate gears 274, 294, 314 to rotate turret 290 and nozzle 310 about turret axis 291. In other embodiments, a user may select the outer diameter of the tool on control console 102 or an independent control console during the manufacturing process.

The rotation of the nozzle 310 about nozzle axis 311 generally follows the length of the tool. As described above in connection with FIG. 54, the tool may comprise a variety of tool lengths. Tool length is defined by the axial extent of the tool along axis 129 available for the selected manufacturing process. For example, the tool length of the cutting tool may be relatively short where the cutting tool is designed for face milling. On the other hand, the tool length of the cutting tool 390 may be relatively long where cutting tool is designed for end milling. FIG. 57 illustrates a possible tool length 392 of cutting tool 390. In order to provide coolant along at least a portion of tool length 392, nozzle 310 may be pivoted about nozzle axis 311. In some embodiments, CNC machine 100 may recognize the type or length of the tool and actuate gears 274, 294, 314 to pivot nozzle 310 about nozzle axis 311. In other embodiments, a user may select the tool length of the tool on control console 102 or an independent control console during the manufacturing process.

In addition, nozzle 310 may be rotated about nozzle axis 311 as an effective tool length of the tool changes. The effective tool length is the portion of the tool length of the tool that is accessible by nozzle 310 during the manufacturing process. For example, the entirety of tool length 392 of cutting tool 390 may be accessible by nozzle 310 when cutting tool 390 is used for an exterior subtractive manufacturing process such as side milling. In such a situation, the effective tool length is tool length 392 of cutting tool 390. Alternatively when cutting tool 390 plunges into workpiece 109 during a subtractive manufacturing process such as plunge milling, the effective tool length of cutting tool 390 decreases. After all, a portion of cutting tool 390, for example, the tip, is obstructed by workpiece 109 as cutting tool 390 plunges into workpiece 109.

FIG. 57 illustrates a possible effective tool length 393 of cutting tool 390. As the effective tool length of the tool changes, the angular extent to which nozzle 310 is pivoted about nozzle axis 311 may be adjusted according to the current effective tool length of the tool. More specifically, the angular extent to which nozzle 310 pivots about nozzle axis 311 may decrease as spindle head 120 moves in direction Z2 and cutting tool 390 begins entering workpiece 109. Conversely, as spindle head 120 movies in direction Z1, the angular extent to which nozzle 310 pivots about nozzle axis 311 may increase as cutting tool 390 begins exiting workpiece 109.

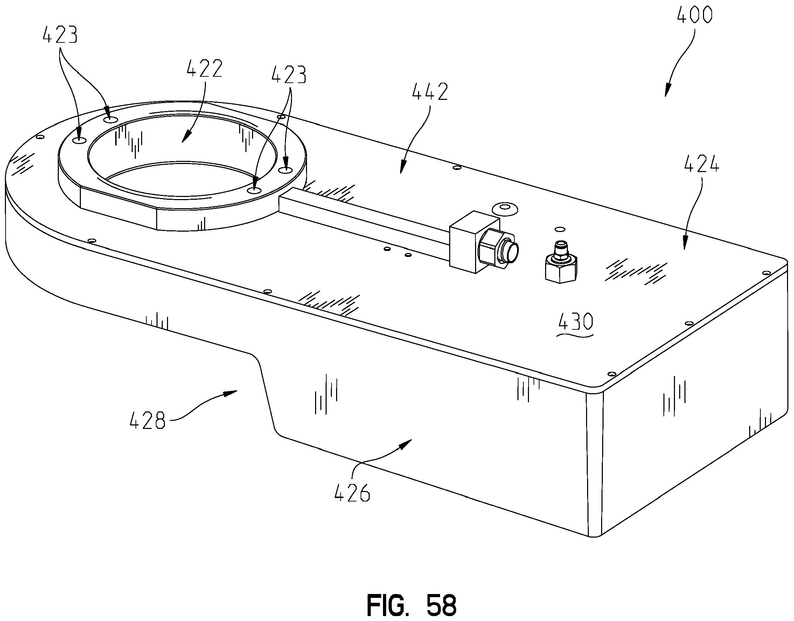

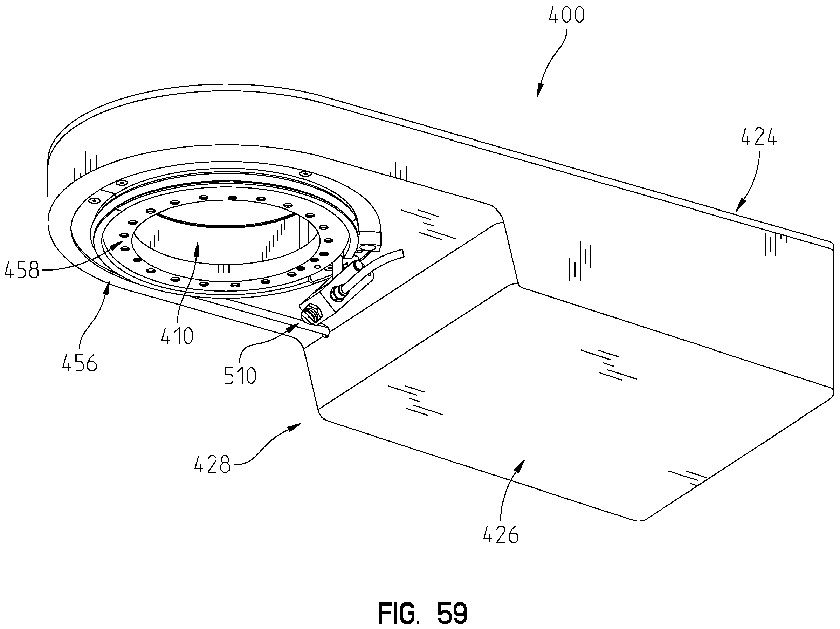

Turning now to FIGs. 58 and 59, an alternative exemplary dynamic coolant delivery system 400 is shown. Dynamic coolant delivery system 400 is configured to couple to spindle head 120 of CNC machine 100 (see FIGs. 1 and 2) and is fluidly coupled to a coolant reservoir. Dynamic coolant delivery system 400 is adapted to deliver coolant to at least one of a tool, such as a cutting tool, coupled to and rotatably supported by spindle head 120 and a workpiece secured to working surface 110 (see FIG. 2). In the exemplary embodiment shown, dynamic coolant delivery system 400 travels with spindle head 120 as spindle head 120 moves, for example, in the X1 and the X2 directions, the Y1 and the Y2 directions, or the Z1 and Z2 directions.

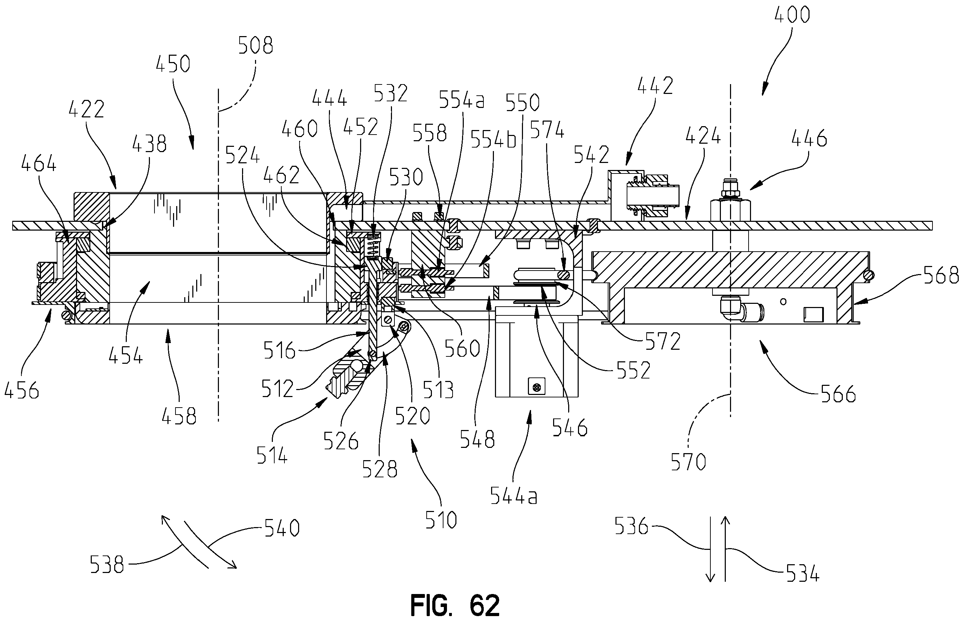

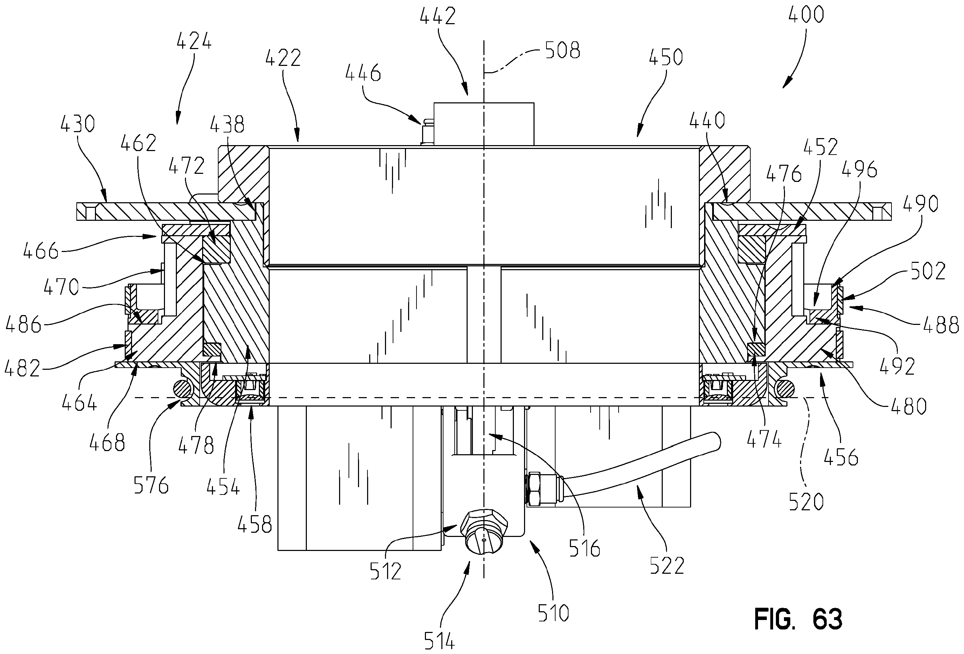

Like coolant delivery system 200, dynamic coolant delivery system 400 includes a housing 428, a platform 456, and a nozzle 510 supported by platform 456. Platform 456 and nozzle 510 are rotatable about a platform axis 508 (see FIG. 62), and nozzle 510 is pivotable about a nozzle axis 520 (see FIG. 63). Nozzle axis 520 is illustratively spaced apart from and non-parallel to platform axis 508. In the exemplary embodiment shown, nozzle axis 520 is perpendicular to platform axis 508. Platform 456 and nozzle 510 are rotated about platform axis 508 and nozzle 510 is pivoted about nozzle axis 520 to deliver coolant to, for example, at least one of a cutting tool and a workpiece.

Dynamic coolant delivery system 400 illustratively includes a mounting adapter 422 configured to removably couple to mounting flange 128 of lower portion 122 of spindle head 120. More specifically, mounting adapter 422 includes a plurality of mounting holes 423 that are adapted to releasably couple to, for example, a mounting bolt of mounting flange 128. In the exemplary embodiment shown, mounting adapter 422 includes four mounting holes 423; it is contemplated, however, that more or fewer than four mounting holes 423 may be used to couple dynamic coolant delivery system 400 to spindle head 120. In another embodiment, dynamic coolant delivery system 400 is integrally coupled to spindle head 120 to form a single piece construction. In another embodiment, dynamic coolant delivery system 400 is coupled to a stationary portion of CNC machine 100 within, for example, workspace 108. In a further embodiment, mounting adapter 422 is integrated with spindle head 120. An advantage, among others, of mounting adapter 422 is that dynamic coolant delivery system 400 remains stationary relative to spindle head 120 while a cutting tool (not shown) coupled to spindle 125 rotates about axis 129 during the manufacturing process.

Dynamic coolant delivery system 400 includes a central opening 410 defined at least in part by mounting adapter 422. Central opening 410 is sized and configured to allow a plurality of additive and subtractive tools supported by spindle head 120 to pass through during, for example, the manufacturing process or the interchanging of tools with spindle 125. Central opening 410 illustratively comprises a generally circular shape and is concentric with axis of rotation 129 of spindle head 120 when dynamic coolant delivery system 400 is mounted to spindle head 120. Further, central opening 410 is concentric with platform axis 508.

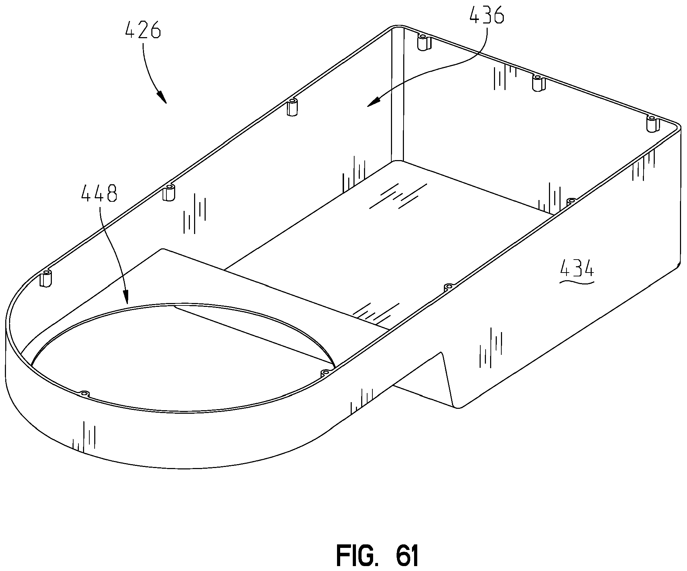

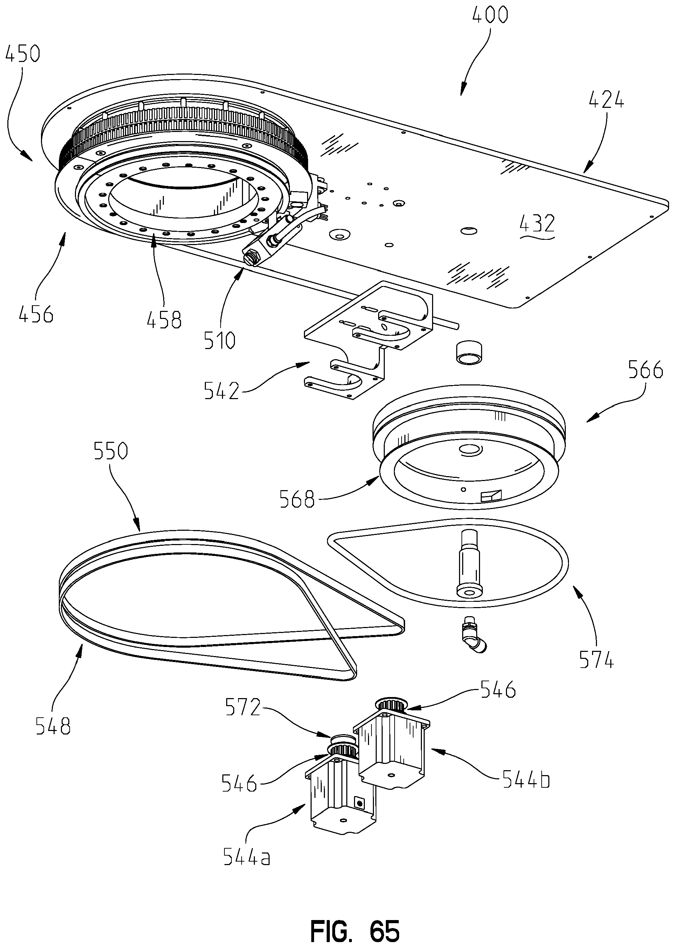

Mounting adapter 422 is supported by a top plate 424, which is configured to couple to a cover 426. Top plate 424 and cover 426 cooperate to define housing 428 of dynamic coolant delivery system 400. Top plate 424 has a generally planar profile and includes an upper surface 430 and a lower surface 432 (see FIG. 65) opposite the upper surface 430. As shown in FIG. 61, cover 426 includes an exterior surface 434 and interior surface 436. When cover 426 is coupled to top plate 424, exterior surface 434 of cover 426 and upper surface 430 of top plate 424 define an exterior of housing 428, and interior surface 436 of cover 426 and lower surface 432 of top plate 424 define an interior of housing 428. Like top plate 424, cover 426 includes an opening 448 that is concentric with opening 438 of top plate 424 when cover 426 is coupled to top plate 424.

Turning now to FIGs. 62 and 63, top plate 424 includes an opening 438 that receives and supports mounting adapter 422. More specifically, mounting adapter 422 includes a flange 440 that rests on upper surface 430 of top plate 424 when received within opening 438 of top plate 424. Upper surface 430 also supports a conduit 442 arranged generally perpendicular to mounting adapter 422. Conduit 442 is sized and configured to route one or more electrical wires from the exterior of housing 428 to an interior of housing 428. Mounting adapter 422 includes a channel or relief 444 configured to receive at least one electrical wire from conduit 442. Top plate 424 also includes a coupler or fitting 446 configured to couple to a fluid conduit or tubing fluidly coupled to a coolant reservoir.

Referring now to FIGs. 62, 63, and 65, dynamic coolant delivery system 400 further includes a sleeve assembly 450 coupled to top plate 424. Sleeve assembly 450 is a ring-shaped cylinder that further defines central opening 410 of dynamic coolant delivery system 400. Sleeve assembly 450 comprises a bearing retainer 452, a lower mount 454, platform 456, and a light ring 458. Lower mount 454 is ring-shaped and is removably coupled to top plate 424 using at least one fastener 460. Lower mount 454 includes an upper shoulder 462 configured to support a lower ring 464. Lower ring 464 includes a top 466, a bottom 468, and a radially exterior bearing surface 470 positioned intermediate top 466 and bottom 468. Positioned adjacent top 466 of lower ring 464 is an upper bearing 472 that rests on upper shoulder 462 of lower mount 454. Bearing retainer 452 is coupled to top 466 of lower ring 464 to axially retain upper bearing 472 on upper shoulder 462. Positioned adjacent bottom 468 is a lower bearing 474 that rests against a lower flange 476 of lower mount 454. In the exemplary embodiment shown, lower ring 464 includes a lip 478 on which lower bearing 474 rests. Lip 478 also axially retains bearing 474 against lower flange 476. Bearings 472, 474 permits relative motion between lower ring 464 and lower mount 454. In another embodiment, either of bearings 472, 474 may be integrally formed with lower ring 464 to form a one-piece construction.

Lower ring 464 also includes a radially outwardly extending flange 480 opposite lip 478. A radially outer edge of flange 480 includes a plurality of engagement features 482, illustratively gear teeth. An upper surface 486 of flange 480 supports an upper ring 488, which is rotatable relative to flange 480. Upper ring 488 includes an axially extending portion 490 and a radially extending portion 492. A radially inner surface of radially extending portion 490 includes a helical shoulder or surface 496, which may ride against bearing surface 470 of lower ring 464. A radially outer edge of axially extending portion 490 includes a plurality of engagement features 502, illustratively gear teeth.

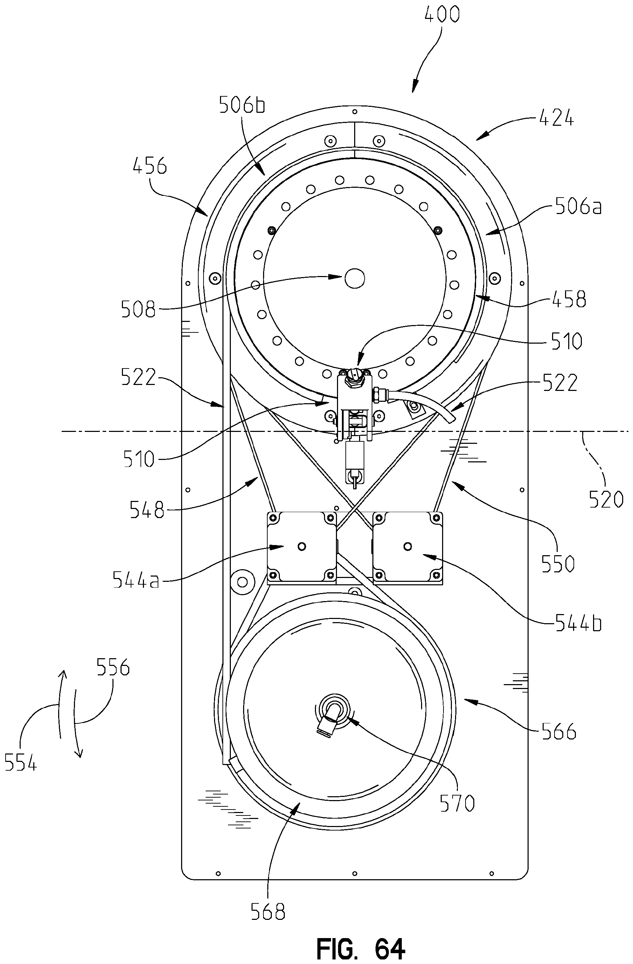

Referring now to FIGs. 63 and 64, platform 456 is fixedly coupled to bottom 468 of lower ring 464. In the exemplary embodiment shown, platform 456 is generally ring-shaped and comprises two semicircular arcs 506a, 506b. Because platform 456 is fixedly coupled to lower ring 464, platform 456 is capable of rotating with lower ring 464 about platform axis 508. In the exemplary embodiment shown, platform axis 508 is coaxial with axis 129 of spindle head 120 when dynamic coolant delivery system 400 is coupled to spindle head 120.

Referring back to FIGs. 62 and 63, dynamic coolant delivery system 400 includes a nozzle 510 pivotally supported by platform 456 by a clevis mount 513. Nozzle 510 includes a nozzle body 512, a nozzle tip 514, and an actuator shaft 516. A proximal portion of nozzle body 512 is pivotally mounted to clevis mount 513 using, for example, a pin or axle. Clevis mount 513 permits nozzle 510 to pivot about nozzle axis 520, as will be described in more detailed herein. Nozzle tip 514 is threadably received within an aperture of a distal portion of nozzle body 512 and includes at least one outlet orifice sized and shaped to disperse coolant in a predetermined pattern. Nozzle tip 514 is interchangeable with off-the-shelf nozzle tips having varying spray patterns, for example, a solid stream, a narrow dispersion hollow cone, a wide dispersion hollow cone, a full cone, a spiral full cone, or a flat fan. An advantage, among others, of an interchangeable nozzle tip 514 is that the stream of coolant delivered to the cutting tool or the workpiece may be customized for the specific manufacturing process for which CNC machine 100 is used. When coupled to nozzle body 512, nozzle tip 514 is in fluid communication with a coolant reservoir. In the exemplary embodiment shown, a coolant tube 522 is coupled a distal portion of nozzle body 512, which is in fluid communication with nozzle tip 514. In another embodiment, coolant may be routed to nozzle 510 internally through, for example, sleeve assembly 450.

Actuator shaft 516 includes a base 524 and a distal end 526 opposite base 524. Distal end 526 of actuator shaft 516 is coupled to an arcuately shaped linkage 528, which is fixedly coupled to nozzle body 512. Base 524 supports a bearing 530, which is sized and shaped to rest against helical surface 496 of upper ring 488. In the exemplary embodiment shown, a biasing member 532, illustratively a helical compression spring, is positioned between base 524 of actuator shaft 516 and lower surface 432 of top plate 424. Biasing member 532 applies a biasing force against base 524 of actuator shaft 516 to maintain engagement of bearing 530 against helical surface 496 of upper ring 488.

As a result of bearing 530 engaging surface 496, actuator shaft 516 is vertically displaceable in directions 534, 536 depending upon the position of bearing 530 on helical surface 496 of upper ring 488. More specifically, actuator shaft 516 is vertically displaced in direction 534 (e.g., upward) as bearing 530 trends in direction 534 toward the highest vertical position of helical surface 496. Similarly, actuator shaft 516 is vertically displaced in direction 536 (e.g., downward) as bearing 530 trends in direction 534 toward the lowest vertical position of helical surface 496. In the exemplary embodiment shown, axial displacement of actuator shaft 516 in directions 534, 536 is generally parallel to platform axis 508. When actuator shaft 516 is displaced in direction 534, nozzle 510 pivots about nozzle axis 520 in a direction 540. Similarly, displacement of actuator shaft 516 in direction 536 results in nozzle 510 pivoting above nozzle axis 520 in a direction 538.

Referring now to FIGs. 62, 64, and 65, dynamic coolant delivery system 400 further includes a motor mounting bracket 542 coupled to lower surface 432 of top plate 424. Motor mounting bracket 542 supports a plurality of motors 544, illustratively motors 544a, 544b, which are sized and configured to rotate a respective one of upper ring 488 and lower ring 464. Motors 544a, 544b are illustratively brushless DC electric motors, for example, stepper motors, contained within housing 428. Each of electrical motors 544a, 544b are illustratively in electrical communication with a power source and a controller.

Motors 544a, 544b are operatively coupled to a respective one of upper ring 488 and lower ring 464. More specifically, a belt 548 operatively couples motor 544a to lower ring 464, and a belt 550 operatively couples motor 544b to upper ring 488. Each of motors 544a, 544b includes a pulley 546 fixedly coupled to a motor shaft extending from a respective one of motors 544a, 544b. Thus, actuation of motors 544a, 544b results in the respective one of pulleys 546 rotating. Pulleys 546 include a plurality of engagement features 552, illustratively gear teeth, configured to engage a respective one of belts 548, 550. Similarly, engagement features 502 of upper ring 488 (see FIG. 63) and engagement features 482 of lower ring 464 (see FIG. 63) are configured to engage a respective one of belts 548, 550. Thus, motors 544a, 544b are drivingly coupled to a respective one of motors 544a, 544b. In the exemplary embodiment shown, belts 548, 550 comprise teethed timing belts. An advantage, among others, of teethed timing belts 548, 550 is that belts 548, 550 will not slip relative to pulleys 546. Instead, belts 548, 550 positively engage pulleys 546. It is contemplated, however, that belts 548, 550 could comprise a different type of belt.

The gear ratios therebetween and the size of motors 544a, 544b, pulleys 546, lower ring 464, and upper ring 488 may be adjusted depending upon, for example, the size of CNC machine 100 and the size of central opening 410 of dynamic coolant delivery system 400. For example, the size of lower ring 464 and upper ring 488 may be dependent upon at least one of the size of spindle head 120 and nozzle 510. The size of pulleys 546 may be selected to maximize the compactness of dynamic coolant delivery system 400 while providing adequate torque to rotate lower ring 464 and upper ring 488.

Referring now to FIG. 64, actuation of motor 544a in a direction 554 results in lower ring 464 rotating about platform axis 508 in direction 554. Similarly, actuation of motor 544b in an opposite direction 556 results in lower ring 464 rotating about platform axis 508 in direction 556. When lower ring 464 rotates about platform axis 508 in either of directions 554, 556, platform 456 and nozzle 510 rotate about platform axis 508 in the same direction. Thus, motor 544a controls a rotational position of platform 456 and nozzle 510 relative to platform axis 508.

In the exemplary embodiment shown, actuation of motor 544b in direction 554 results in upper ring 488 rotating about platform axis 508 in direction 554. Similarly, actuation of motor 544b in opposite direction 556 results in upper ring 488 rotating about platform axis 508 in direction 556. Rotation of upper ring 488 about platform axis 508 relative to lower ring 464 results in nozzle 510 pivoting about nozzle axis 520 in one of directions 538, 540 (see FIG. 62). Thus, motor 544b generally controls an angular position of nozzle 510 relative to nozzle axis 520. That said, relative motion between upper ring 488 and lower ring 464 also controls the angular position of nozzle 510 relative to nozzle axis 520. For example, if lower ring 464 rotates about platform axis 508 in one of directions 554, 556 while upper ring 488 remains stationary relative to platform axis 508 and lower ring 464, nozzle 510 will pivot about nozzle axis 520 in one of directions 538, 540. Conversely, if both upper ring 488 and lower ring 464 rotate about platform axis 508, the angular position of nozzle 510 relative to nozzle axis 520 will remain the same. Accordingly, dynamic coolant delivery system 400 may be used to dynamically deliver coolant to, for example, separate axial locations of a cutting tool supported by spindle head 120, along at least a portion of an axial length of the cutting tool, or from multiple angular positions or orientations of nozzle 510 relative to platform axis 508 and the cutting tool. This dynamic positioning of nozzle 510 and the delivery of coolant may be reactive to, for example, the position of the cutting tool relative to the workpiece, the type of cutting tool (e.g., face mill, end mill, etc.), or the manufacturing process (e.g., face milling, plunge milling).

Referring back to FIG. 62, dynamic coolant delivery system 400 includes a sensor assembly 558 configured to assist in controlling the rotation and position of lower ring 464 and upper ring 488. Sensor assembly 558 includes a sensor mount or frame 560 supporting a plurality of sensors 562, illustratively sensors 562a, 562b. Sensors 562 are configured to measure the rotation of lower ring 464 and upper ring 488 about platform axis 508. Specifically, sensors 562 measure a neutral or home position of lower ring 464 and upper ring 488. In the exemplary embodiment shown, sensors 562 are configured to detect the magnetic fields of a magnet supported within a respective one of lower ring 464 and upper ring 488. More specifically, sensor 562a is configured to detect the magnetic field of the magnet supported by upper ring 488. Similarly, sensor 562b is configured to detect the magnetic field of the magnet supported by lower ring 464. The position of magnets 564 in the respective ones of lower ring 464 and upper ring 488 adjacent sensor assembly 558 illustratively corresponds to an angular position of platform 456 and nozzle 510 about platform axis 508 that is a neutral or home position of platform 456 and nozzle 510 about platform axis 508. Accordingly, sensors 562 may be used to orient platform 456 and nozzle 510 to this home position. In the exemplary embodiment shown, sensors 562 are illustratively reed switches or Hall effect sensors. In another embodiment, sensors 562 may comprise electro-optical sensors, linear encoders, or position sensors that permit measurement of the displacement of lower ring 464 and upper ring 488 about platform axis 508.

In the exemplary embodiment shown, platform 456 and nozzle 510 are rotatable about platform axis 508 through an angular displacement range of approximately 0 to 270 degrees. To this end, the home position is not an end point of the range of angular displacement of platform 456 and nozzle 510. Rather, platform 456 and nozzle 510 may be rotatable about platform axis 508, for example, in direction 554 from the home position for an angular displacement range of approximately 0 to 90 degrees and in direction 556 from the home position for an angular displacement range of approximately 0 to 180 degrees. Thus, the total angular displacement range of platform 456 and nozzle 510 would be 0 to 270 degrees. It is contemplated, however, that platform 456 and nozzle 510 may be rotatable about platform axis 508 through a greater or smaller angular displacement range. It is also contemplated that platform 456 and nozzle 510 may be rotated in direction 554 for an angular displacement range greater or smaller than the range of 0 to 90 degrees. It is further contemplated that platform 456 and nozzle 510 may be rotated in direction 556 for an angular displacement ranger greater or smaller than the range of 0 to 180 degrees. In another embodiment, platform 456 and nozzle 510 are rotatable about platform axis 508 through an angular displacement range of at least 360 degrees. In addition, while a single nozzle 510 has been shown supported by platform 456, it is contemplated that a plurality of nozzles may be supported by platform for rotation about platform axis 508. In one embodiment, platform 456 supports at least two nozzles for rotation about platform axis 508.

Referring now to FIGs. 62, 64, and 65, dynamic coolant delivery system 400 also includes a drum 566 coupled to top plate 424. Drum 566 comprises a generally cylindrical body supported vertically below lower surface 432 of top plate 424. Drum 566 is configured to support coolant tube 522. In addition to nozzle 510, coolant tube 522 is fluidly coupled to fitting 446. In the exemplary embodiment shown, an outer surface 568 of drum 566 is adapted to permit coolant tube 522 to spool on and off of drum 566 as platform 456 and nozzle 510 rotate about platform axis 508. To this end, drum 566 is rotatable about a drum axis 570 that is spaced apart and parallel to platform axis 508. Moreover, drum 566 is drivingly coupled to a spool 572 supported on the motor shaft of motor 544a using a friction belt 574. Thus, actuation of motor 544b in one of directions 554, 556 results in drum 566 rotating about drum axis 570 in the same direction. Platform 456 includes a groove 576 (see FIG. 63) configured to support coolant tube 522 while allowing coolant tube 522 to spool onto or off of drum 566. In the exemplary embodiment shown, groove 576 circumscribes light ring 458. An advantage, among others, of drum 566 is that coolant tube 522 may be spooled onto or off of drum 566 depending on an angular position of nozzle 510 about platform axis 508.

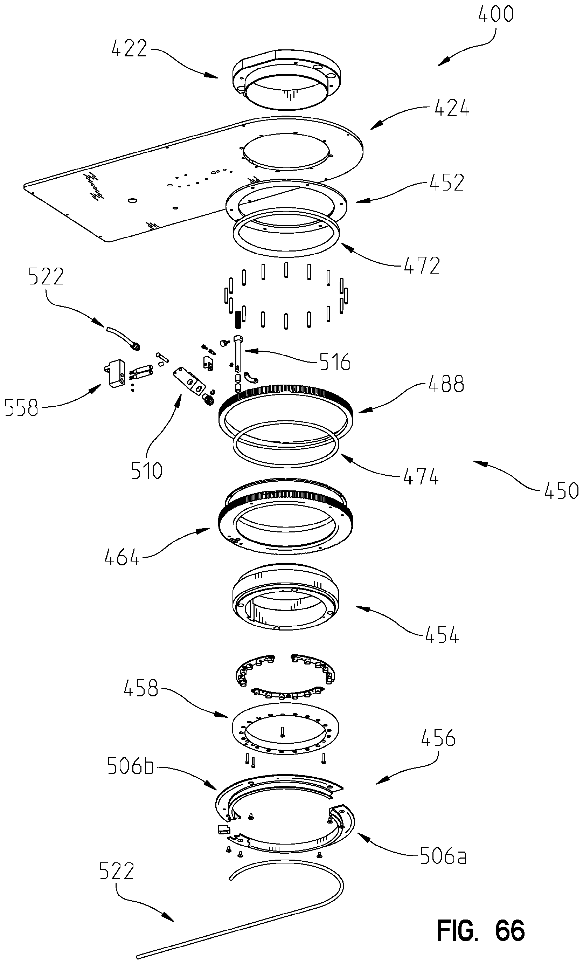

Referring now to FIGs. 63 and 66, light ring 458 is removably coupled to bottom 468 of lower mount 454. In some embodiments, light ring 458 is integrally formed with lower mount 454 to form a one-piece construction. Light ring 458 is a light source capable of illuminating at least one of the cutting tool or the workpiece. Illustratively, light ring 458 has a generally ring-shaped body of similar diameter to central opening 410. Light ring 458 includes a plurality of light sources, illustratively LEDs, that are electrically coupled to a PCB. The PCB may include a controller configured to control, for example, the brightness of the LEDs. In an alternative embodiment, the light source may comprise at least one spotlight having a plurality of LEDs coupled to housing 428. In a further embodiment, the light source is provided as an accessory to dynamic coolant delivery system 400. Accordingly, dynamic coolant delivery system 400 may include a removable trim piece where the light source couples to lower mount 454.

In the exemplary embodiments shown, the coolant comprises a pressurized, water-based solution, and the lubrication comprises a fluid having friction-reducing properties. In one embodiment, coolant may comprise a cutting fluid such as, for example, an emulsified type of coolant comprising a small quantity of oil and a large quantity of water. Illustratively, the oil may be either a petroleum, semi-synthetic, or synthetic type of oil. In an alternative embodiment, coolant may comprise a compressed air.

## Claims

1. A dynamic coolant delivery system (200, 400) for delivering coolant to a cutting tool (390) coupled to a spindle (120) of a computer numerical control ("CNC") machine (100), comprising:
a platform (270, 456) adapted to be coupled to the spindle (120) and rotatable about a first axis (271, 508);
a turret (290) supported by the platform (270, 456) and rotatable about a second axis (291); and
a nozzle (310, 510) supported by the turret (290) and pivotable about a third axis (311, 520), the nozzle (310, 510) being in fluid communication with a coolant reservoir (302) and adapted to deliver coolant from the coolant reservoir (302) to the cutting tool (390).

2. The dynamic coolant delivery system of claim 1,
(i) further comprising a housing (220, 428) adapted to be coupled to the spindle (120) of the CNC machine, the housing (220, 428) supporting the platform (270, 456); optionally
wherein the housing (220, 428) is adapted to be removably coupled to the spindle (120) of the CNC machine; or
(ii) wherein the third axis (311, 520) is non-parallel to the first axis (271, 508); optionally
wherein the third axis (311, 520) is orthogonal to the first axis (271, 508).

3. The dynamic coolant delivery system of claim 1, further comprising:
a first ring (224) supported within the housing (220, 428) and rotatable about the first axis (271, 508), the first ring (224) being operatively coupled to the nozzle (310, 510) such that rotation of the first ring (224) about the first axis (271, 508) is capable of pivoting the nozzle (310, 510) about the third axis (311, 520); and
a second ring (230) supported within the housing (220, 428) and rotatable about the first axis (271, 508), the second ring (230) operatively coupled to the platform (270, 456) such that rotation of the second ring (230) about the first axis (271, 508) results in rotation of the platform (270, 456) about the first axis (271, 508);
optionally wherein
(i) the second ring (230) is arranged adjacent the platform (270, 456) and the first ring (224) is axially spaced apart from the second ring (230) along the first axis (271, 508); or
(ii) the first ring (224) includes a radial flange (225) and an axial flange (227) generally orthogonal to the radial flange (225), the axial flange (227) including a plurality of engagement features and a helical surface extending along an inner surface of the axial flange (227); wherein optionally
the first ring (224) is operatively coupled to the nozzle (310, 510) through an actuator shaft (516), the actuator shaft (516) having a base (524) supported on the helical surface of the first ring (224), and rotation of the first ring (224) relative to the base of the actuator shaft (516) results in a displacement of the actuator shaft (516) along a fourth axis (570) parallel to the first axis (271, 508), the displacement of the actuator shaft (516) resulting in the pivoting of the nozzle about the third axis (311, 520); or
(iii) each of the first ring (224) and the second ring (230) is configured to be capable of rotating about the first axis (271, 508) at different rotational speeds relative to one another; or
(iv) relative motion between the first ring (224) and the second ring (230) results in the nozzle (310, 510) pivoting about the third axis (311, 520); or
(v) rotation of the first ring (224) and the second ring (230) with zero relative motion results in the platform (270, 456) and the nozzle (310, 510) rotating about the first axis (271, 508); or
(vi) each of the first ring (224) and the second ring (230) include a plurality of engagement features (482); wherein optionally
the plurality of engagement features (482) comprises gear teeth.

4. The dynamic coolant delivery system of claim 1, further comprising:
a first electric motor (544a) operatively coupled to the platform (270, 456); and
a second electric motor (544b) operatively coupled to the nozzle (310, 510); optionally
further comprising a motor mounting bracket (542) coupled to the housing (220, 428), the motor mounting bracket (542) supporting the first electric motor (544a) and the second electric motor (544b) within the housing (220, 428);
wherein optionally the first electric motor (544a) is operatively coupled to the platform (270, 456) using a first belt (548), and the second electric motor (544b) is operatively coupled to the nozzle using a second belt (550); wherein optionally
the first electric motor (544a) includes a first pulley (546) operatively coupled to the first belt (548), and the second electric motor (544b) includes a second pulley (546) operatively coupled to the second belt (550).

5. The dynamic coolant delivery system of claim 1, further includes a light source (356) adapted to be coupled to the spindle (120), the light source (356) being capable of illuminating at least one of the cutting tool (390) or a workpiece removably supported in a workspace of the CNC machine (100); optionally
wherein the light source (356) includes a plurality of light emitting diodes ("LEDs").

6. The dynamic coolant delivery system of claim 1, further comprising a light ring (350) adapted to be coupled to the spindle (120), the light ring (350) being capable of illuminating at least one of the cutting tool (390) or a workpiece removably supported in a workspace of the CNC machine (100), the light ring (350) surrounding a portion of the cutting tool (390); optionally wherein
(i) the light ring (350) is arranged coaxially with the first axis (271, 508); or
(ii) the light ring (350) includes a plurality of light sources (356); wherein optionally
each of the plurality of light sources (356) comprises a light emitting diode ("LED").

7. The dynamic coolant delivery system of claim 1, further comprising a drum (566) supporting a coolant tube (522) coupled to the nozzle (310, 510).

8. The dynamic coolant delivery system of claim 7, wherein the drum (566) is configured to rotate about a fourth axis (570), the fourth axis spaced apart from and parallel to the first axis (271, 508).

9. A method of dynamically delivering coolant to a cutting tool (390) coupled to a spindle (120) of a computer numerical control ("CNC") machine (100) for rotation about a first axis (271, 508), comprising:
providing a coolant delivery nozzle (310, 510) fluidly coupled to a coolant reservoir (302), the coolant delivery nozzle (310, 510) supported by a turret (290) adapted to rotate about a second axis (291), the coolant delivery nozzle (310, 510) adapted to pivot about a third axis (311, 520) non-parallel to the first axis (271, 508), and the turret (290) supported by a platform (270, 456) coupled to the spindle (120), the platform (270, 456) adapted to rotate about the first axis (271, 508);
delivering coolant to a first axial location of the cutting tool (390) from a first orientation (201) of the coolant delivery nozzle (310, 510) relative to the cutting tool (390), the first orientation (201) defined by an angular position of the coolant delivery nozzle (310, 510) relative to the first axis (271, 508); and
rotating the coolant delivery nozzle (310, 510) about the first axis (271, 508) such that the coolant delivery nozzle (310, 510) delivers coolant to the first axial location of the cutting tool (390) from a second orientation (202) of the coolant delivery nozzle (310, 510) relative to the cutting tool (390), the second orientation (202) being angularly displaced from the first orientation (201).

10. The method of claim 9, further comprising providing the cutting tool (390) supported for rotation by the spindle (120).

11. The method of claim 9, further comprising cyclically rotating the coolant nozzle (310, 510) in a first rotational direction and a second rotational direction about the first axis (271, 508), between the first orientation (201) and the second orientation (202) to provide a sweeping delivery of coolant to the cutting tool (390).

12. The method of claim 9, further comprising pivoting the coolant delivery nozzle (310, 510) about the third axis (311, 520) such that the coolant delivery nozzle (310, 510) delivers coolant to a second axial location of the cutting tool (390), the second axial location of the cutting tool (390) being spaced axially apart from the first axial location along the first axis (271, 508).

13. The method of claim 12, further comprising cyclically pivoting the coolant delivery nozzle (310, 510) in a first rotational direction and a second rotational direction about the third axis (311, 520) such that coolant is delivered along at least a portion of an axial length of the cutting tool (390).

14. The method of claim 9, wherein rotating the coolant delivery nozzle (310, 510) occurs in response to a control signal from the CNC machine (100).

15. The method of claim 9, further comprising providing a workpiece (109) removably supported in a workspace (108) of the CNC machine (100), at least one of the workpiece or the cutting tool (390) being moveable relative to the other of the workpiece (109) or the cutting tool (390), and wherein rotating the coolant delivery nozzle (310, 510) occurs in response to a current motion vector of the cutting tool (390) relative to the workpiece (109).

## Patentansprüche

1. Dynamisches Kühlmittelzuführungssystem (200, 400) zum Zuführen von Kühlmittel zu einem mit einer Spindel (120) einer computergesteuerten ("CNC") Maschine (100) gekoppelten Schneidwerkzeug (390), das Folgendes umfasst:
eine Plattform (270, 456), die zum Koppeln mit der Spindel (120) ausgelegt und um eine erste Achse (271, 508) drehbar ist;
einen Revolverkopf (290), der auf der Plattform (270, 456) gelagert und um eine zweite Achse (291) drehbar ist; und
eine Düse (310, 510), die auf dem Revolverkopf (290) gelagert und um eine dritte Achse (311, 520) schwenkbar ist,
wobei die Düse (310, 510) in Fluidverbindung mit einem Kühlmittelbehälter (302) steht und zum Zuführen von Kühlmittel aus dem Kühlmittelbehälter (302) zum Schneidwerkzeug (390) ausgelegt ist.

2. Dynamisches Kühlmittelzuführungssystem nach Anspruch 1,
(i) das ferner ein Gehäuse (220, 428) umfasst, das zum Koppeln mit der Spindel (120) der CNC-Maschine ausgelegt ist, wobei das Gehäuse (220, 428) die Plattform (270, 456) lagert; wobei optional
das Gehäuse (220, 428) zum abnehmbaren Koppeln mit der Spindel (120) der CNC-Maschine ausgelegt ist; oder
(ii) wobei die dritte Achse (311, 520) nichtparallel zur ersten Achse (271, 508) ist; wobei optional
die dritte Achse (311, 520) orthogonal zur ersten Achse (271, 508) ist.

3. Dynamisches Kühlmittelzuführungssystem nach Anspruch 1, das ferner Folgendes umfasst:
einen ersten Ring (224), der innerhalb des Gehäuses (220, 428) gelagert und um die erste Achse (271, 508) drehbar ist, wobei der erste Ring (224) funktionsfähig mit der Düse (310, 510) gekoppelt ist, sodass eine Drehung des ersten Rings (224) um die erste Achse (271, 508) die Düse (310, 510) um die dritte Achse (311, 520) schwenken kann; und
einen zweiten Ring (230), der innerhalb des Gehäuses (220, 428) gelagert und um die erste Achse (271, 508) drehbar ist, wobei der zweite Ring (230) funktionsfähig mit der Plattform (270, 456) gekoppelt ist, sodass eine Drehung des zweiten Rings (230) um die erste Achse (271, 508) zu einer Drehung der Plattform (270, 456) um die erste Achse (271, 508) führt; wobei
optional
(i) der zweite Ring (230) angrenzend zu der Plattform (270, 456) angeordnet ist und der erste Ring (224) vom zweiten Ring (230) entlang der ersten Achse (271, 508) axial beabstandet ist; oder
(ii) der erste Ring (224) einen radialen Flansch (225) und einen axialen Flansch (227) allgemein orthogonal zum radialen Flansch (225) einschließt, wobei der axiale Flansch (227) eine Vielzahl von Eingriffsmerkmalen und eine schraubenförmige Oberfläche einschließt, die sich entlang einer inneren Oberfläche des axialen Flanschs (227) erstreckt; wobei optional
der erste Ring (224) funktionsfähig mit der Düse (310, 510) über eine Aktuatorwelle (516) gekoppelt ist, wobei die Aktuatorwelle (516) eine Basis (524) aufweist, die auf der schraubenförmigen Oberfläche des ersten Rings (224) gelagert ist, und eine Drehung des ersten Rings (224) relativ zur Basis der Aktuatorwelle (516) zu einer Verschiebung der Aktuatorwelle (516) entlang einer vierten Achse (570) parallel zur ersten Achse (271, 508) führt, wobei die Verschiebung der Aktuatorwelle (516) zu dem Schwenken der Düse um die dritte Achse (311, 520) führt; oder
(iii) sowohl der erste Ring (224) als auch der zweite Ring (230) so konfiguriert sind, dass sie sich mit unterschiedlichen Drehgeschwindigkeiten relativ zueinander um die erste Achse (271, 508) drehen können; oder
(iv) eine relative Bewegung zwischen dem ersten Ring (224) und dem zweiten Ring (230) dazu führt, dass die Düse (310, 510) um die dritte Achse (311, 520) schwenkt; oder
(v) eine Drehung des ersten Rings (224) und des zweiten Rings (230) mit einer relativen Bewegung von Null dazu führt, dass sich die Plattform (270, 456) und die Düse (310, 510) um die erste Achse (271, 508) drehen; oder
(vi) sowohl der erste Ring (224) als auch der zweite Ring (230) eine Vielzahl von Eingriffsmerkmalen (482) einschließen; wobei optional
die Vielzahl von Eingriffsmerkmalen (482) Verzahnungen umfasst.

4. Dynamisches Kühlmittelzuführungssystem nach Anspruch 1, das ferner Folgendes umfasst:
einen ersten Elektromotor (544a), der funktionsfähig mit der Plattform (270, 456) gekoppelt ist; und
einen zweiten Elektromotor (544b), der funktionsfähig mit der Düse (310, 510) gekoppelt ist; das ferner optional
eine Motormontagehalterung (542) umfasst, die mit dem Gehäuse (220, 428) gekoppelt ist, wobei die Motormontagehalterung (542) den ersten Elektromotor (544a) und den zweiten Elektromotor (544b) innerhalb des Gehäuses (220, 428) lagert; wobei optional
der erste Elektromotor (544a) mittels eines ersten Riemens (548) funktionsfähig mit der Plattform (270, 456) gekoppelt ist und der zweite Elektromotor (544b) mittels eines zweiten Riemens (550) funktionsfähig mit der Düse gekoppelt ist; wobei optional
der erste Elektromotor (544a) eine erste Riemenscheibe (546) einschließt, die funktionsfähig mit dem ersten Riemen (548) gekoppelt ist, und der zweite Elektromotor (544b) eine zweite Riemenscheibe (546) einschließt, die funktionsfähig mit dem zweiten Riemen (550) gekoppelt ist.

5. Dynamisches Kühlmittelzuführungssystem nach Anspruch 1, das ferner eine Lichtquelle (356) einschließt, die zum Koppeln mit der Spindel (120) ausgelegt ist, wobei die Lichtquelle (356) mindestens eines von dem Schneidwerkzeug (390) oder einem in einem Arbeitsraum der CNC-Maschine (100) abnehmbar gelagerten Werkstück beleuchten kann; wobei optional
die Lichtquelle (356) eine Vielzahl von Leuchtdioden ("LEDs") einschließt.

6. Dynamisches Kühlmittelzuführungssystem nach Anspruch 1, das ferner einen Lichtring (350) umfasst, der zum Koppeln mit der Spindel (120) ausgelegt ist, wobei der Lichtring (350) mindestens eines von dem Schneidwerkzeug (390) oder einem in einem Arbeitsraum der CNC-Maschine (100) abnehmbar gelagerten Werkstück beleuchten kann, wobei der Lichtring (350) einen Teil des Schneidwerkzeugs (390) umgibt;
wobei optional
(i) der Lichtring (350) koaxial mit der ersten Achse (271, 508) angeordnet ist; oder
(ii) der Lichtring (350) eine Vielzahl von Lichtquellen (356) einschließt; wobei optional
jede der Vielzahl von Lichtquellen (356) eine Leuchtdiode ("LED") umfasst.

7. Dynamisches Kühlmittelzuführungssystem nach Anspruch 1, das ferner eine Trommel (566) umfasst, die ein mit der Düse (310, 510) gekoppeltes Kühlmittelrohr (522) lagert.

8. Dynamisches Kühlmittelzuführungssystem nach Anspruch 7, wobei die Trommel (566) zum Drehen um eine vierte Achse (570) konfiguriert ist, wobei die vierte Achse von der ersten Achse (271, 508) beabstandet und parallel dazu ist.

9. Verfahren zum dynamischen Zuführen von Kühlmittel zu einem Schneidwerkzeug (390), das mit einer Spindel (120) einer computergesteuerten ("CNC") Maschine (100) zu einer Drehung um eine erste Achse (271, 508) gekoppelt ist, das Folgendes umfasst:
Bereitstellen einer mit einem Kühlmittelbehälter (302) fluidisch gekoppelten Kühlmittelzuführungsdüse (310, 510), wobei die Kühlmittelzuführungsdüse (310, 510) auf einem Revolverkopf (290) gelagert ist, der zum Drehen um eine zweite Achse (291) ausgelegt ist, wobei die Kühlmittelzuführungsdüse (310, 510) zum Schwenken um eine dritte Achse (311, 520) nichtparallel zur ersten Achse (271, 508) ausgelegt ist, und der Revolverkopf (290) auf einer mit der Spindel (120) gekoppelten Plattform (270, 456) gelagert ist, wobei die Plattform (270, 456) zum Drehen um die erste Achse (271, 508) ausgelegt ist;
Zuführen von Kühlmittel zu einer ersten axialen Stelle des Schneidwerkzeugs (390) von einer ersten Orientierung (201) der Kühlmittelzuführungsdüse (310, 510) relativ zum Schneidwerkzeug (390), wobei die erste Orientierung (201) durch eine Winkelposition der Kühlmittelzuführungsdüse (310, 510) relativ zur ersten Achse (271, 508) definiert ist; und
Drehen der Kühlmittelzuführungsdüse (310, 510) um die erste Achse (271, 508), sodass die Kühlmittelzuführungsdüse (310, 510) der ersten axialen Stelle des Schneidwerkzeugs (390) von einer zweiten Orientierung (202) der Kühlmittelzuführungsdüse (310, 510) relativ zum Schneidwerkzeug (390) Kühlmittel zuführt, wobei die zweite Orientierung (202) gegenüber der ersten Orientierung (201) in einem Winkel verschoben ist.

10. Verfahren nach Anspruch 9, das ferner das Bereitstellen des von der Spindel (120) zu einer Drehung gelagerten Schneidwerkzeugs (390) umfasst.

11. Verfahren nach Anspruch 9, das ferner ein zyklisches Drehen der Kühlmitteldüse (310, 510) in einer ersten Drehrichtung und einer zweiten Drehrichtung um die erste Achse (271, 508) zwischen der ersten Orientierung (201) und der zweiten Orientierung (202) umfasst, um eine überstreichende Zuführung von Kühlmittel zum Schneidwerkzeug (390) bereitzustellen.

12. Verfahren nach Anspruch 9, das ferner das Schwenken der Kühlmittelzuführungsdüse (310, 510) um die dritte Achse (311, 520) umfasst, sodass die Kühlmittelzuführungsdüse (310, 510) einer zweiten axialen Stelle des Schneidwerkzeugs (390) Kühlmittel zuführt, wobei die zweite axiale Stelle des Schneidwerkzeugs (390) von der ersten axialen Stelle entlang der ersten Achse (271, 508) axial beabstandet ist.

13. Verfahren nach Anspruch 12, das ferner das zyklische Schwenken der Kühlmittelzuführungsdüse (310, 510) in einer ersten Drehrichtung und einer zweiten Drehrichtung um die dritte Achse (311, 520) umfasst, sodass Kühlmittel entlang mindestens eines Teils einer axialen Länge des Schneidwerkzeugs (390) zugeführt wird.

14. Verfahren nach Anspruch 9, wobei ein Drehen der Kühlmittelzuführungsdüse (310, 510) als Reaktion auf ein Steuersignal von der CNC-Maschine (100) erfolgt.

15. Verfahren nach Anspruch 9, das ferner das Bereitstellen eines abnehmbar in einem Arbeitsraum (108) der CNC-Maschine (100) gelagerten Werkstücks (109) umfasst, wobei mindestens eines von dem Werkstück oder dem Schneidwerkzeug (390) relativ zu dem anderen von dem Werkstück (109) oder dem Schneidwerkzeug (390) beweglich ist, und wobei ein Drehen der Kühlmittelzuführungsdüse (310, 510) als Reaktion auf einen aktuellen Bewegungsvektor des Schneidwerkzeugs (390) relativ zum Werkstück (109) erfolgt.

## Revendications

1. Système de distribution dynamique de liquide de refroidissement (200, 400) pour distribuer du liquide de refroidissement à un outil de coupe (390) couplé à une broche (120) d'une machine à commande numérique par ordinateur (« CNC ») (100), comprenant :
une plate-forme (270, 456) adaptée pour être couplée à la broche (120) et pouvant tourner autour d'un premier axe (271, 508) ;
une tourelle (290) soutenue par la plate-forme (270, 456) et pouvant tourner autour d'un deuxième axe (291) ; et
une buse (310, 510) soutenue par la tourelle (290) et pouvant pivoter autour d'un troisième axe (311, 520),
la buse (310, 510) étant en communication fluidique avec un réservoir de liquide de refroidissement (302) et adaptée pour distribuer du liquide de refroidissement du réservoir de liquide de refroidissement (302) à l'outil de coupe (390).

2. Système de distribution dynamique de liquide de refroidissement selon la revendication 1,
(i) comprenant en outre un boîtier (220, 428) adapté pour être couplé à la broche (120) de la machine CNC, le boîtier (220, 428) soutenant la plate-forme (270, 456) ; facultativement
dans lequel le boîtier (220, 428) est adapté pour être couplé de manière amovible à la broche (120) de la machine CNC ; ou
(ii) dans lequel le troisième axe (311, 520) n'est pas parallèle au premier axe (271, 508); facultativement
dans lequel le troisième axe (311, 520) est orthogonal au premier axe (271, 508).

3. Système de distribution dynamique de liquide de refroidissement selon la revendication 1, comprenant en outre :
un premier anneau (224) soutenu à l'intérieur du boîtier (220, 428) et pouvant tourner autour du premier axe (271, 508), le premier anneau (224) étant couplé de manière opérationnelle à la buse (310, 510) de sorte qu'une rotation du premier anneau (224) autour du premier axe (271, 508) est capable de faire pivoter la buse (310, 510) autour du troisième axe (311, 520) ; et
un deuxième anneau (230) soutenu à l'intérieur du boîtier (220, 428) et pouvant tourner autour du premier axe (271, 508), le deuxième anneau (230) étant couplé de manière opérationnelle à la plate-forme (270, 456) de sorte qu'une rotation du deuxième anneau (230) autour du premier axe (271, 508) entraîne une rotation de la plate-forme (270, 456) autour du premier axe (271, 508) ; facultativement
dans lequel :
(i) le deuxième anneau (230) est arrangé de façon adjacente à la plate-forme (270, 456) et le premier anneau (224) est espacé axialement du deuxième anneau (230) le long du premier axe (271, 508) ; ou
(ii) le premier anneau (224) inclut un flasque radial (225) et un flasque axial (227) généralement orthogonale au flasque radial (225), le flasque axial (227) incluant une pluralité de caractéristiques d'engagement et une surface hélicoïdale s'étendant le long d'une surface intérieure du flasque axial (227) ; dans lequel
facultativement, le premier anneau (224) est couplé de manière opérationnelle à la buse (310, 510) par l'intermédiaire d'un arbre d'actionneur (516), l'arbre d'actionneur (516) ayant une base (524) soutenue sur la surface hélicoïdale du premier anneau (224), et une rotation du premier anneau (224) par rapport à la base de l'arbre d'actionneur (516) entraîne un déplacement de l'arbre d'actionneur (516) le long d'un quatrième axe (570) parallèle au premier axe (271, 508), le déplacement de l'arbre d'actionneur (516) entraînant le pivotement de la buse autour du troisième axe (311, 520) ; ou
(iii) chacun du premier anneau (224) et du deuxième anneau (230) est configuré pour être capable de tourner autour du premier axe (271, 508) à des vitesses de rotation différentes l'une par rapport à l'autre ; ou
(iv) un mouvement relatif entre le premier anneau (224) et le deuxième anneau (230) entraîne le pivotement de la buse (310, 510) autour du troisième axe (311, 520) ; ou
(v) une rotation du premier anneau (224) et du deuxième anneau (230) avec un mouvement relatif nul entraîne la rotation de la plate-forme (270, 456) et de la buse (310, 510) autour du premier axe (271, 508) ; ou
(vi) chacun du premier anneau (224) et du deuxième anneau (230) inclut une pluralité de caractéristiques d'engagement (482) ; dans lequel, facultativement
la pluralité de caractéristiques d'engagement (482) comprennent des dents d'engrenage.

4. Système de distribution dynamique de liquide de refroidissement selon la revendication 1, comprenant en outre :
un premier moteur électrique (544a) couplé de manière opérationnelle à la plate-forme (270, 456) ; et
un deuxième moteur électrique (544b) couplé de manière opérationnelle à la buse (310, 510) ; facultativement
comprenant en outre un support de montage de moteur (542) couplé au boîtier (220, 428), le support de montage de moteur (542) soutenant le premier moteur électrique (544a) et le deuxième moteur électrique (544b) à l'intérieur du boîtier (220, 428) ; dans lequel, facultativement
le premier moteur électrique (544a) est couplé de manière opérationnelle à la plate-forme (270, 456) à l'aide d'une première courroie (548), et le deuxième moteur électrique (544b) est couplé de manière opérationnelle à la buse à l'aide d'une deuxième courroie (550) ; dans lequel, facultativement
le premier moteur électrique (544a) inclut une première poulie (546) couplée de manière opérationnelle à la première courroie (548), et le deuxième moteur électrique (544b) inclut une deuxième poulie (546) couplée de manière opérationnelle à la deuxième courroie (550).

5. Système de distribution dynamique de liquide de refroidissement selon la revendication 1, incluant en outre une source de lumière (356) adaptée pour être couplée à la broche (120), la source de lumière (356) étant capable d'éclairer au moins l'un de l'outil de coupe (390) ou d'une pièce à usiner soutenue de manière amovible dans un espace de travail de la machine CNC (100) ; facultativement
dans lequel la source de lumière (356) inclut une pluralité de diodes électroluminescentes (« LED »).

6. Système de distribution dynamique de liquide de refroidissement selon la revendication 1, comprenant en outre un anneau lumineux (350) adapté pour être couplé à la broche (120), l'anneau lumineux (350) étant capable d'éclairer au moins l'un de l'outil de coupe (390) ou d'une pièce à usiner soutenue de manière amovible dans un espace de travail de la machine CNC (100), l'anneau lumineux (350) entourant une partie de l'outil de coupe (390) ;
facultativement dans lequel
(i) l'anneau lumineux (350) est arrangé coaxialement au premier axe (271, 508) ; ou
(ii) l'anneau lumineux (350) inclut une pluralité de sources de lumière (356) ; dans lequel, facultativement
chacune de la pluralité de sources de lumière (356) comprend une diode électroluminescente (« LED »).

7. Système de distribution dynamique de liquide de refroidissement selon la revendication 1, comprenant en outre un tambour (566) soutenant un tube de liquide de refroidissement (522) couplé à la buse (310, 510).

8. Système de distribution dynamique de liquide de refroidissement selon la revendication 7, dans lequel le tambour (566) est configuré pour tourner autour d'un quatrième axe (570), le quatrième axe étant espacé du premier axe (271, 508) et parallèle à celui-ci.

9. Procédé pour distribuer dynamiquement un liquide de refroidissement à un outil de coupe (390) couplé à une broche (120) d'une machine à commande numérique par ordinateur (« CNC ») (100) pour une rotation autour d'un premier axe (271, 508), comprenant :
la fourniture d'une buse (310, 510) de distribution de liquide de refroidissement couplée de manière fluide à un réservoir de liquide de refroidissement (302), la buse (310, 510) de distribution de liquide de refroidissement soutenue par une tourelle (290) adaptée pour tourner autour d'un deuxième axe (291), la buse (310, 510) de distribution de liquide de refroidissement adaptée pour pivoter autour d'un troisième axe (311, 520) non parallèle au premier axe (271, 508), et la tourelle (290) soutenue par une plate-forme (270, 456) couplée à la broche (120), la plate-forme (270, 456) adaptée pour tourner autour du premier axe (271, 508) ;
la distribution d'un liquide de refroidissement à un premier emplacement axial de l'outil de coupe (390) à partir d'une première orientation (201) de la buse (310, 510) de distribution de liquide de refroidissement par rapport à l'outil de coupe (390), la première orientation (201) étant définie par une position angulaire de la buse (310, 510) de distribution de liquide de refroidissement par rapport au premier axe (271, 508) ; et
la rotation de la buse (310, 510) de distribution de liquide de refroidissement autour du premier axe (271, 508) de sorte que la buse (310, 510) de distribution de liquide de refroidissement distribue du liquide de refroidissement au premier emplacement axial de l'outil de coupe (390) à partir d'une deuxième orientation (202) de la buse (310, 510) de distribution de liquide de refroidissement par rapport à l'outil de coupe (390), la deuxième orientation (202) étant décalée angulairement par rapport à la première orientation (201).

10. Procédé selon la revendication 9, comprenant en outre la fourniture de l'outil de coupe (390) soutenu pour une rotation par la broche (120).

11. Procédé selon la revendication 9, comprenant en outre une rotation cyclique de la buse (310, 510) de refroidissement dans un premier sens de rotation et un deuxième sens de rotation autour du premier axe (271, 508), entre la première orientation (201) et la deuxième orientation (202) pour fournir une distribution par balayage de liquide de refroidissement à l'outil de coupe (390).

12. Procédé selon la revendication 9, comprenant en outre le pivotement de la buse (310, 510) de distribution de liquide de refroidissement autour du troisième axe (311, 520) de sorte que la buse (310, 510) de distribution de liquide de refroidissement distribue du liquide de refroidissement à un deuxième emplacement axial de l'outil de coupe (390), le deuxième emplacement axial de l'outil de coupe (390) étant espacé axialement du premier emplacement axial le long du premier axe (271, 508).

13. Procédé selon la revendication 12, comprenant en outre le pivotement cyclique de la buse (310, 510) de distribution de liquide de refroidissement dans un premier sens de rotation et un deuxième sens de rotation autour du troisième axe (311, 520) de sorte qu'un liquide de refroidissement soit distribué le long d'au moins une partie d'une longueur axiale de l'outil de coupe (390).

14. Procédé selon la revendication 9, dans lequel une rotation de la buse (310, 510) de distribution de liquide de refroidissement se produit en réponse à un signal de commande provenant de la machine CNC (100).

15. Procédé selon la revendication 9, comprenant en outre la fourniture d'une pièce à usiner (109) soutenue de manière amovible dans un espace de travail (108) de la machine CNC (100), au moins l'un de la pièce à usiner ou de l'outil de coupe (390) étant mobile par rapport à l'autre de la pièce à usiner (109) ou de l'outil de coupe (390), et dans lequel une rotation de la buse (310, 510) de distribution de liquide de refroidissement se produit en réponse à un vecteur de mouvement actuel de l'outil de coupe (390) par rapport à la pièce à usiner (109).
